# EUROPEAN PATENT APPLICATION

(11) **EP 4 592 963 A1**
(43) Date of publication of application: **30.07.2025**
(21) Application number: 23868052.4
(22) Date of filing: 07.09.2023
(51) Int. Cl.: G06T 17/00, G06T 7/55

(54) **IMAGE PROCESSING DEVICE, IMAGE PROCESSING METHOD, AND PROGRAM**

(30) Priority: 22.09.2022 JP 2022151910
(71) Applicant: Sony Semiconductor Solutions Corporation, Atsugi-shi, Kanagawa 243-0014 (JP)
(72) Inventor: AGRESTI, Gianluca, 70327 Stuttgart (DE); ROSSI, Mattia, 8952 Schlieren (CH); RAD, Saeed, 8952 Schlieren (CH); FUJII, Yusuke, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/032626
(87) International publication number: WO 2024/062929

(57) **Abstract**

The present disclosure relates to an image processing device, an image processing method, and a program capable of easily generating a three-dimensional model including spectral information.

A three-dimensional model is generated on the basis of an RGB image group, spectral information of a spectral image group is mapped, and a spectral three-dimensional model in which the spectral information has been mapped onto the three-dimensional model is generated. The present disclosure can be applied in techniques for generating a spectral three-dimensional image in which spectral information is superimposed on a three-dimensional model.

## Description

### [Technical Field]

The present disclosure relates to an image processing device, an image processing method, and a program, and particularly relates to an image processing device, an image processing method, and a program capable of easily generating a three-dimensional model including spectral information.

### [Background Art]

A technique has been proposed in which a three-dimensional image including spectral information is generated by generating a three-dimensional model from an RGB image group obtained by capturing images from a plurality of angles by using a two-dimensional RGB camera, and then superimposing spectral information captured by a spectral camera onto the three-dimensional model (see PTL 1).

### [Citation List]

### [Patent Literature]

[PTL 1]
WO 2011/054040

### [Summary]

### [Technical Problem]

However, in the technique described in PTL 1, only one spectral image is captured by the spectral camera, hence spectral information can only be superimposed on a three-dimensional model from the specific viewpoint from which the spectral image was captured. Accordingly, a three-dimensional image including spectral information from a desired viewpoint cannot be generated.

In addition, in the technique described in PTL 1, a three-dimensional model including the spectral information required for generating a three-dimensional image including spectral information from a desired viewpoint cannot be generated, and this makes it impossible to use an application program which requires a three-dimensional model including spectral information.

Having been achieved in light of such circumstances, the present disclosure makes it possible to easily generate a three-dimensional model including spectral information in particular.

### [Solution to Problem]

An image processing device and a program according to a first aspect of the present disclosure are an image processing device, and a program, including a spectral three-dimensional model generating unit that generates a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model.

An image processing method according to the first aspect of the present disclosure is an image processing method including a step of generating a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model.

In the first aspect of the present disclosure, a spectral three-dimensional model is generated in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model.

An image processing device according to a second aspect of the present disclosure is an image processing device including: a spectral three-dimensional model generating unit that generates a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model; and a subject-of-interest spectral information extracting unit that extracts the spectral information of a subject of interest from among the spectral information.

According to the second aspect of the present disclosure, a spectral three-dimensional model is generated in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model; and the spectral information of the subject of interest is extracted from among the spectral information.

### [Brief Description of Drawings]

[Fig. 1]

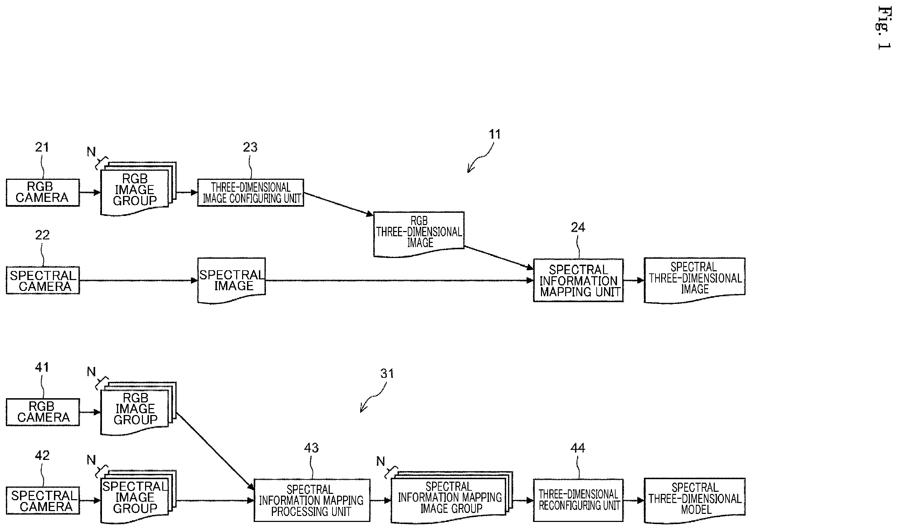

   Fig. 1 is a diagram illustrating an overview of a first embodiment of the present disclosure.
[Fig. 2]

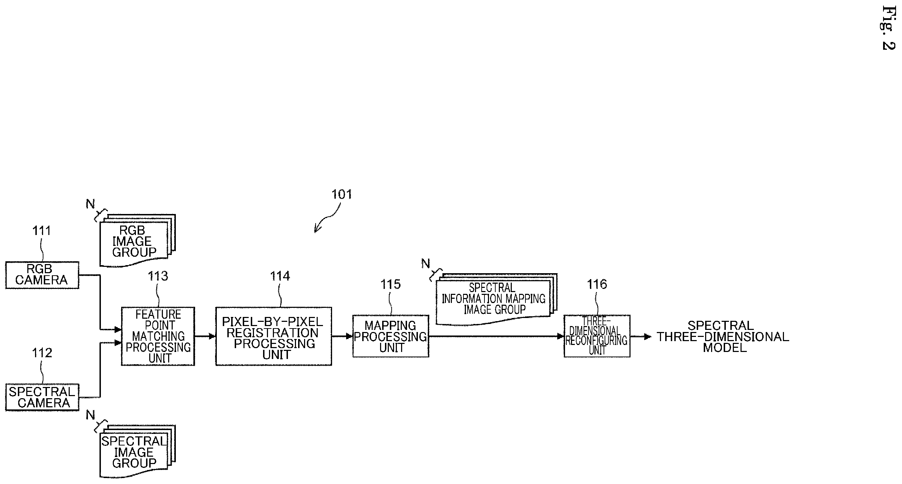

   Fig. 2 is a diagram illustrating a first configuration example of a first embodiment of an image processing device of the present disclosure.
[Fig. 3]

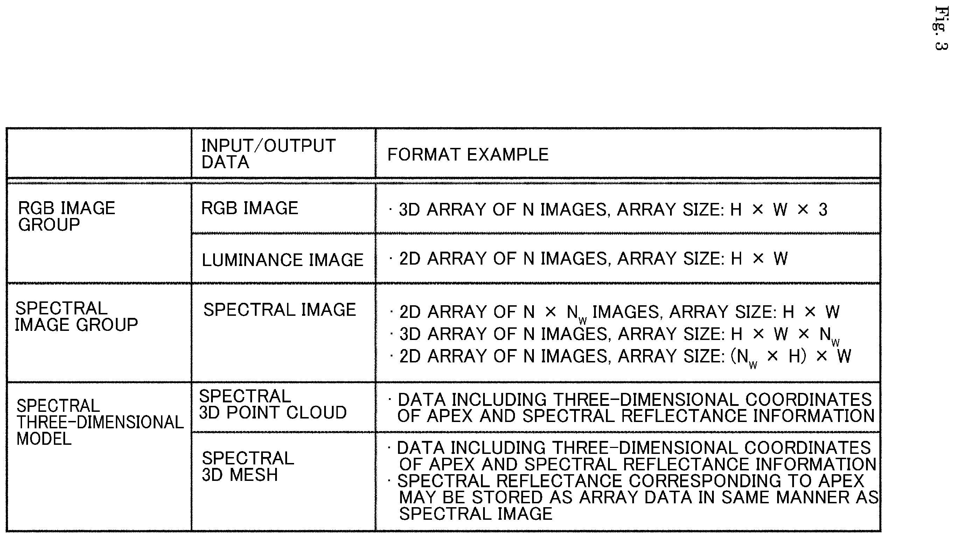

   Fig. 3 is a diagram illustrating the format of input/output data in the image processing device of the present disclosure.
[Fig. 4]

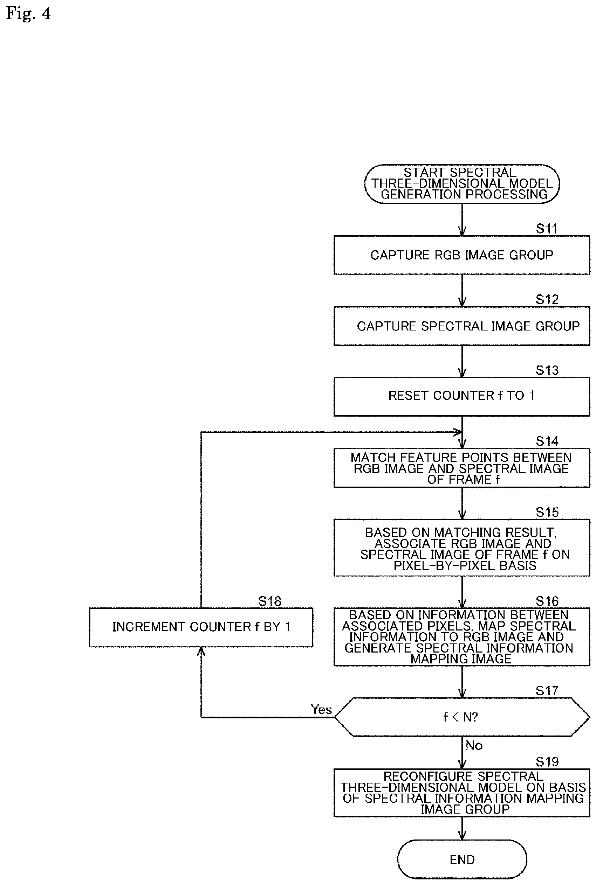

   Fig. 4 is a flowchart illustrating spectral three-dimensional model generation processing by the image processing device illustrated in Fig. 2.
[Fig. 5]

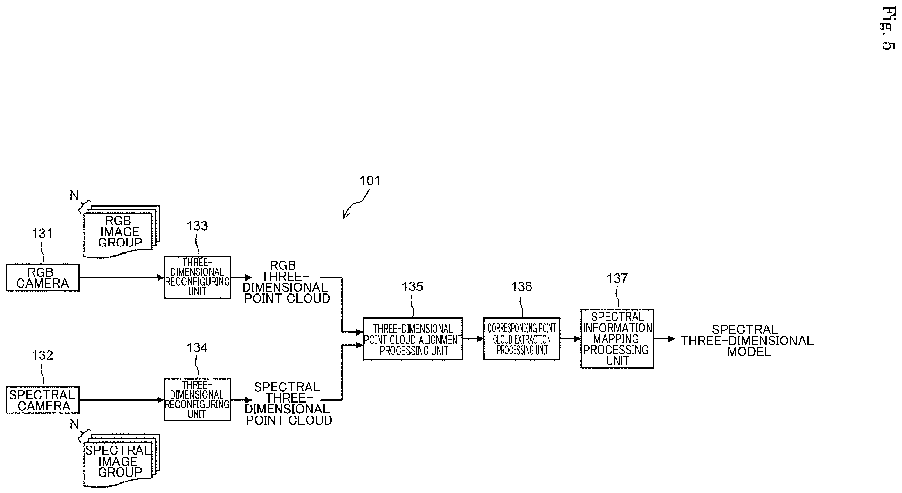

   Fig. 5 is a diagram illustrating a second configuration example of the first embodiment of the image processing device of the present disclosure.
[Fig. 6]

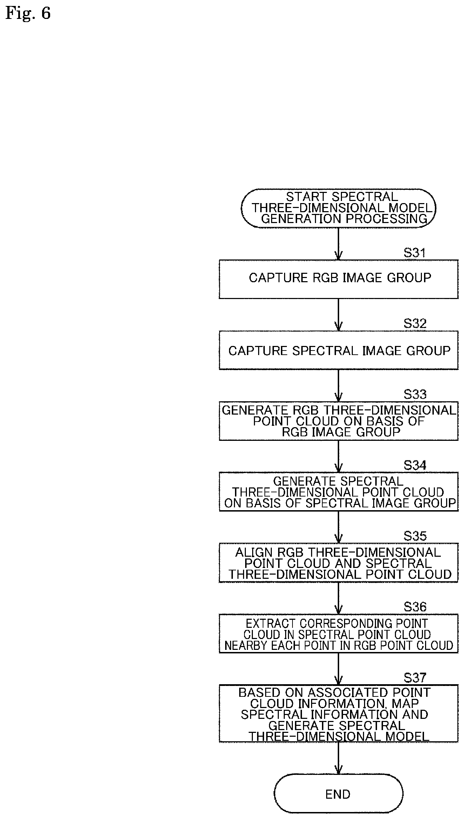

   Fig. 6 is a flowchart illustrating spectral three-dimensional model generation processing by the image processing device illustrated in Fig. 5.
[Fig. 7]

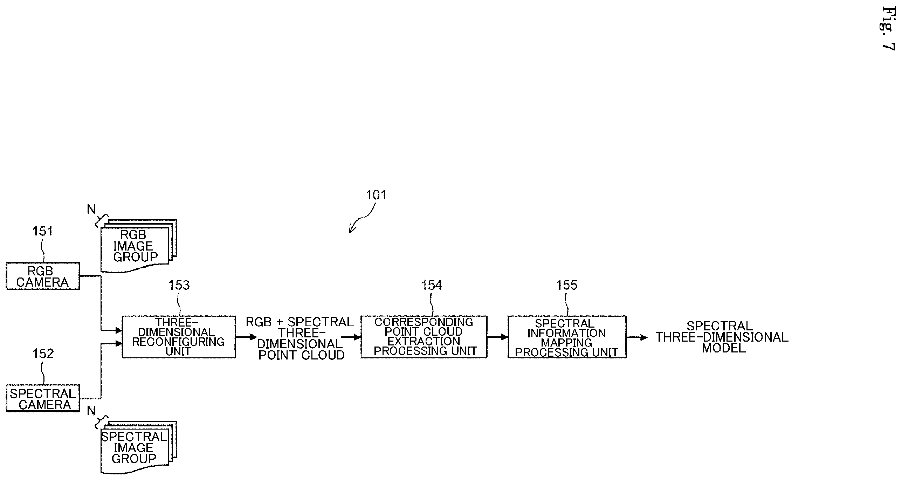

   Fig. 7 is a diagram illustrating a third configuration example of the first embodiment of the image processing device of the present disclosure.
[Fig. 8]

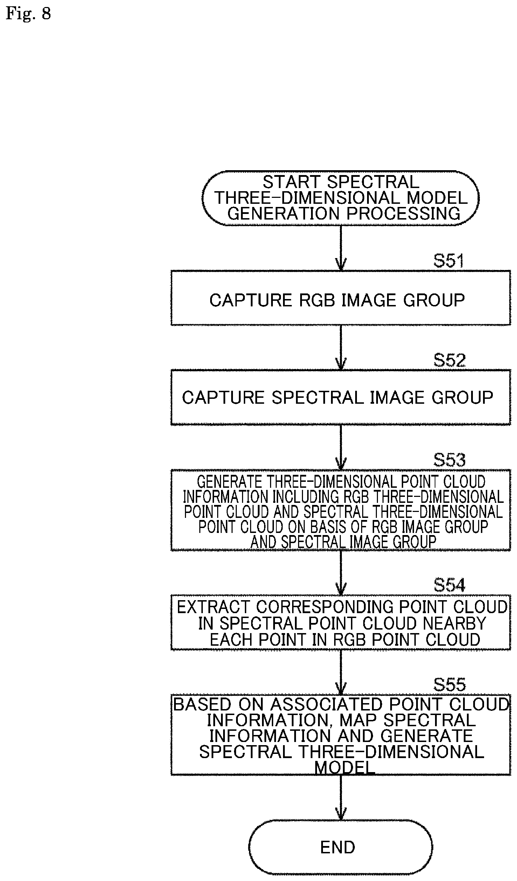

   Fig. 8 is a flowchart illustrating spectral three-dimensional model generation processing by the image processing device illustrated in Fig. 7.
[Fig. 9]

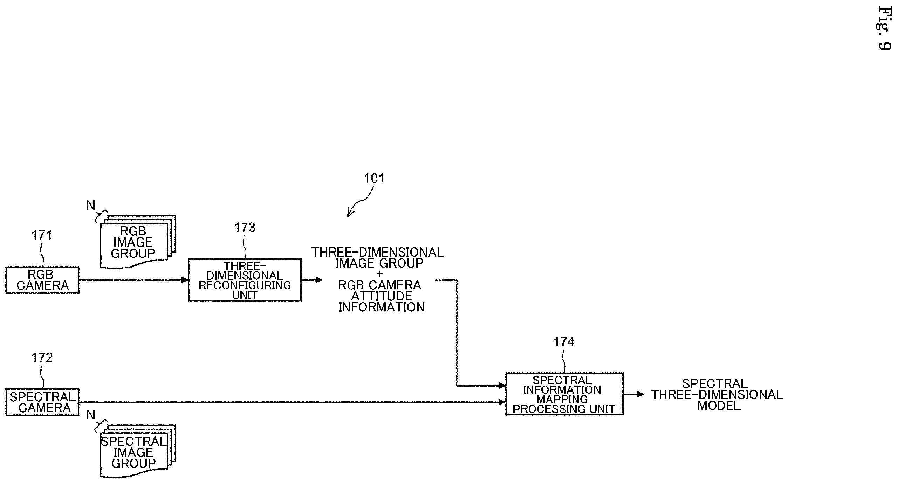

   Fig. 9 is a diagram illustrating a fourth configuration example of the first embodiment of the image processing device of the present disclosure.
[Fig. 10]

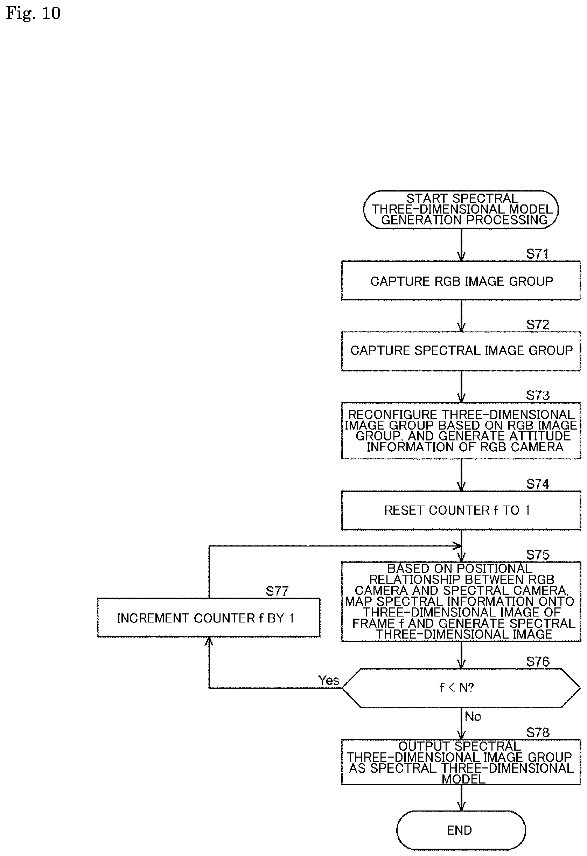

   Fig. 10 is a flowchart illustrating spectral three-dimensional model generation processing by the image processing device illustrated in Fig. 9.
[Fig. 11]

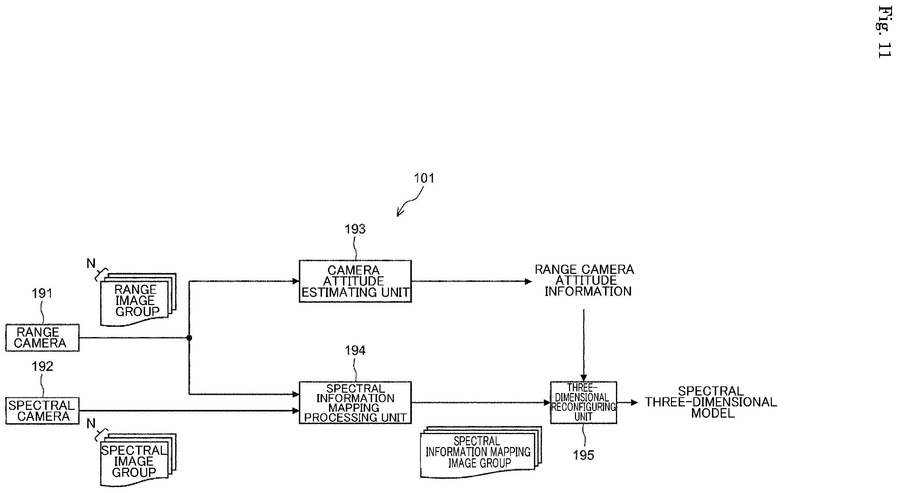

   Fig. 11 is a diagram illustrating a fifth configuration example of the first embodiment of the image processing device of the present disclosure.
[Fig. 12]

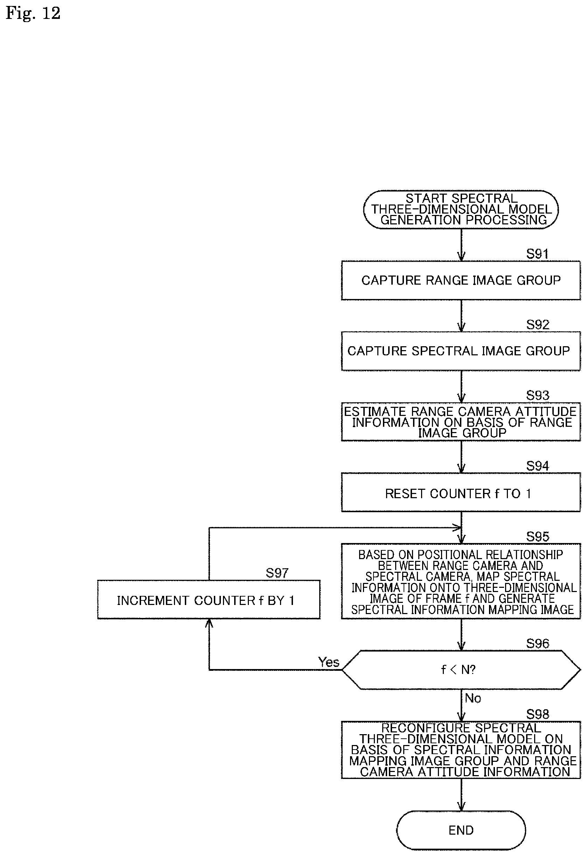

   Fig. 12 is a flowchart illustrating spectral three-dimensional model generation processing by the image processing device illustrated in Fig. 11.
[Fig. 13]

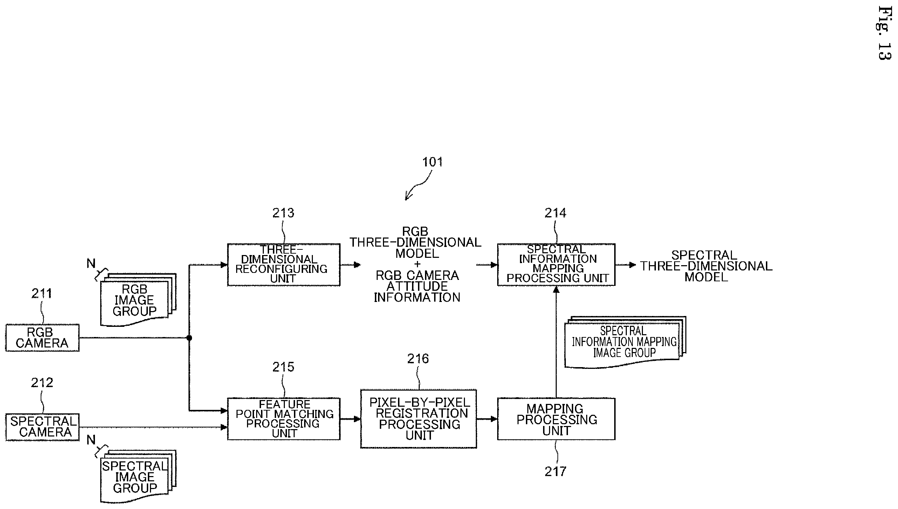

   Fig. 13 is a diagram illustrating a sixth configuration example of the first embodiment of the image processing device of the present disclosure.
[Fig. 14]

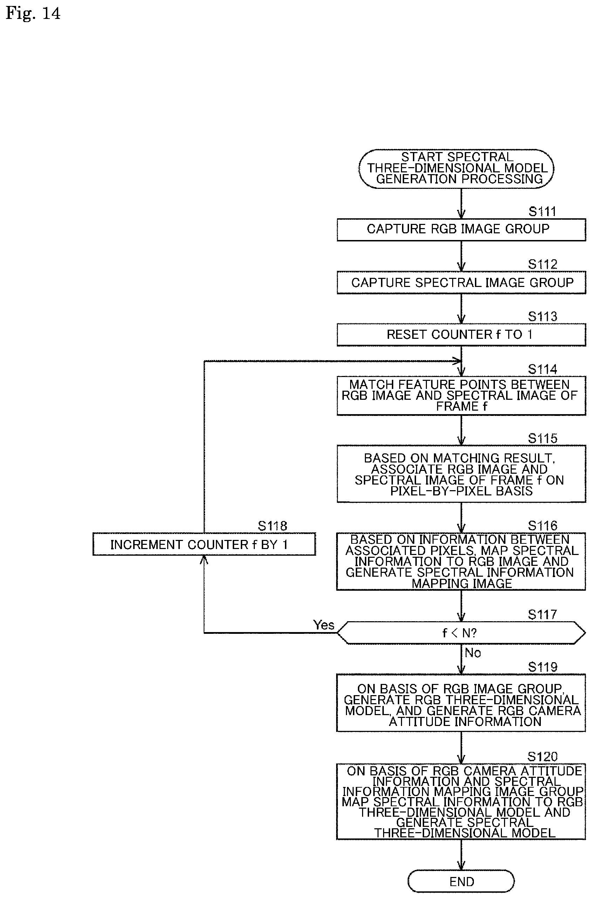

   Fig. 14 is a flowchart illustrating spectral three-dimensional model generation processing by the image processing device illustrated in Fig. 13.
[Fig. 15]

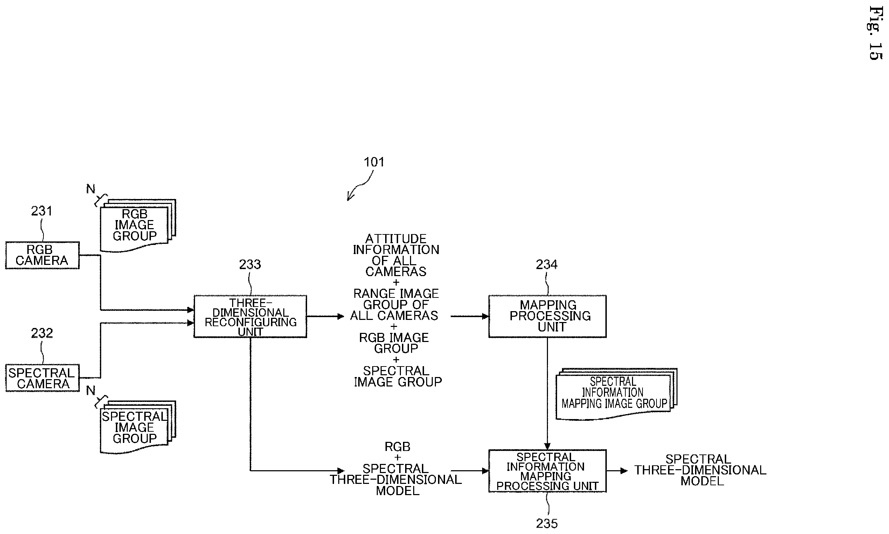

   Fig. 15 is a diagram illustrating a seventh configuration example of the first embodiment of the image processing device of the present disclosure.
[Fig. 16]

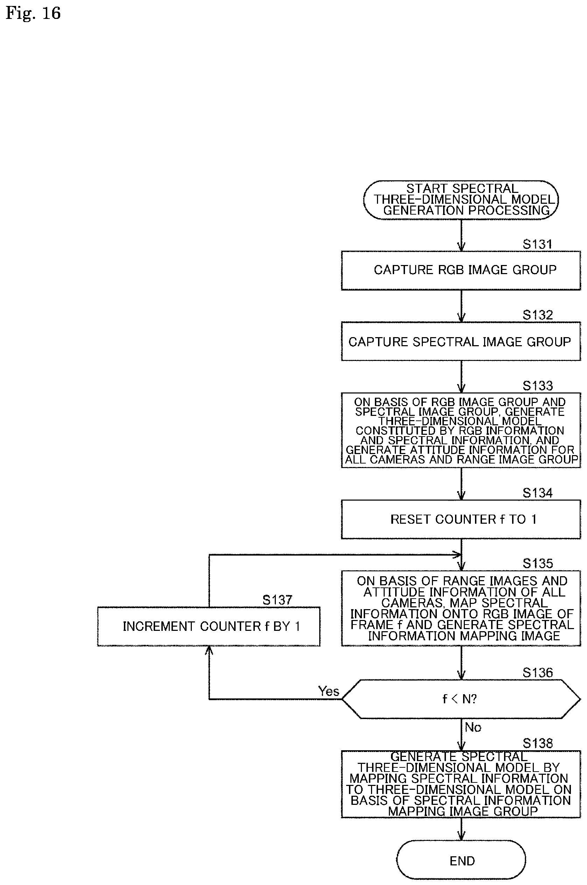

   Fig. 16 is a flowchart illustrating spectral three-dimensional model generation processing by the image processing device illustrated in Fig. 15.
[Fig. 17]

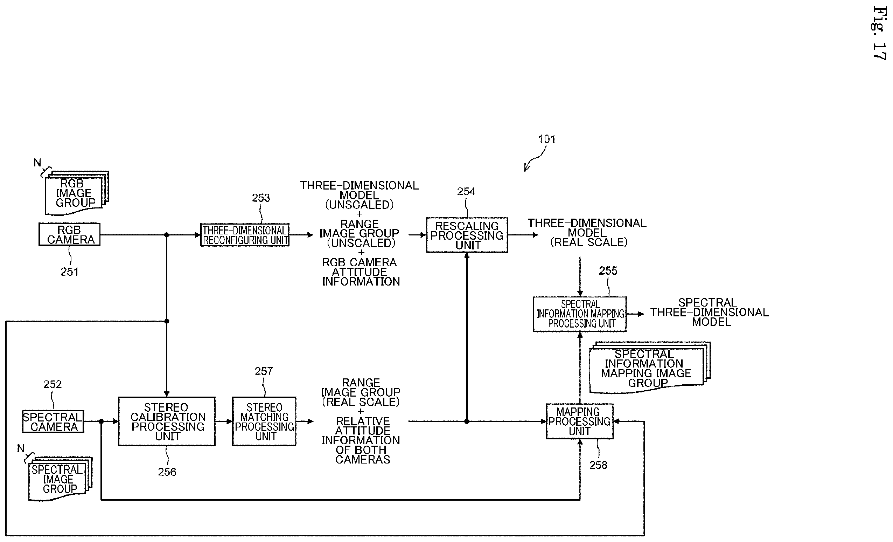

   Fig. 17 is a diagram illustrating an eighth configuration example of the first embodiment of the image processing device of the present disclosure.
[Fig. 18]

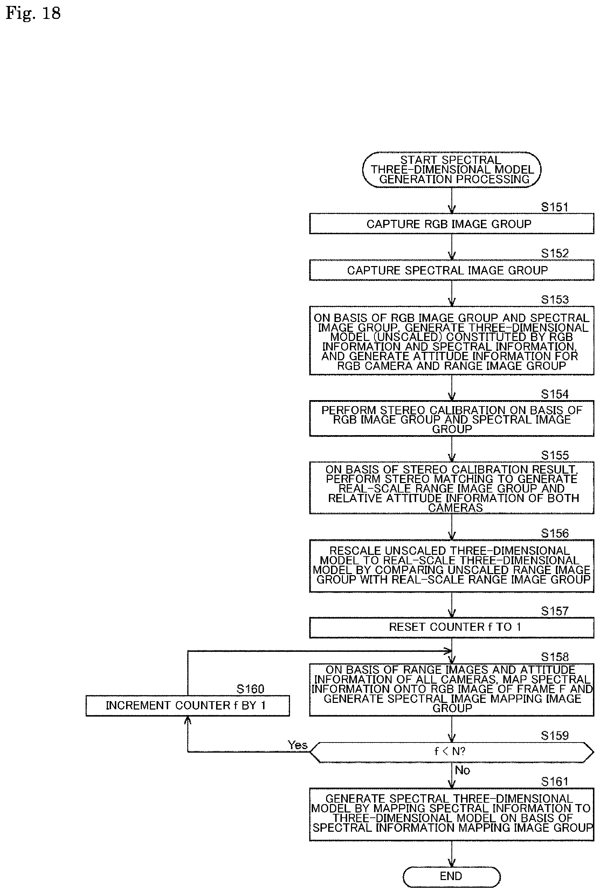

   Fig. 18 is a flowchart illustrating spectral three-dimensional model generation processing by the image processing device illustrated in Fig. 17.
[Fig. 19]

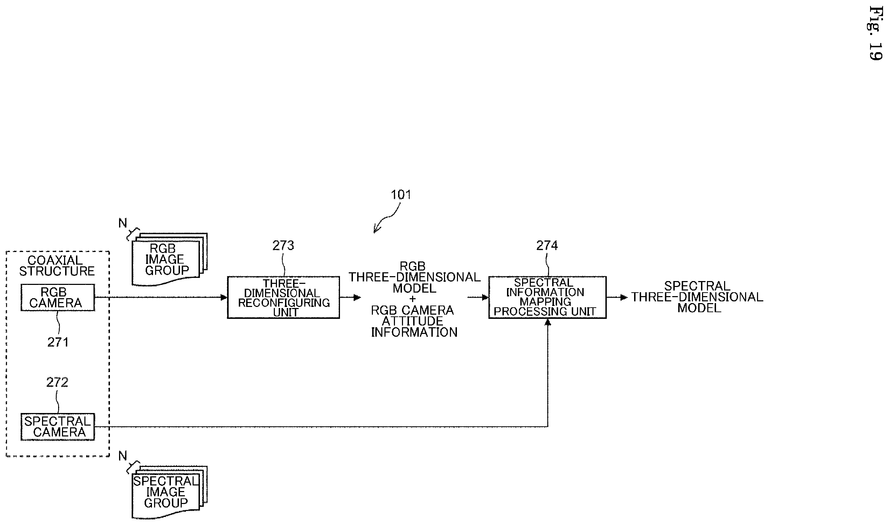

   Fig. 19 is a diagram illustrating a ninth configuration example of the first embodiment of the image processing device of the present disclosure.
[Fig. 20]

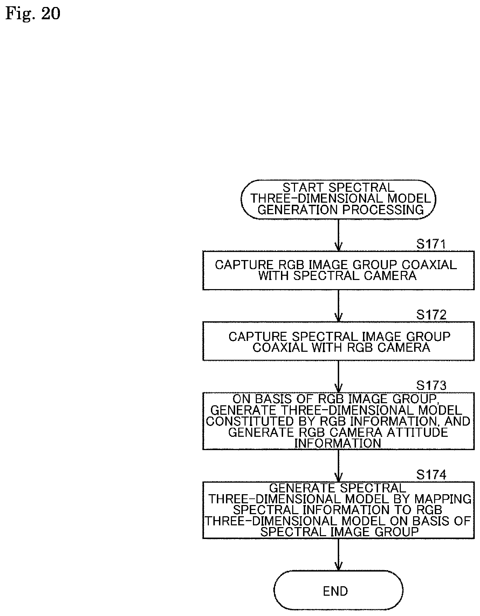

   Fig. 20 is a flowchart illustrating spectral three-dimensional model generation processing by the image processing device illustrated in Fig. 19.
[Fig. 21]

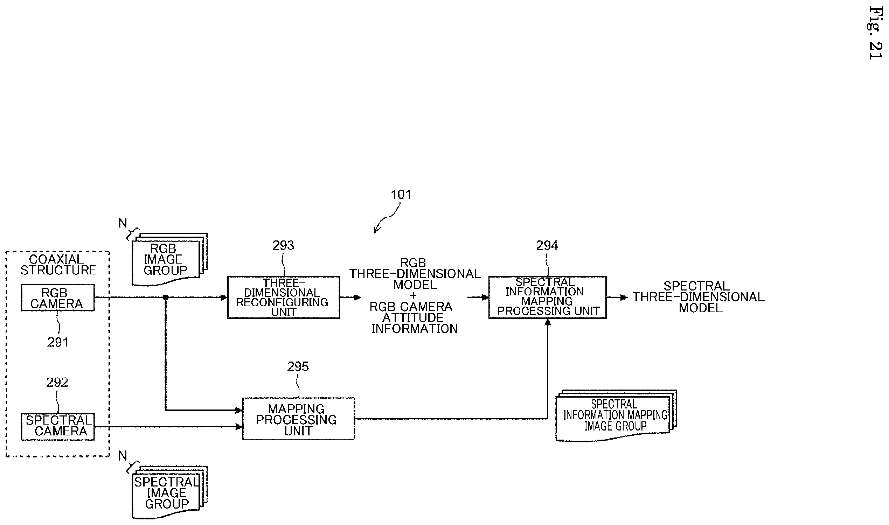

   Fig. 21 is a diagram illustrating a tenth configuration example of the first embodiment of the image processing device of the present disclosure.
[Fig. 22]

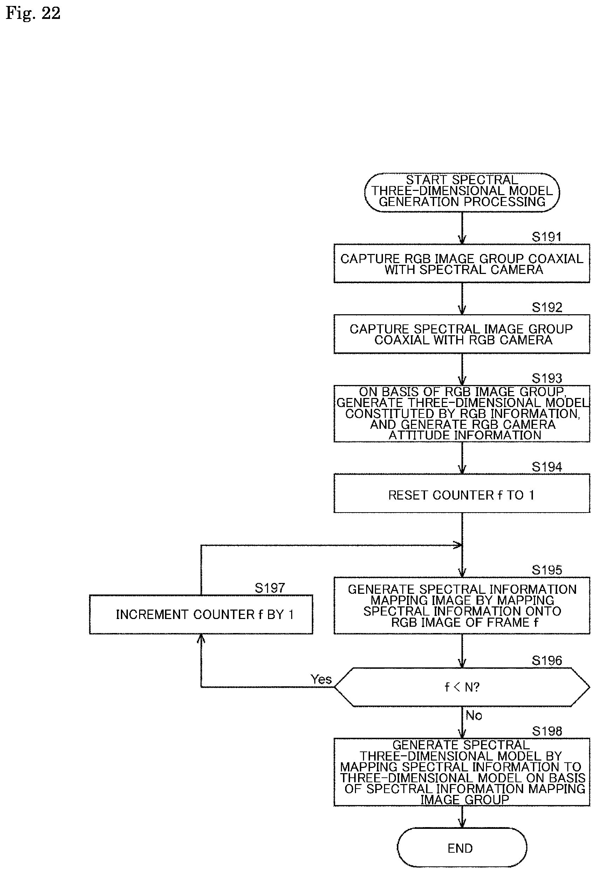

   Fig. 22 is a flowchart illustrating spectral three-dimensional model generation processing by the image processing device illustrated in Fig. 21.
[Fig. 23]

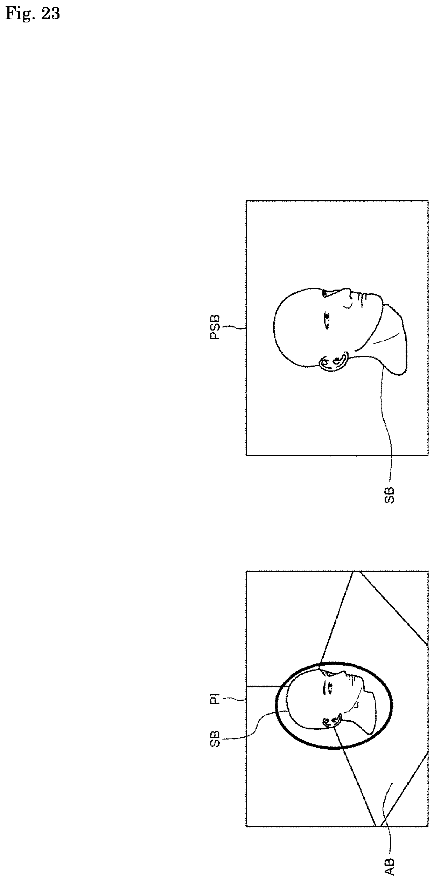

   Fig. 23 is a diagram illustrating an overview of a second embodiment of the present disclosure.
[Fig. 24]

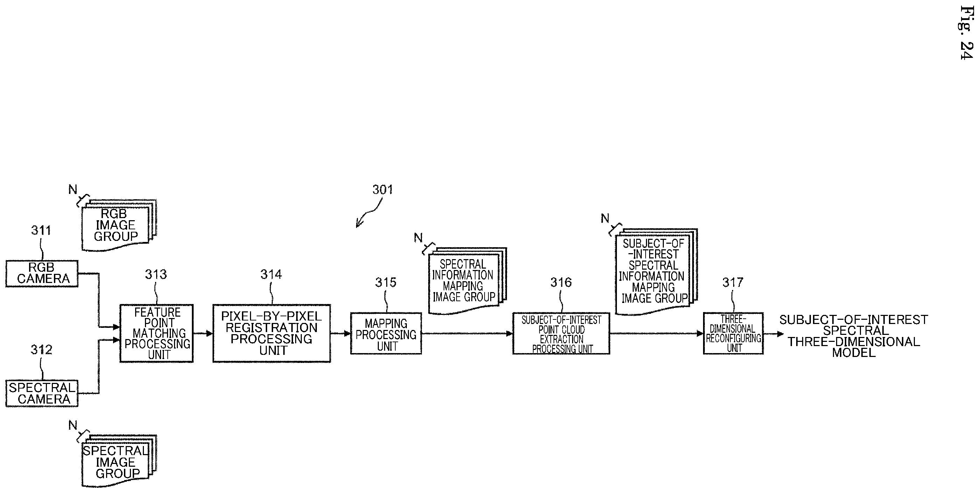

   Fig. 24 is a diagram illustrating a first configuration example of the second embodiment of an image processing device of the present disclosure.
[Fig. 25]

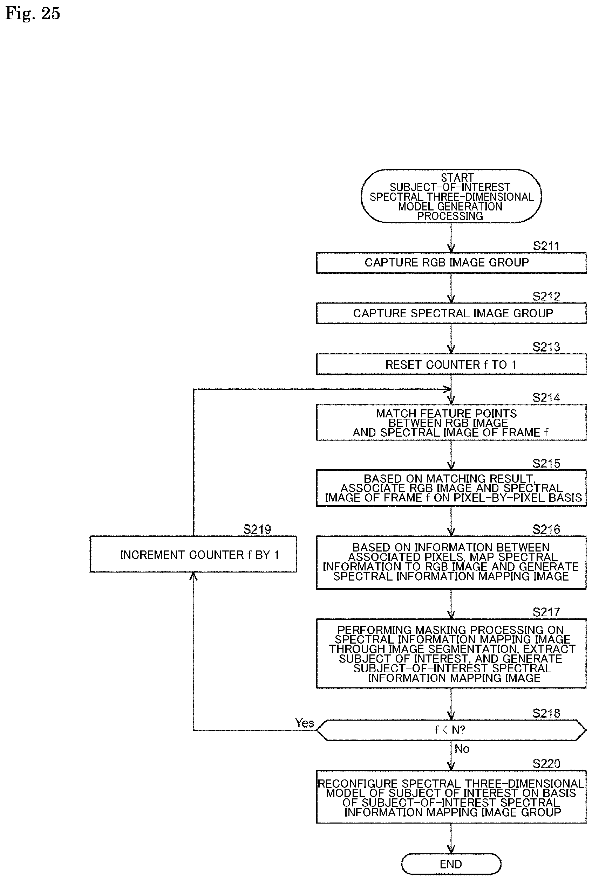

   Fig. 25 is a flowchart illustrating subject-of-interest spectral three-dimensional model generation processing by the image processing device illustrated in Fig. 24.
[Fig. 26]

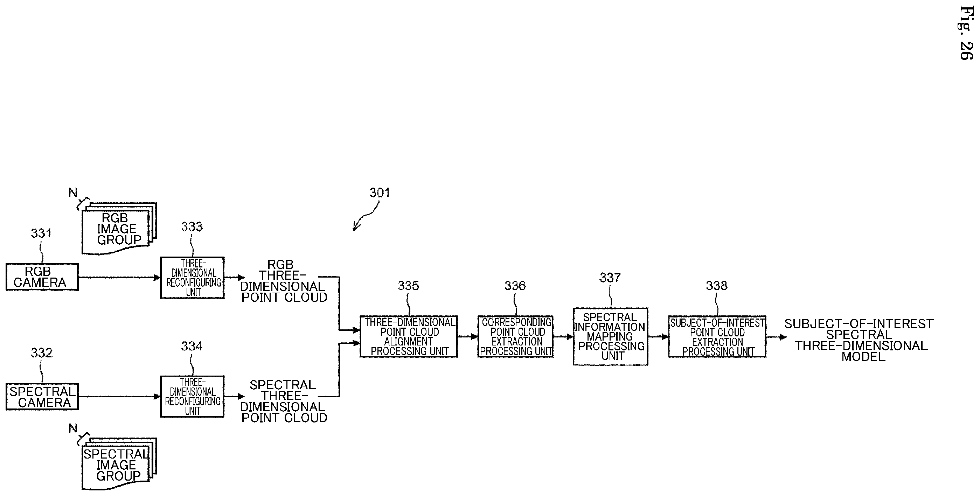

   Fig. 26 is a diagram illustrating a second configuration example of the second embodiment of the image processing device of the present disclosure.
[Fig. 27]

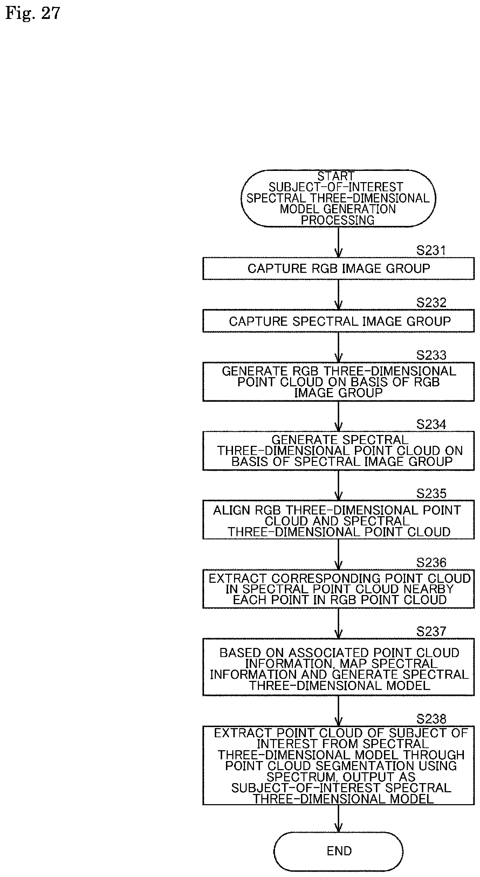

   Fig. 27 is a flowchart illustrating subject-of-interest spectral three-dimensional model generation processing by the image processing device illustrated in Fig. 26.
[Fig. 28]

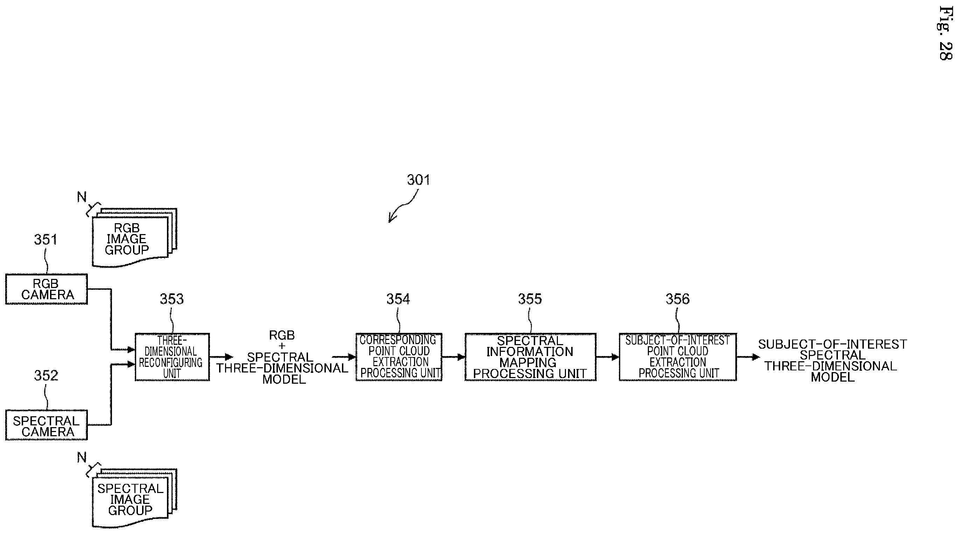

   Fig. 28 is a diagram illustrating a third configuration example of the second embodiment of the image processing device of the present disclosure.
[Fig. 29]

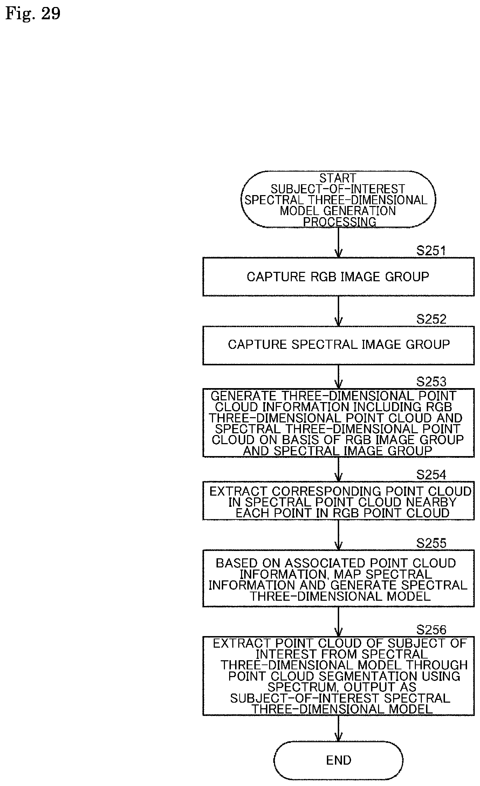

   Fig. 29 is a flowchart illustrating subject-of-interest spectral three-dimensional model generation processing by the image processing device illustrated in Fig. 28.
[Fig. 30]

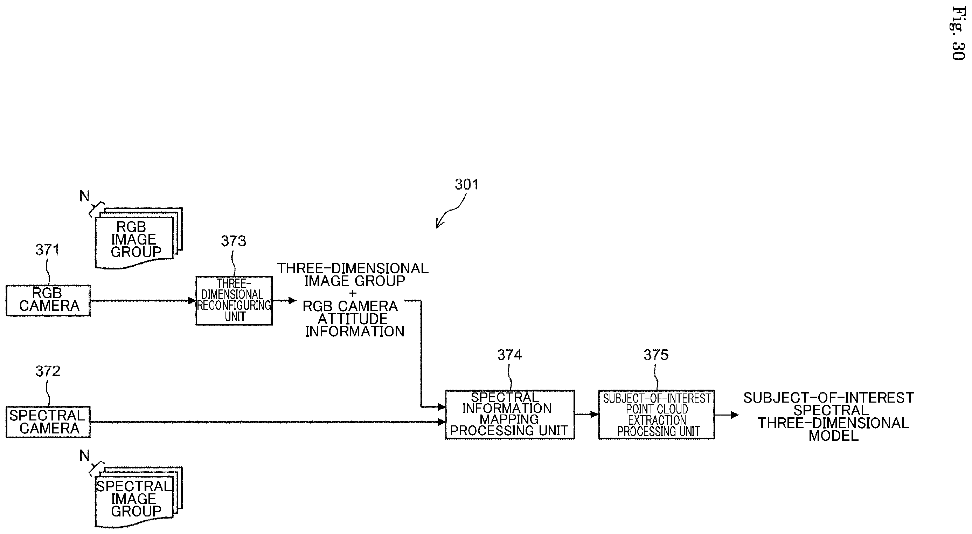

   Fig. 30 is a diagram illustrating a fourth configuration example of the second embodiment of the image processing device of the present disclosure.
[Fig. 31]

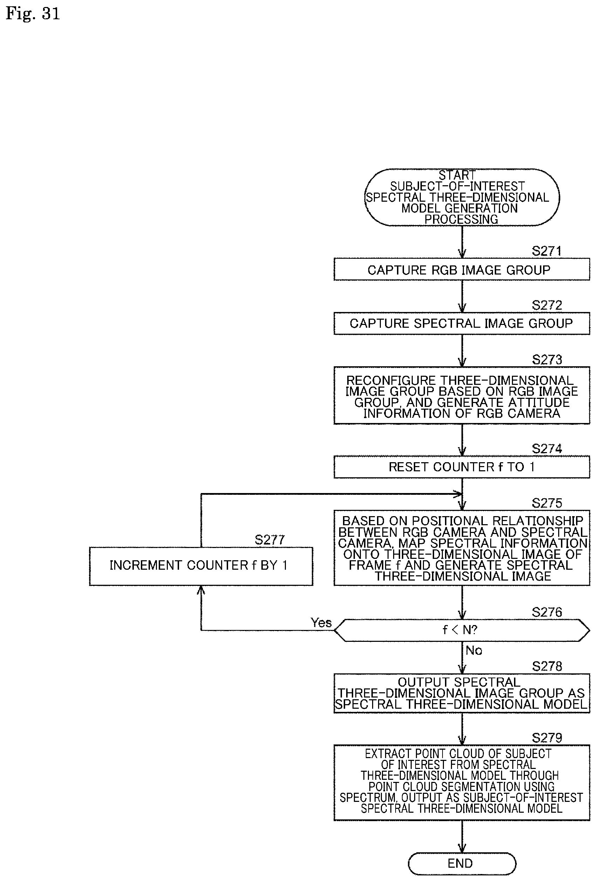

   Fig. 31 is a flowchart illustrating subject-of-interest spectral three-dimensional model generation processing by the image processing device illustrated in Fig. 30.
[Fig. 32]

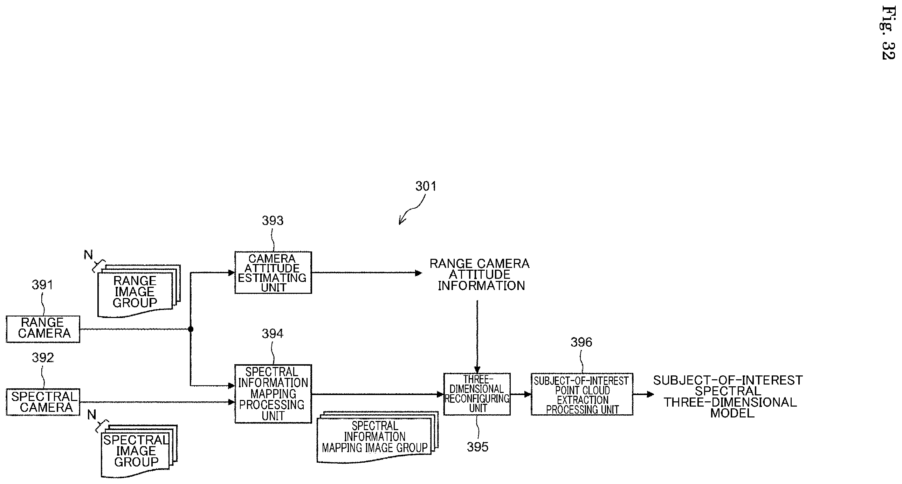

   Fig. 32 is a diagram illustrating a fifth configuration example of the second embodiment of the image processing device of the present disclosure.
[Fig. 33]

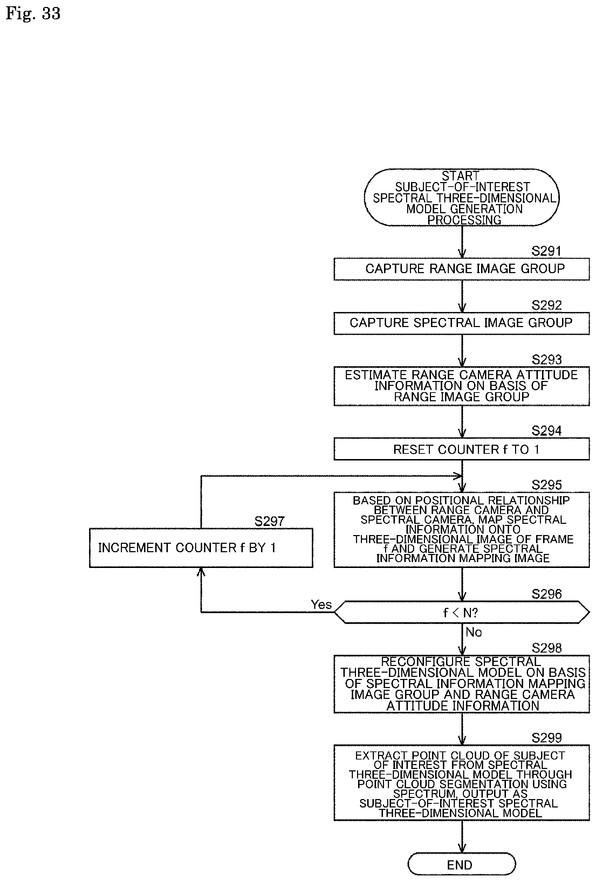

   Fig. 33 is a flowchart illustrating subject-of-interest spectral three-dimensional model generation processing by the image processing device illustrated in Fig. 32.
[Fig. 34]

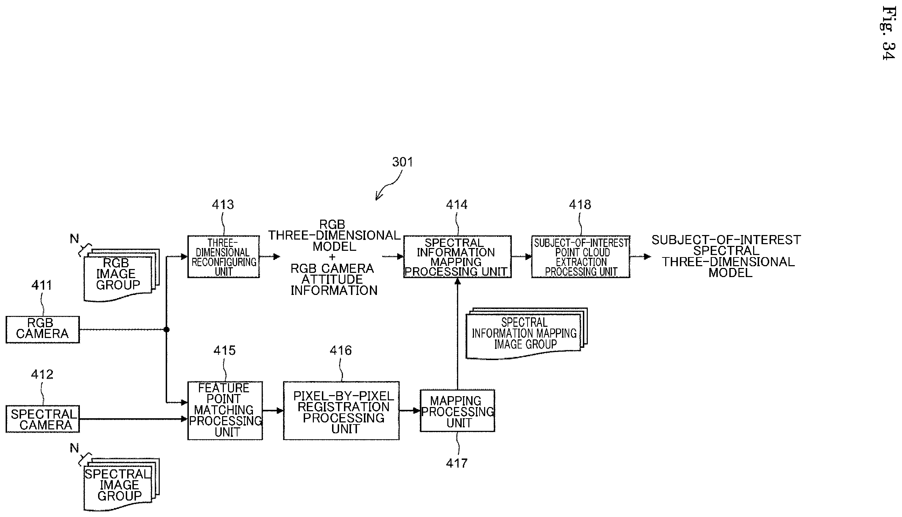

   Fig. 34 is a diagram illustrating a sixth configuration example of the second embodiment of the image processing device of the present disclosure.
[Fig. 35]

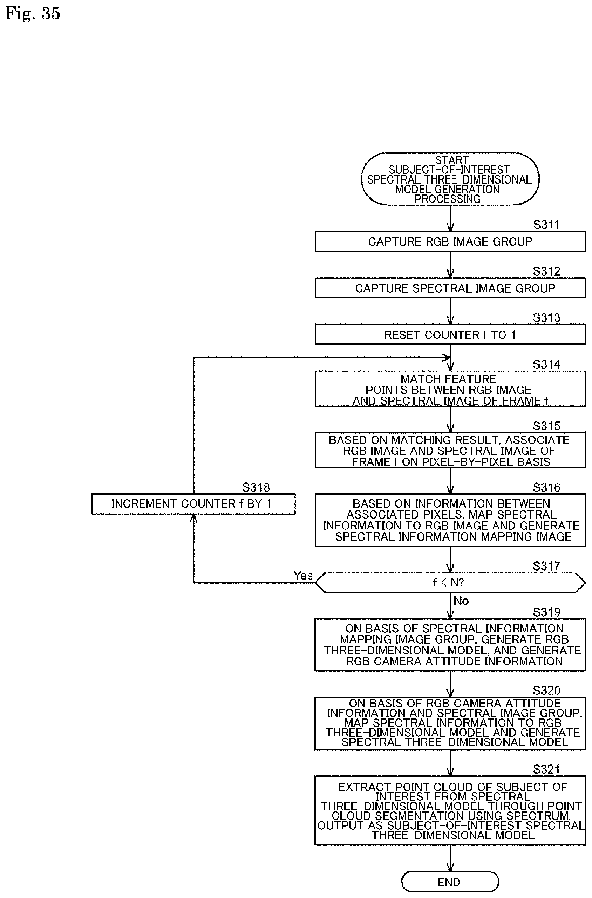

   Fig. 35 is a flowchart illustrating subject-of-interest spectral three-dimensional model generation processing by the image processing device illustrated in Fig. 34.
[Fig. 36]

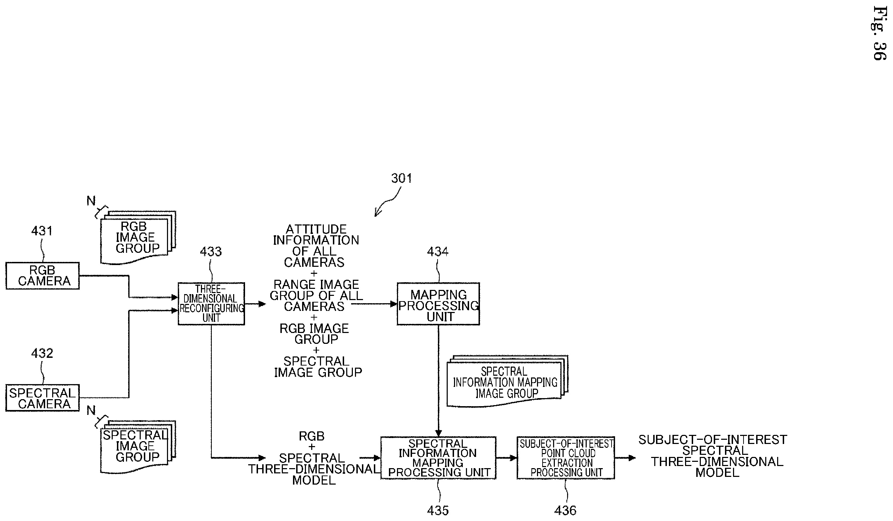

   Fig. 36 is a diagram illustrating a seventh configuration example of the second embodiment of the image processing device of the present disclosure.
[Fig. 37]

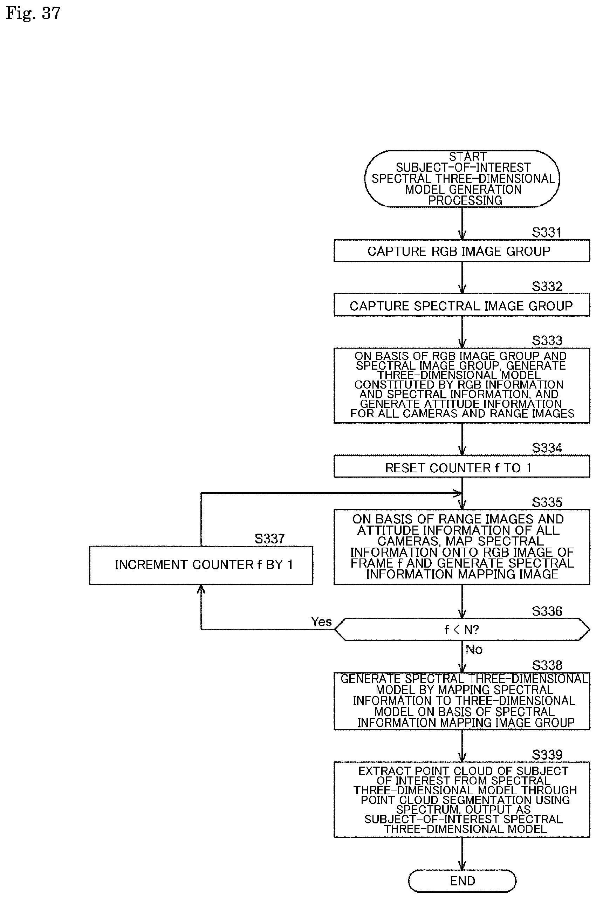

   Fig. 37 is a flowchart illustrating subject-of-interest spectral three-dimensional model generation processing by the image processing device illustrated in Fig. 36.
[Fig. 38]

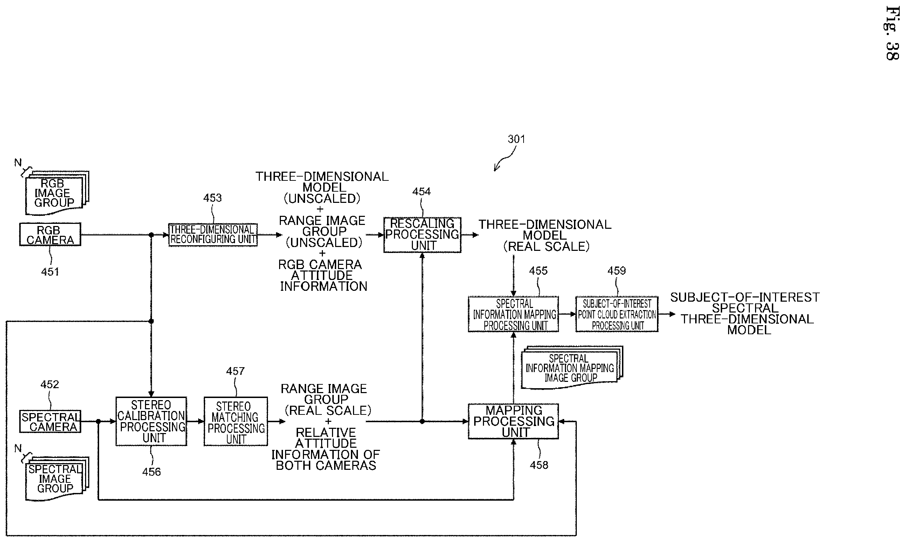

   Fig. 38 is a diagram illustrating an eighth configuration example of the second embodiment of the image processing device of the present disclosure.
[Fig. 39]

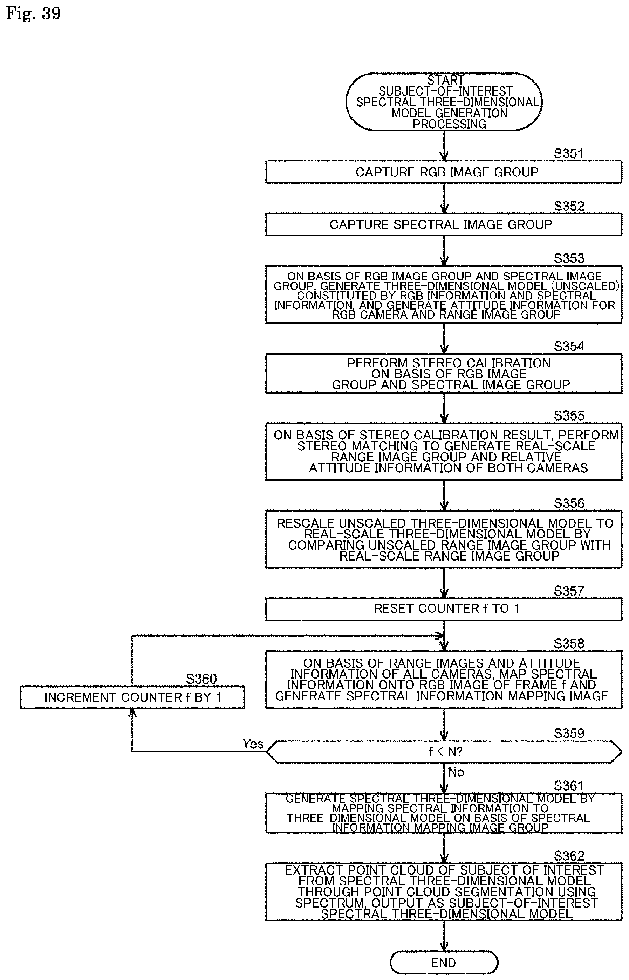

   Fig. 39 is a flowchart illustrating subject-of-interest spectral three-dimensional model generation processing by the image processing device illustrated in Fig. 38.
[Fig. 40]

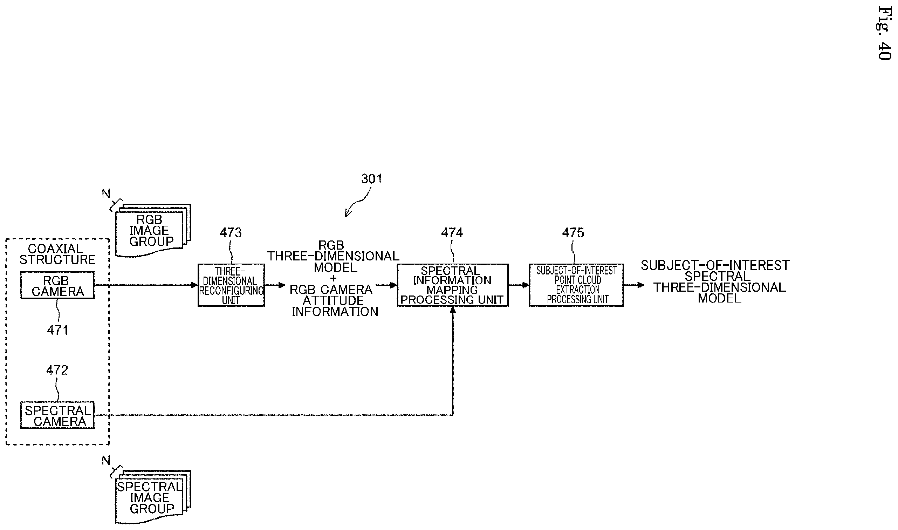

   Fig. 40 is a diagram illustrating a ninth configuration example of the second embodiment of the image processing device of the present disclosure.
[Fig. 41]

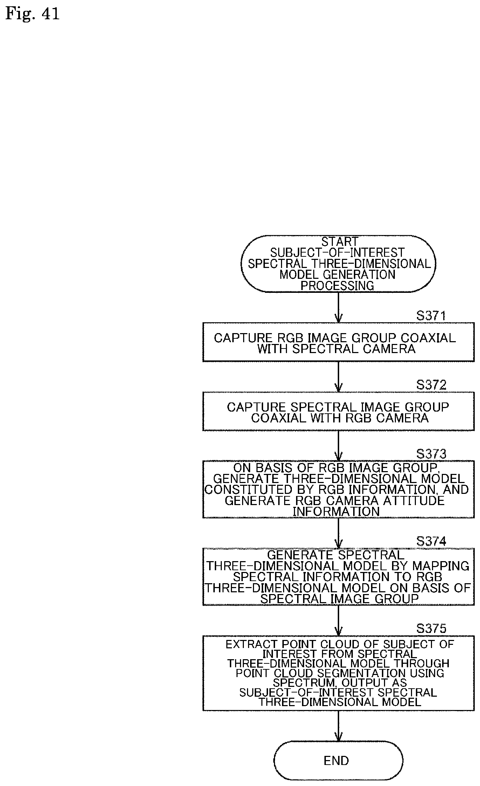

   Fig. 41 is a flowchart illustrating subject-of-interest spectral three-dimensional model generation processing by the image processing device illustrated in Fig. 40.
[Fig. 42]

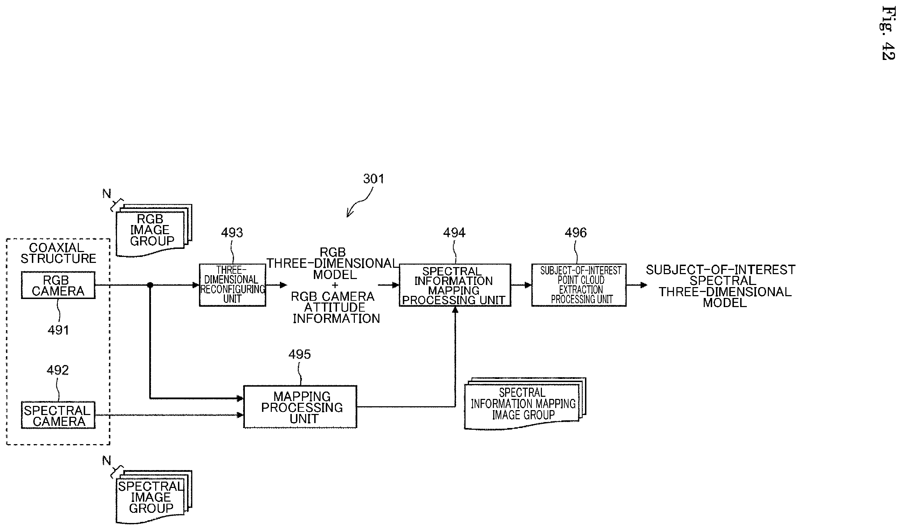

   Fig. 42 is a diagram illustrating a tenth configuration example of the second embodiment of the image processing device of the present disclosure.
[Fig. 43]

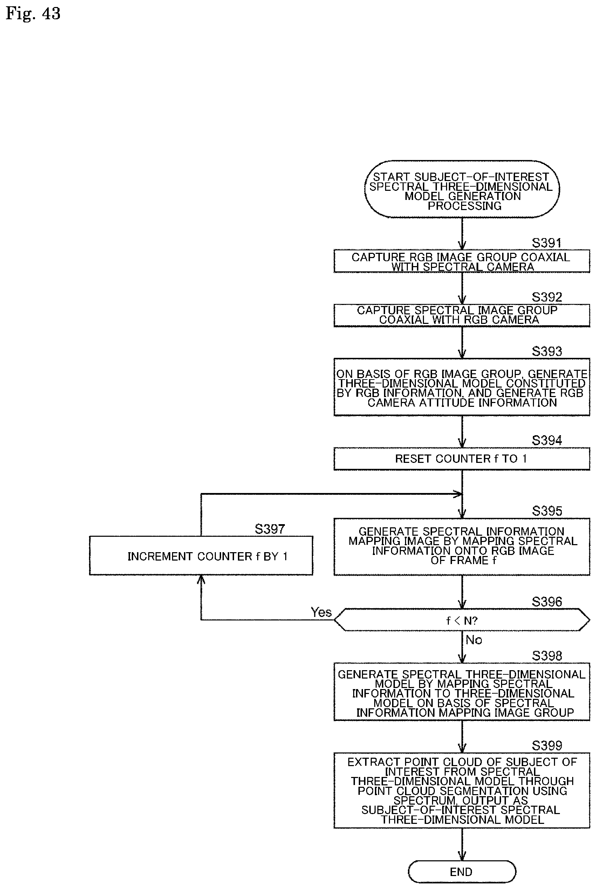

   Fig. 43 is a flowchart illustrating subject-of-interest spectral three-dimensional model generation processing by the image processing device illustrated in Fig. 42.
[Fig. 44]

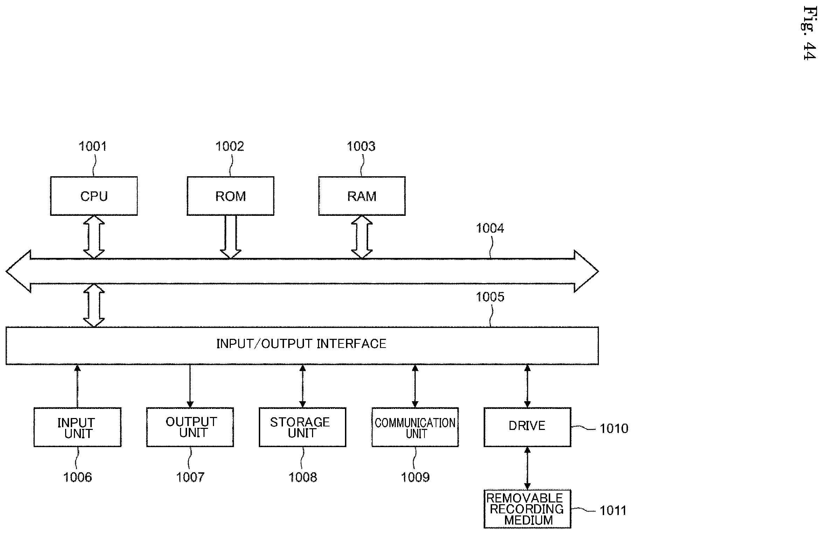

   Fig. 44 illustrates an example of the configuration of a general-purpose computer.

### [Description of Embodiments]

Preferred embodiments of the present disclosure will be described in detail with reference to the accompanying drawings below. Note that in the present specification and the drawings, components having substantially the same functional configurations will be denoted by the same reference numerals, and repeated descriptions thereof will be omitted.

Embodiments for carrying out the present technique will be described hereinafter. The descriptions will be given in the following order.
1. Overview of Present Disclosure
2. First Embodiment
3. Second Embodiment
4. Example of Execution by Software

### <<1. Overview of Present Disclosure>>

### <Generation of Three-Dimensional Images Including Spectral Information>

The present disclosure makes it possible to easily generate a three-dimensional model including spectral information in particular.

To describe the technique of the present disclosure, for easily generating a three-dimensional model including spectral information, a technique for generating a three-dimensional image including spectral information will be described first.

In the following, a three-dimensional image including spectral information will also be called a "spectral three-dimensional image", and a three-dimensional model including spectral information will also be called a "spectral three-dimensional model".

The upper part of Fig. 1 illustrates an example of the configuration of an image processing device that generates a spectral three-dimensional image, and the lower part of Fig. 1 illustrates an example of the configuration of an image processing device that generates a spectral three-dimensional model for describing the overview of the present disclosure.

An image processing device 11 in the upper part of Fig. 1 generates a spectral three-dimensional image from a group of a plurality of RGB images and a single spectral image.

More specifically, the image processing device 11 includes an RGB camera 21, a spectral camera 22, a three-dimensional image configuring unit 23, and a spectral information mapping unit 24.

The RGB camera 21 generates an RGB image group including of a plurality of RGB images by capturing a subject from a plurality of angles, and outputs the RGB image group to the three-dimensional image configuring unit 23.

The spectral camera 22 is, for example, a camera including a multispectral sensor or the like, and captures a single spectral image of the subject and outputs the image to the spectral information mapping unit 24.

The three-dimensional image configuring unit 23 configures an RGB three-dimensional image of the subject from the viewpoint direction of the spectral camera 22 on the basis of the RGB image group through, for example, Structure from Motion (SfM), and outputs the resulting image to the spectral information mapping unit 24.

The spectral information mapping unit 24 generates and outputs a spectral three-dimensional image, which is a three-dimensional image including spectral information, by mapping the spectral information from the corresponding position in the spectral image onto the RGB three-dimensional image corresponding to the capture angle of the spectral image, on the basis of the three-dimensional image of the subject.

Although a spectral three-dimensional image is generated through the foregoing processing, the spectral three-dimensional image generated by the image processing device 11 in the upper part of Fig. 1 only corresponds to the capture angle of the spectral image captured by the spectral camera 22, and thus the spectral three-dimensional image cannot be generated from a desired viewpoint position.

Accordingly, in the present disclosure, in addition to the RGB images, a spectral image group is also obtained by capturing spectral images from a plurality of angles, as in the image processing device illustrated in the lower part of Fig. 1.

Spectral information mapping images are then generated by mapping the spectral information from the RGB images and the spectral images captured at corresponding angles onto the RGB images, and a spectral three-dimensional model is then generated on the basis of the spectral information mapping image group.

More specifically, an image processing device 31 in the lower part of Fig. 1 includes an RGB camera 41, a spectral camera 42, a spectral information mapping processing unit 43, and a three-dimensional reconfiguring unit 44.

The RGB camera 41 has the same configuration as the RGB camera 21, and configures an RGB image group by capturing a subject from a plurality of angles, and outputs the RGB image group to the spectral information mapping processing unit 43.

The spectral camera 42 is similar to the spectral camera 22 in terms of its basic function, but further configures a spectral image group by capturing spectral images from a plurality of angles, and outputs the spectral image group to the spectral information mapping processing unit 43.

Upon obtaining the RGB image group and the spectral image group, the spectral information mapping processing unit 43 generates a spectral information mapping image by mapping the spectral information onto the RGB image on a pixel-by-pixel basis on the basis of the corresponding RGB image and spectral image. A spectral information mapping image group is configured as a result, which is then output to the three-dimensional reconfiguring unit 44.

The three-dimensional reconfiguring unit 44 reconfigures a spectral three-dimensional model by configuring three-dimensional point cloud information constituted by the spectral information on the basis of the spectral information mapping image group.

Such a configuration makes it possible to reconfigure the spectral three-dimensional model, and thus a spectral three-dimensional image from a desired viewpoint position can be generated on the basis of the spectral three-dimensional model.

### <<2. First Embodiment>>

### <2-1. First Configuration Example of First Embodiment>

A first configuration example of a first embodiment of an image processing device that generates a spectral three-dimensional model will be described next with reference to Fig. 2.

An image processing device 101 in Fig. 2 obtains an RGB image group and a spectral image group each captured from a plurality of angles, generates spectral information mapping images by mapping the spectral information from the RGB images and the spectral images captured at corresponding angles onto the RGB images, and then generates a spectral three-dimensional model on the basis of the spectral information mapping image group.

More specifically, the image processing device 101 in Fig. 2 includes an RGB camera 111, a spectral camera 112, a feature point matching processing unit 113, a pixel-by-pixel registration processing unit 114, a mapping processing unit 115, and a three-dimensional reconfiguring unit 116.

The RGB camera 111 corresponds to the RGB camera 41 in the lower part of Fig. 1. The RGB camera 111 configures an RGB image group by capturing a subject from a plurality of angles, and outputs the RGB image group to the feature point matching processing unit 113.

The images constituting the RGB image group are not limited to RGB images, but may also include luminance images, as illustrated in the upper part of Fig. 3.

The format of the RGB image may be a three-dimensional array (a 3D array) having an image height H, an image width W, and RGB, for example, for a number of captured images N, as indicated at the top of the upper part of Fig. 3. In this case, the size of the array corresponding to the size of a single image is the image height H × image width W × 3 (H × W × 3).

Likewise, the format of the luminance image may be a two-dimensional array (a 2D array) having an image height H and an image width W, for example, for the number of captured images N, as indicated at the bottom of the upper part of Fig. 3. In this case, the size of the array corresponding to the size of a single image is the image height H × image width W (H × W).

The spectral camera 112 corresponds to the spectral camera 42 in the lower part of Fig. 1, and is constituted by, for example, a multispectral sensor or the like. The spectral camera 112 configures a spectral image group by capturing spectral images from a plurality of angles, and outputs the spectral image group to the feature point matching processing unit 113.

The format of the spectral image may be a two-dimensional array (a 2D array) having a wavelength number Nw, for example, for a number of captured images N, as indicated at the top of the middle part of Fig. 3. In this case, the size of the array corresponding to the size of a single image is the image height H × image width W (H × W).

The format of the spectral image may be a three-dimensional array (a 3D array) having an image height H, an image width W, and a wavelength number Nw, for example, for a number of captured images N, as indicated in the middle of the middle part of Fig. 3. In this case, the size of the array corresponding to the size of a single image is the image height H × image width W × wavelength number Nw (H × W × Nw).

Furthermore, the format of the spectral image may be a two-dimensional array (a 2D array) having a wavelength number Nw × image height H and an image width W, for example, for a number of captured images N, as indicated in the middle part of Fig. 3. In this case, the size of the array corresponding to the size of a single image is (wavelength number Nw × image height H) × image width W ((Nw × H) × W).

Upon obtaining the RGB image group and the spectral image group, the feature point matching processing unit 113 (Fig. 2) extracts feature points from the corresponding RGB images and the spectral images, matches the extracted feature points, and outputs information on the matched feature points to the pixel-by-pixel registration processing unit 114 along with the RGB image group and the spectral image group.

The pixel-by-pixel registration processing unit 114 generates registration information by registering the pixels of the feature points in the RGB image and the pixels of the feature points in the spectral image, matched by and supplied from the feature point matching processing unit 113, in association with each other, through, for example, registration processing using optical flow, and outputs the registration information to the mapping processing unit 115 along with the RGB image group and the spectral image group.

The mapping processing unit 115 generates spectral information mapping images, in each of which spectral information is mapped to each pixel in each RGB image, by mapping, onto each pixel in the RGB image, the spectral information in the spectral image for which the feature points registered in association with the RGB image have been matched, on the basis of the registration information supplied from the pixel-by-pixel registration processing unit 114, and outputs the spectral information mapping images to the three-dimensional reconfiguring unit 116 as a spectral information mapping image group.

In other words, the feature point matching processing unit 113, the pixel-by-pixel registration processing unit 114, and the mapping processing unit 115 correspond to the configuration of the spectral information mapping processing unit 43 of the image processing device 31 in the lower part of Fig. 1.

The three-dimensional reconfiguring unit 116 reconfigures a spectral three-dimensional model by configuring three-dimensional point cloud information constituted by the spectral information on the basis of the spectral information mapping image group, through Structure from Motion (SfM) or the like.

Here, the spectral three-dimensional model may be spectral three-dimensional point cloud (spectral 3D point cloud) information having three-dimensional coordinates at each apex of a three-dimensional mesh constituting the subject and data including information on each spectral reflectance, as indicated at the top of the lower part of Fig. 3.

The spectral three-dimensional model may also be information on a spectral three-dimensional mesh having data including three-dimensional coordinates at each apex of a three-dimensional mesh constituting the subject and, for each, information on a spectral reflectance constituted by array data in a format similar to that of the spectral image, as indicated at the bottom of the lower part of Fig. 3.

Such a configuration makes it possible to generate a spectral information mapping image group from the RGB image group and the spectral image group, and to reconfigure the spectral three-dimensional model on the basis of the generated spectral information mapping image group.

As a result, a spectral three-dimensional image from a desired viewpoint position can be generated on the basis of the spectral three-dimensional model.

### <Spectral Three-Dimensional Model Generation Processing by Image Processing Device in Fig. 2>

Spectral three-dimensional model generation processing by the image processing device 101 in Fig. 2 will be described next with reference to the flowchart in Fig. 4.

In step S11, the RGB camera 111 configures an RGB image group by capturing a subject from a plurality of angles, and outputs the RGB image group to the feature point matching processing unit 113.

In step S12, the spectral camera 112 configures a spectral image group by capturing a spectral image from a plurality of angles, and outputs the spectral image group to the feature point matching processing unit 113.

In step S13, the feature point matching processing unit 113 resets a counter f for counting frame numbers of the RGB image group and the spectral image group, respectively, to 1.

In step S14, the feature point matching processing unit 113 extracts feature points from the RGB image and the spectral image of a frame number f, matches the extracted feature points, and outputs information on the matched feature points to the pixel-by-pixel registration processing unit 114 along with the RGB image group and the spectral image group of the frame number f.

In step S15, the pixel-by-pixel registration processing unit 114 generates registration information by registering the pixels of the feature points in the RGB image and the pixels of the feature points in the spectral image, matched and supplied from the feature point matching processing unit 113, in association with each other through registration processing, and outputs the registration information to the mapping processing unit 115 along with the RGB image group and the spectral image group.

In step S16, the mapping processing unit 115 generates, on the basis of the registration information supplied from the pixel-by-pixel registration processing unit 114, a spectral information mapping image, in which spectral information is mapped to each pixel in the RGB image of the frame number f, by mapping, onto each pixel in the RGB image, the spectral information in the spectral image registered in association therewith, and outputs the spectral information mapping image to the three-dimensional reconfiguring unit 116 as a spectral information mapping image of the frame number f.

At this time, the three-dimensional reconfiguring unit 116 stores the spectral information mapping image of the frame number f in association with the frame number f.

In step S17, the feature point matching processing unit 113 determines whether the counter f is lower than a frame number N, and if the counter f is lower than the frame number N, the sequence moves to step S18.

In step S18, the feature point matching processing unit 113 increments the counter f by 1, and the sequence returns to step S14.

In other words, the processing of steps S14 to S18 is repeated until a spectral information mapping image is generated for all N frames, which is the number of images included in each of the RGB image group and the spectral image group.

If in step S17 the counter f is determined not to be lower than N and all the spectral information mapping images are therefore determined to have been generated, the sequence moves to step S19.

In step S19, the three-dimensional reconfiguring unit 116 reconfigures a spectral three-dimensional model by configuring three-dimensional point cloud information constituted by the spectral information on the basis of the spectral information mapping image group.

The foregoing processing makes it possible to generate a spectral information mapping image group from the RGB image group and the spectral image group, and to reconfigure the spectral three-dimensional model on the basis of the generated spectral information mapping image group.

As a result, a spectral three-dimensional image from a desired viewpoint position can be generated on the basis of the spectral three-dimensional model.

The foregoing assumes that the image capturing by the RGB camera 111 and the spectral camera 112 is performed at the same timing, at similar angles with respect to the subject. Accordingly, the example described is one in which the spectral information is mapped to the RGB image on the basis of the registration information generated through feature point matching and registration processing for the RGB image and the spectral image of the same frame number.

However, the RGB image and the spectral image subjected to the feature point matching do not necessarily have to be captured at the same timing, as long as the images are captured at similar angles with respect to the subject.

However, in such a case, for example, when the RGB image and the spectral image are captured, it is necessary to generate the spectral information mapping image using the RGB image and the spectral image from similar angles, such that attitude information of the RGB camera 111 and the spectral camera 112 can be obtained and the angles with respect to the subject can be identified.

The spectral camera 112 is also not limited to a multispectral sensor, and may have another sensor, such as a temperature sensor or the like.

Furthermore, the RGB image group may be replaced by a luminance image group as described above, or may be any other group of images, such as a grayscale image group, as long as the images can be captured by the RGB camera 111.

The RGB camera 111 may also be replaced with a monochromatic camera.

Additionally, illumination estimation processing may be added to the spectral image captured by the spectral camera 112.

Adding illumination estimation processing to the spectral image captured by the spectral camera 112 in this manner makes it possible to obtain the pure spectrum of the subject by separating the spectrum of ambient light from the spectral image. This makes it possible to obtain a more accurate spectral image, and as a result, a more accurate spectral three-dimensional model can be generated.

The resolutions of the RGB image group captured by the RGB camera 111 and the spectral image group captured by the spectral camera 112 may be the same, or may be different.

However, when the resolutions of the two are different, upsampling, downsampling, or the like, for example, may be performed in the stage previous to the mapping of the spectral information of the spectral image to the RGB image, such that the resolutions of the images match.

### <2-2. Second Configuration Example of First Embodiment>

The foregoing described an example in which the spectral information mapping image group is generated from the RGB image group and the spectral image group, and the spectral three-dimensional model is then generated. However, the spectral three-dimensional model may be generated by generating a three-dimensional point cloud for both the RGB image group and the spectral image group, and then mapping the spectral information having aligned the position of the spectral three-dimensional point cloud with the position of the RGB three-dimensional point cloud.

Fig. 5 illustrates a second configuration example of the first embodiment of the image processing device, in which the spectral three-dimensional model is generated by generating a three-dimensional point cloud for both the RGB image group and the spectral image group, and then mapping the spectral information having aligned the position of the spectral three-dimensional point cloud with the position of the RGB three-dimensional point cloud.

The image processing device 101 in Fig. 5 includes an RGB camera 131, a spectral camera 132, three-dimensional reconfiguring units 133 and 134, a three-dimensional point cloud alignment processing unit 135, a corresponding point cloud extraction processing unit 136, and a spectral information mapping processing unit 137.

The RGB camera 131 and the spectral camera 132 correspond to the RGB camera 111 and the spectral camera 112, respectively. The RGB camera 131 and the spectral camera 132 capture the RGB image group and the spectral image group, respectively, and output the RGB image group and the spectral image group to the three-dimensional reconfiguring units 133 and 134.

The three-dimensional reconfiguring unit 133 reconfigures the RGB three-dimensional point cloud information on the basis of the RGB image group and outputs the result to the three-dimensional point cloud alignment processing unit 135 as RGB three-dimensional point cloud information.

The three-dimensional reconfiguring unit 134 reconfigures the three-dimensional point cloud information of the spectral information on the basis of the spectral image group and outputs the result to the three-dimensional point cloud alignment processing unit 135 as spectral three-dimensional point cloud information.

The three-dimensional point cloud alignment processing unit 135 generates three-dimensional point cloud information including both RGB and spectral information by aligning the positions of the RGB three-dimensional point cloud and the spectral three-dimensional point cloud, and outputs that information to the corresponding point cloud extraction processing unit 136.

The corresponding point cloud extraction processing unit 136 extracts, in association with each point in the RGB three-dimensional point cloud, information of the three-dimensional point cloud in nearby spectral information present within a predetermined distance, for example, and outputs that information to the spectral information mapping processing unit 137.

The spectral information mapping processing unit 137 generates a spectral three-dimensional model by mapping the spectral information at each point in the RGB three-dimensional point cloud using the nearby spectral information extracted in association with each of the RGB three-dimensional point clouds by the corresponding point cloud extraction processing unit 136.

More specifically, using the spectral information present within the predetermined distance, extracted in association with each point in the RGB three-dimensional point cloud, the spectral information mapping processing unit 137 generates spectral information for each point in the RGB three-dimensional point cloud, and then maps the generated spectral information to each of the RGB three-dimensional point clouds to generate the spectral three-dimensional model.

The spectral information mapping processing unit 137 generates the spectral information for each point in the RGB three-dimensional point cloud by calculating an average value of the spectral information present within the predetermined distance, a weighted average value according to the distance, or the like, extracted in association with each point in the RGB three-dimensional point cloud.

Such a configuration makes it possible to generate the spectral three-dimensional model by generating the RGB three-dimensional point cloud and the spectral three-dimensional point cloud from the RGB image group and the spectral image group, aligning the point clouds, and performing mapping based on the spectral information extracted in association with each point in the RGB three-dimensional point cloud.

As a result, a spectral three-dimensional image from a desired viewpoint position can be generated on the basis of the spectral three-dimensional model.

### <Spectral Three-Dimensional Model Generation Processing by Image Processing Device in Fig. 5>

Spectral three-dimensional model generation processing by the image processing device 101 in Fig. 5 will be described next with reference to the flowchart in Fig. 6.

In step S31, the RGB camera 131 configures an RGB image group by capturing a subject from a plurality of angles, and outputs the RGB image group to the three-dimensional reconfiguring unit 133.

In step S32, the spectral camera 132 configures a spectral image group by capturing a spectral image from a plurality of angles, and outputs the spectral image group to the three-dimensional reconfiguring unit 134.

In step S33, the three-dimensional reconfiguring unit 133 generates an RGB three-dimensional point cloud on the basis of the RGB image group and outputs the result to the three-dimensional point cloud alignment processing unit 135.

In step S34, the three-dimensional reconfiguring unit 134 generates a spectral three-dimensional point cloud on the basis of the spectral image group and outputs the result to the three-dimensional point cloud alignment processing unit 135.

In step S35, the three-dimensional point cloud alignment processing unit 135 generates three-dimensional point cloud information in which RGB and spectral information are mixed by aligning the positions of the RGB three-dimensional point cloud and the spectral three-dimensional point cloud, and outputs that information to the corresponding point cloud extraction processing unit 136.

In step S36, the corresponding point cloud extraction processing unit 136 extracts the spectral information present within a predetermined distance in association with each point in the RGB three-dimensional point cloud on the basis of the three-dimensional point cloud information in which the RGB and spectral information are mixed, and outputs the result to the spectral information mapping processing unit 137.

In step S37, the spectral information mapping processing unit 137 generates a spectral three-dimensional model by mapping, to each point in the RGB three-dimensional point cloud, an average value of the spectral information present within the predetermined distance, a weighted average value according to the distance, or the like as the spectral information, supplied from the corresponding point cloud extraction processing unit 136 having been extracted in association with each point in the RGB three-dimensional point cloud.

Such processing makes it possible to generate the spectral three-dimensional model by generating the RGB three-dimensional point cloud and the spectral three-dimensional point cloud from the RGB image group and the spectral image group, aligning the point clouds, and performing mapping based on the spectral information extracted in association with each point in the RGB three-dimensional point cloud.

As a result, a spectral three-dimensional image from a desired viewpoint position can be generated on the basis of the spectral three-dimensional model.

### <2-3. Third Configuration Example of First Embodiment>

The foregoing described an example of generating a spectral three-dimensional model by obtaining a three-dimensional point cloud from each of an RGB image group and a spectral image group, aligning the positions thereof, compositing the RGB three-dimensional point cloud and the spectral three-dimensional point cloud, and then mapping spectral information onto the RGB three-dimensional point cloud.

However, three-dimensional point cloud information in which the RGB three-dimensional point cloud and the spectral three-dimensional point cloud are mixed may be obtained directly from the RGB image group and the spectral image group, and the spectral three-dimensional model may be generated by mapping the spectral information onto the RGB three-dimensional point cloud in RGB + spectral three-dimensional point cloud information. In the following, three-dimensional point cloud information in which the RGB three-dimensional point cloud and the spectral three-dimensional point cloud are mixed, obtained directly from the RGB image group and the spectral image group, will also be called "RGB + spectral three-dimensional point cloud information".

Fig. 7 illustrates a third configuration example of the first embodiment of the image processing device, in which RGB + spectral three-dimensional point cloud information in which the RGB three-dimensional point cloud and the spectral three-dimensional point cloud are mixed is obtained directly from the RGB image group and the spectral image group, and the spectral three-dimensional model is generated by mapping the spectral information onto the RGB three-dimensional point cloud in the RGB + spectral three-dimensional point cloud information.

The image processing device 101 in Fig. 7 includes an RGB camera 151, a spectral camera 152, a three-dimensional reconfiguring unit 153, a corresponding point cloud extraction processing unit 154, and a spectral information mapping processing unit 155.

The RGB camera 151 and the spectral camera 152 correspond to the RGB camera 111 and the spectral camera 112, respectively. The RGB camera 151 and the spectral camera 152 capture the RGB image group and the spectral image group, respectively, and output the RGB image group and the spectral image group to the three-dimensional reconfiguring units 133 and 134.

The three-dimensional reconfiguring unit 153 reconfigures RGB + spectral three-dimensional point cloud information, which is three-dimensional point cloud information in which RGB and spectral information are mixed, on the basis of the RGB image group and the spectral image group, and outputs the result to the corresponding point cloud extraction processing unit 154.

The corresponding point cloud extraction processing unit 154 corresponds to the corresponding point cloud extraction processing unit 136. On the basis of the RGB + spectral three-dimensional point cloud information, the corresponding point cloud extraction processing unit 154 extracts, in association with each point in the RGB three-dimensional point cloud, information of the three-dimensional point cloud in nearby spectral information present within a predetermined distance, for example, and outputs that information to the spectral information mapping processing unit 155.

The spectral information mapping processing unit 155 corresponds to the spectral information mapping processing unit 137, and generates a spectral three-dimensional model by mapping the spectral information at each point in the RGB three-dimensional point cloud using the spectral information of the nearby spectral three-dimensional point cloud extracted in association with each of the RGB three-dimensional point clouds by the corresponding point cloud extraction processing unit 154.

Such a configuration makes it possible to generate a spectral three-dimensional model by generating RGB + spectral three-dimensional point cloud information, which is a three-dimensional point cloud in which RGB and spectral information are mixed, from the RGB image group and the spectral image group, and performing mapping based on the spectral information extracted in association with each point in the RGB three-dimensional point cloud on the basis of the RGB + spectral three-dimensional point cloud information.

As a result, a spectral three-dimensional image from a desired viewpoint position can be generated on the basis of the spectral three-dimensional model.

### <Spectral Three-Dimensional Model Generation Processing by Image Processing Device in Fig. 7>

Spectral three-dimensional model generation processing by the image processing device 101 in Fig. 7 will be described next with reference to the flowchart in Fig. 8.

In step S51, the RGB camera 151 configures an RGB image group by capturing a subject from a plurality of angles, and outputs the RGB image group to the three-dimensional reconfiguring unit 153.

In step S52, the spectral camera 152 configures a spectral image group by capturing a spectral image from a plurality of angles, and outputs the spectral image group to the three-dimensional reconfiguring unit 153.

In step S53, the three-dimensional reconfiguring unit 153 generates RGB + spectral three-dimensional point cloud information, which is a three-dimensional point cloud in which RGB and spectral information are mixed, on the basis of the RGB image group and the spectral image group, and outputs the result to the corresponding point cloud extraction processing unit 154.

In step S54, the corresponding point cloud extraction processing unit 154 extracts the spectral information present within a predetermined distance in association with each point in the RGB three-dimensional point cloud on the basis of the RGB + spectral three-dimensional point cloud information, which is three-dimensional point cloud information in which the RGB and spectral information are mixed, and outputs the result to the spectral information mapping processing unit 155.

In step S55, the spectral information mapping processing unit 155 generates a spectral three-dimensional model by mapping, to each point in the RGB three-dimensional point cloud, an average value of the spectral information present within the predetermined distance, a weighted average value according to the distance, or the like as the spectral information, supplied from the corresponding point cloud extraction processing unit 154 having been extracted in association with each point in the RGB three-dimensional point cloud.

The foregoing processing makes it possible to generate a spectral three-dimensional model by generating RGB + spectral three-dimensional point cloud information, which is a three-dimensional point cloud in which RGB and spectral information are mixed, from the RGB image group and the spectral image group, and performing mapping based on the spectral information extracted in association with each point in the RGB three-dimensional point cloud on the basis of the RGB + spectral three-dimensional point cloud information.

As a result, a spectral three-dimensional image from a desired viewpoint position can be generated on the basis of the spectral three-dimensional model.

### <2-4. Fourth Configuration Example of First Embodiment>

The foregoing has described an example in which a spectral three-dimensional model is generated by performing mapping based on spectral information extracted in association with each point in an RGB three-dimensional point cloud on the basis of RGB + spectral three-dimensional point cloud information generated from the RGB image group and the spectral image group.

However, a spectral three-dimensional model may be generated by reconfiguring a three-dimensional image group corresponding to each of the RGB images on the basis of the RGB image group, and mapping the spectral information of the spectral image group.

Fig. 9 is a fourth configuration example of the first embodiment of the image processing device in which a spectral three-dimensional model is generated by reconfiguring a three-dimensional image group corresponding to each of the RGB images on the basis of the RGB image group, and mapping the spectral information of the spectral image group onto the three-dimensional image group.

The image processing device 101 in Fig. 9 includes an RGB camera 171, a spectral camera 172, a three-dimensional reconfiguring unit 173, and a spectral information mapping processing unit 174.

The RGB camera 171 and the spectral camera 172 correspond to the RGB camera 111 and the spectral camera 112, respectively. The RGB camera 171 and the spectral camera 172 capture the RGB image group and the spectral image group, respectively, and output the RGB image group and the spectral image group to the three-dimensional reconfiguring unit 173 and the spectral information mapping processing unit 174.

Here, it is assumed that the positional relationship between the RGB camera 171 and the spectral camera 172 is fixed, and information on the positional relationship between the RGB camera 171 and the spectral camera 172 is obtained in advance through stereo calibration or the like.

The three-dimensional reconfiguring unit 173 reconfigures an RGB three-dimensional image group corresponding to each of the RGB image groups on the basis of the RGB image groups, and outputs the result to the spectral information mapping processing unit 174.

In addition, when generating the RGB three-dimensional images, the three-dimensional reconfiguring unit 173 can generate attitude information of the RGB camera 171 from the information of each of the generated RGB three-dimensional images, and thus the attitude information of the RGB camera 171 is also output to the spectral information mapping processing unit 174 in association with the RGB three-dimensional images.

The spectral information mapping processing unit 174 generates a spectral three-dimensional model by mapping the spectral information in the spectral image group onto the three-dimensional image group on the basis of the RGB three-dimensional image group supplied from the three-dimensional reconfiguring unit 173 and the corresponding camera attitude information of the RGB camera 171.

In other words, it is assumed here that the positional relationship between the RGB camera 171 and the spectral camera 172 is obtained in advance through stereo calibration. Accordingly, for each RGB three-dimensional image, the spectral information mapping processing unit 174 obtains attitude information of the spectral camera 172 on the basis of the attitude information of the RGB camera 171, and maps the spectral information onto positions in the spectral image and positions in the corresponding RGB three-dimensional images.

However, because the RGB three-dimensional image does not have a scale, it is necessary, to form a three-dimensional model that matches the actual dimensions of the captured subject, to devise a way in which scale information can be obtained from the RGB image, by including information usable as a scale in the RGB images captured by the RGB camera 171.

In other words, for example, an RGB image or a spectral image may be captured such that a ruler or an object of a known size falls within the angles of view of the RGB camera 171 and the spectral camera 172.

Such a configuration makes it possible to generate a spectral three-dimensional model by generating an RGB three-dimensional image group from the RGB image group, and mapping spectral information onto the RGB three-dimensional images on the basis of the spectral image group.

As a result, a spectral three-dimensional image from a desired viewpoint position can be generated on the basis of the spectral three-dimensional model.

### <Spectral Three-Dimensional Model Generation Processing by Image Processing Device in Fig. 9>

Spectral three-dimensional model generation processing by the image processing device 101 in Fig. 9 will be described next with reference to the flowchart in Fig. 10.

In step S71, the RGB camera 171 configures an RGB image group by capturing a subject from a plurality of angles, and outputs the RGB image group to the three-dimensional reconfiguring unit 173.

In step S72, the spectral camera 172 configures a spectral image group by capturing a spectral image from a plurality of angles, and outputs the spectral image group to the spectral information mapping processing unit 174.

In step S73, the three-dimensional reconfiguring unit 173 reconfigures RGB three-dimensional point cloud information on the basis of the RGB image groups, generates an RGB three-dimensional image group corresponding to each RGB image group, and outputs the result to the spectral information mapping processing unit 174.

In addition, when generating the RGB three-dimensional images, the three-dimensional reconfiguring unit 173 can generate attitude information of the RGB camera 171 from the information of each of the generated RGB three-dimensional images, and thus the attitude information of the RGB camera 171 is also output to the spectral information mapping processing unit 174.

In step S74, the spectral information mapping processing unit 174 resets a counter f for counting frame numbers of the RGB three-dimensional image group and the spectral image group, respectively, to 1.

In step S75, the spectral information mapping processing unit 174 maps the spectral information of the spectral image of the corresponding frame number f to each position where RGB information is located in the three-dimensional image of the frame number f, on the basis of the RGB three-dimensional image of the frame number f and the corresponding attitude information of the RGB camera 171.

In other words, it is assumed here that the positional relationship between the RGB camera 171 and the spectral camera 172 is obtained in advance through stereo calibration or the like. Accordingly, the spectral information mapping processing unit 174 obtains attitude information of the spectral camera 172 on the basis of the attitude information of the RGB camera 171 in the RGB three-dimensional image of the frame number f, and maps the spectral information in the spectral image to the corresponding positions in the RGB three-dimensional image.

At this time, by devising a way in which the RGB camera 171 captures RGB images in which a ruler, an object of a known size, or the like appears in the image, the spectral information mapping processing unit 174 generates a three-dimensional image in which the spectral information is mapped, including information indicating the positional relationship, such as a scale, in a three-dimensional space, of each pixel in the RGB three-dimensional image, for example.

In step S76, the spectral information mapping processing unit 174 determines whether the counter f is lower than the frame number N, and if the counter f is lower than the frame number N, the sequence moves to step S77.

In step S77, the spectral information mapping processing unit 174 increments the counter f by 1, and the sequence returns to step S75.

In other words, the processing of steps S75 to S77 is repeated until the spectral information is mapped for all N frames, which is the number of images included in each of the RGB three-dimensional image group and the spectral image group.

If in step S76 the counter f is determined not to be lower than N and the spectral information is therefore determined to have been mapped to all the three-dimensional image groups, the sequence moves to step S78.

In step S78, the spectral information mapping processing unit 174 generates and outputs the spectral three-dimensional model on the basis of the three-dimensional image group to which the spectral information has been mapped.

Such processing makes it possible to generate a spectral three-dimensional model by generating an RGB three-dimensional image group from the RGB image group, and mapping spectral information onto the RGB three-dimensional images on the basis of the spectral image group.

As a result, a spectral three-dimensional image from a desired viewpoint position can be generated on the basis of the spectral three-dimensional model.

### <2-5. Fifth Configuration Example of First Embodiment>

The foregoing described an example in which a spectral three-dimensional model is generated by reconfiguring a three-dimensional image group corresponding to each of the RGB images on the basis of the RGB image group, and mapping the spectral information of the spectral image group.

However, a spectral three-dimensional model may be generated by obtaining a three-dimensional image group constituted by range images from a range camera rather than an RGB camera, and mapping the spectral information of the spectral image group.

Fig. 11 is a fifth configuration example of the first embodiment of the image processing device in which a range camera is provided instead of an RGB camera, and a spectral three-dimensional model is generated by supplying a three-dimensional image group corresponding to range images and mapping the spectral information of the spectral image group onto the three-dimensional image group.

The image processing device 101 in Fig. 11 includes a range camera 191, a spectral camera 192, a camera attitude estimating unit 193, a spectral information mapping processing unit 194, and a three-dimensional reconfiguring unit 195.

The range camera 191 is what is known as a "depth camera", and is provided instead of the RGB camera 111. The range camera 191 captures a plurality of range images including a subject while changing an angle, and outputs the range images to the camera attitude estimating unit 193 and the spectral information mapping processing unit 194 as a three-dimensional image group.

The spectral camera 192 corresponds to the spectral camera 112, capturing a spectral image group and outputting the spectral image group to the spectral information mapping processing unit 194.

Here, it is assumed that the positional relationship between the range camera 191 and the spectral camera 192 is fixed, and information indicating the positional relationship between the range camera 191 and the spectral camera 192 is obtained in advance through stereo calibration or the like.

In addition, if the light source used for the image capturing by the range camera 191 may affect the image capturing by the spectral camera 192, e.g., if the light source is an infrared light source or the like, it is necessary to shift the image capture timings of the range camera 191 and the spectral camera 192 from each other.

For each three-dimensional image in the three-dimensional image group, the camera attitude estimating unit 193 estimates the attitude of the range camera 191 on the basis of information on the distance to the subject of the three-dimensional image, adds the estimation result to the three-dimensional image in association therewith, and outputs these to the three-dimensional reconfiguring unit 195.

The spectral information mapping processing unit 194 generates a spectral information mapping image group by mapping spectral information in the spectral image group onto the corresponding three-dimensional image group supplied from the range camera 191.

In other words, it is assumed here that the positional relationship between the range camera 191 and the spectral camera 192 is obtained in advance through calibration. Accordingly, for each of the three-dimensional images, the spectral information mapping processing unit 194 maps the spectral information to positions in the spectral image and corresponding positions in the three-dimensional image, on the basis of the positional relationship between the range camera 191 and the spectral camera 192, and generates a spectral information mapping image group (a spectral information mapping three-dimensional image group).

The three-dimensional reconfiguring unit 195 reconfigures and outputs a spectral three-dimensional model from: the spectral information mapping image group (the spectral information mapping three-dimensional image group) supplied from the spectral information mapping processing unit 194; and the result of estimating the attitude of the range camera 191 added to each of the three-dimensional image groups supplied from the camera attitude estimating unit 193.

Such a configuration makes it possible to generate a spectral three-dimensional model by obtaining a three-dimensional image group constituted by range images from a range camera and mapping the spectral information of the spectral image group.

As a result, a spectral three-dimensional image from a desired viewpoint position can be generated on the basis of the spectral three-dimensional model.

### <Spectral Three-Dimensional Model Generation Processing by Image Processing Device in Fig. 11>

Spectral three-dimensional model generation processing by the image processing device 101 in Fig. 9 will be described next with reference to the flowchart in Fig. 12.

In step S91, the range camera 191 configures a three-dimensional image group constituted by a plurality of range images by capturing a range image of a subject from a plurality of angles, and outputs the three-dimensional image group to the camera attitude estimating unit 193 and the spectral information mapping processing unit 194.

In step S92, the spectral camera 192 configures a spectral image group by capturing a spectral image from a plurality of angles, and outputs the spectral image group to the spectral information mapping processing unit 194.

In step S93, the camera attitude estimating unit 193 estimates the attitude of the range camera 191 on the basis of the three-dimensional image group, and outputs the attitude information of the range camera 191, serving as the result of the estimation, to the three-dimensional reconfiguring unit 195 in association with the three-dimensional image.

In step S94, the spectral information mapping processing unit 194 resets a counter f for counting frame numbers of the three-dimensional image group and the spectral image group, respectively, to 1.

In step S95, the spectral information mapping processing unit 194 maps the spectral information of the corresponding spectral image to each position where range information of the three-dimensional image of the frame number f is located, on the basis of the information on the positional relationship between the range camera 191 and the spectral camera 192, and outputs a spectral information mapping image group (spectral information mapping three-dimensional image group) to the three-dimensional reconfiguring unit 195.

In step S96, the three-dimensional reconfiguring unit 195 determines whether the counter f is lower than the frame number N, and if the counter f is lower than the frame number N, the sequence moves to step S97.

In step S97, the three-dimensional reconfiguring unit 195 increments the counter f by 1, and the sequence returns to step S95.

In other words, the processing of steps S95 to S97 is repeated until the spectral information is mapped for all N frames, which is the number of images included in each of the three-dimensional image group and the spectral image group.

If in step S96 the counter f is determined not to be lower than N and the spectral information is therefore determined to have been mapped to all the three-dimensional image groups, the sequence moves to step S98.

In step S98, the three-dimensional reconfiguring unit 195 generates and outputs a spectral three-dimensional model on the basis of the three-dimensional image group to which the spectral information has been mapped and the attitude information of the range camera 191 supplied from the camera attitude estimating unit 193.

The foregoing processing makes it possible to generate a spectral information mapping image by obtaining a three-dimensional image group constituted by a range image group captured by a range camera and attitude information of the range camera, and mapping the spectral information of the spectral image group to the obtained three-dimensional image group, and then generate a spectral three-dimensional model from the spectral information mapping image and the attitude information of the range camera.

As a result, a spectral three-dimensional image from a desired viewpoint position can be generated on the basis of the spectral three-dimensional model.

### <2-6. Sixth Configuration Example of First Embodiment>

The foregoing described an example of generating a spectral three-dimensional model by obtaining a three-dimensional image group constituted by range images from a range camera and mapping the spectral information of the spectral image group to the obtained three-dimensional image group.

However, a spectral three-dimensional model may be generated by generating a spectral information mapping image group from the RGB image group and the spectral image group; generating an RGB three-dimensional model, which is a three-dimensional model in RGB, and attitude information of the RGB camera from the RGB image group; and mapping the spectral information onto the RGB three-dimensional model.

Fig. 13 is a sixth configuration example of the first embodiment of the image processing device in which a spectral three-dimensional model is generated by generating a spectral information mapping image group from the RGB image group and the spectral image group; generating an RGB three-dimensional model, which is a three-dimensional model in RGB, and attitude information of the RGB camera from the RGB image group; and mapping the spectral information onto the RGB three-dimensional model.

The image processing device 101 in Fig. 13 includes an RGB camera 211, a spectral camera 212, a three-dimensional reconfiguring unit 213, a spectral information mapping processing unit 214, a feature point matching processing unit 215, a pixel-by-pixel registration processing unit 216, and a mapping processing unit 217.

The RGB camera 211 corresponds to the RGB camera 111. The RGB camera 111 configures an RGB image group by capturing a subject from a plurality of angles, and outputs the RGB image group to the three-dimensional reconfiguring unit 213 and the feature point matching processing unit 215.

The spectral camera 212 corresponds to the spectral camera 112. The spectral camera 212 configures a spectral image group by capturing a spectral image from a plurality of angles, and outputs the spectral image group to the feature point matching processing unit 215.

The feature point matching processing unit 215, the pixel-by-pixel registration processing unit 216, and the mapping processing unit 217 correspond to the feature point matching processing unit 113, the pixel-by-pixel registration processing unit 114, and the mapping processing unit 115, respectively. These units generate a spectral information mapping image group from the RGB image group and the spectral image group, and output the result to the spectral information mapping processing unit 214.

The three-dimensional reconfiguring unit 213 generates RGB three-dimensional point cloud information from the RGB image group, generates an RGB three-dimensional model, which is a three-dimensional model in RGB, based on the three-dimensional point cloud information, generates attitude information of the RGB camera for each RGB image, and outputs the results to the spectral information mapping processing unit 214.

The spectral information mapping processing unit 214 generates and outputs a spectral three-dimensional model on the basis of the RGB three-dimensional model, the attitude information of the RGB camera 211, and the spectral information mapping image group.

More specifically, the spectral information mapping processing unit 214 generates the spectral three-dimensional model by mapping the spectral information in the spectral information mapping image corresponding to the attitude information of the RGB camera 211 onto the RGB three-dimensional model.

Such a configuration makes it possible to generate a spectral three-dimensional model by generating a spectral information mapping image group from the RGB image group and the spectral image group; generating an RGB three-dimensional model, which is a three-dimensional model in RGB, and attitude information of the RGB camera from the RGB image group; and mapping the spectral information onto the RGB three-dimensional model.

As a result, a spectral three-dimensional image from a desired viewpoint position can be generated on the basis of the spectral three-dimensional model.

### <Spectral Three-Dimensional Model Generation Processing by Image Processing Device in Fig. 13>

Spectral three-dimensional model generation processing by the image processing device 101 in Fig. 13 will be described next with reference to the flowchart in Fig. 14.

In step S111, the RGB camera 211 configures an RGB image group by capturing a subject from a plurality of angles, and outputs the RGB image group to the three-dimensional reconfiguring unit 213 and the feature point matching processing unit 215.

In step S112, the spectral camera 212 configures a spectral image group by capturing a spectral image from a plurality of angles, and outputs the spectral image group to the feature point matching processing unit 215.

In step S113, the feature point matching processing unit 215 resets a counter f for counting frame numbers of the RGB image group and the spectral image group, respectively, to 1.

In step S114, the feature point matching processing unit 215 extracts feature points from each of the RGB image and the spectral image of the frame number f, matches the extracted feature points, and outputs information on the matched feature points to the pixel-by-pixel registration processing unit 216 along with the RGB image group and the spectral image group of the frame number f.

In step S115, the pixel-by-pixel registration processing unit 216 generates registration information by registering the pixels of the feature points in the RGB image and the pixels of the feature points in the spectral image, matched and supplied from the feature point matching processing unit 215, in association with each other through registration processing, and outputs the registration information to the mapping processing unit 217 along with the RGB image group and the spectral image group.

In step S116, the mapping processing unit 217 generates, on the basis of the registration information supplied from the pixel-by-pixel registration processing unit 216, a spectral information mapping image in which spectral information is mapped to each pixel in the RGB image of the frame number f, by mapping, onto each pixel in the RGB image, the spectral information in the spectral image registered in association therewith, and outputs the spectral information mapping image to the spectral information mapping processing unit 214 as a spectral information mapping image of the frame number f.

At this time, the spectral information mapping processing unit 214 stores the spectral information mapping image of the frame number f in association with the frame number f.

In step S117, the feature point matching processing unit 215 determines whether the counter f is lower than the frame number N, and if the counter f is lower than the frame number N, the sequence moves to step S118.

In step S118, the feature point matching processing unit 215 increments the counter f by 1, and the sequence returns to step S114.

In other words, the processing of steps S114 to S118 is repeated until a spectral information mapping image is generated for all N frames, which is the number of images included in each of the RGB image group and the spectral image group.

If in step S117 the counter f is determined not to be lower than N and all the spectral information mapping images are therefore determined to have been generated, the sequence moves to step S119.

In step S119, the three-dimensional reconfiguring unit 213 reconfigures the RGB three-dimensional model by configuring RGB three-dimensional point cloud information on the basis of the RGB image group, and outputs the result to the spectral information mapping processing unit 214.

In addition, when generating the RGB three-dimensional model, the three-dimensional reconfiguring unit 213 also generates attitude information of the RGB camera 211 in each of the RGB image groups, associates the attitude information with each of the RGB images, and outputs the result to the spectral information mapping processing unit 214.

In step S120, the spectral information mapping processing unit 214 generates the spectral three-dimensional model by mapping the spectral information in the spectral information mapping image corresponding to the attitude information of the RGB camera 211 onto the RGB three-dimensional model, on the basis of the RGB three-dimensional model, the attitude information of the RGB camera 211, and the spectral information mapping image group.

The foregoing processing makes it possible to generate a spectral three-dimensional model by generating a spectral information mapping image group from the RGB image group and the spectral image group; generating an RGB three-dimensional model, which is a three-dimensional model in RGB, and attitude information of the RGB camera from the RGB image group; and mapping the spectral information of the spectral information mapping image group onto the RGB three-dimensional model on the basis of the attitude information of the RGB camera.

As a result, a spectral three-dimensional image from a desired viewpoint position can be generated on the basis of the spectral three-dimensional model.

### <2-7. Seventh Configuration Example of First Embodiment>

The foregoing described an example in which a spectral three-dimensional model is generated by generating a spectral information mapping image group from an RGB image group and a spectral image group; generating an RGB three-dimensional model, which is a three-dimensional model in RGB, and attitude information of an RGB camera from the RGB image group; and mapping spectral information onto the RGB three-dimensional model.

However, a range image group and attitude information of all cameras may be reconfigured from the RGB image group and the spectral image group, a three-dimensional point cloud of RGB + spectral information may be generated from the range image group of all cameras, and a three-dimensional model of the RGB + spectral information may be generated.

A spectral information mapping image group may then be generated by mapping the spectral information in the spectral image group onto the RGB image group from the range image group and the attitude information, and a spectral three-dimensional model may be generated by mapping the spectral information onto the three-dimensional model of the RGB + spectral information on the basis of the information in the spectral information mapping image group.

Fig. 15 illustrates a seventh configuration example of the first embodiment of the image processing device in which a spectral three-dimensional model is generated by reconfiguring a range image group and attitude information of all cameras from the RGB image group and the spectral image group, generating a three-dimensional model of the RGB + spectral information from the range image group of all cameras, generating a spectral information mapping image group by mapping the spectral information in the spectral image group onto each RGB image group from the range image group and the attitude information, and furthermore, mapping the spectral information onto the three-dimensional model of the RGB + spectral information on the basis of the information of the spectral information mapping image group.

The image processing device 101 in Fig. 15 includes an RGB camera 231, a spectral camera 232, a three-dimensional reconfiguring unit 233, a mapping processing unit 234, and a spectral information mapping processing unit 235.

The RGB camera 231 and the spectral camera 232 correspond to the RGB camera 111 and the spectral camera 112, respectively. The RGB camera 231 and the spectral camera 232 capture the RGB image group and the spectral image group, respectively, and output those image groups to the three-dimensional reconfiguring unit 233.

The three-dimensional reconfiguring unit 233 generates a three-dimensional model of RGB + spectral information by reconfiguring the range image group and attitude information of all cameras on the basis of the RGB image group and the spectral image group and generating three-dimensional point cloud information of the RGB + spectral information from the range image group of all cameras, and outputs the three-dimensional model to the spectral information mapping processing unit 235.

The three-dimensional reconfiguring unit 233 also outputs the range image group and attitude information of all cameras, generated when generating the three-dimensional model of the RGB + spectral information, to the mapping processing unit 234 along with the RGB image group and the spectral image group.

The mapping processing unit 234 generates a spectral information mapping image by mapping the spectral information in the spectral image onto the corresponding RGB image on the basis of the range image group and the attitude information of all cameras, and outputs the results to the spectral information mapping processing unit 235 as a spectral information mapping image group.

The spectral information mapping processing unit 235 generates a spectral three-dimensional model by mapping the spectral information onto the three-dimensional model constituted by the RGB + spectral information supplied from the three-dimensional reconfiguring unit 233 on the basis of the spectral information mapping image group supplied from the mapping processing unit 234.

Such a configuration makes it possible to generate a spectral three-dimensional model by reconfiguring a range image group of all cameras from the RGB image group and the spectral image group, generating a three-dimensional model of the RGB + spectral information from the range image group of all cameras, generating a spectral information mapping image group by mapping the spectral information in the spectral image group onto each RGB image group from the range image group and the attitude information, and furthermore, mapping the spectral information onto the three-dimensional model of the RGB + spectral information on the basis of the information of the spectral information mapping image group.

As a result, a spectral three-dimensional image from a desired viewpoint position can be generated on the basis of the spectral three-dimensional model.

### <Spectral Three-Dimensional Model Generation Processing by Image Processing Device in Fig. 15>

Spectral three-dimensional model generation processing by the image processing device 101 in Fig. 15 will be described next with reference to the flowchart in Fig. 16.

In step S131, the RGB camera 231 configures an RGB image group by capturing a subject from a plurality of angles, and outputs the RGB image group to the three-dimensional reconfiguring unit 233.

In step S132, the spectral camera 232 configures a spectral image group by capturing a spectral image from a plurality of angles, and outputs the spectral image group to the three-dimensional reconfiguring unit 233.

In step S133, the three-dimensional reconfiguring unit 233 reconfigures the range image group of all cameras on the basis of the RGB image group and the spectral image group, generates three-dimensional point cloud information of RGB + spectral information from the range image group of all cameras, and outputs that information to the spectral information mapping processing unit 235 as a three-dimensional model of the RGB + spectral information.

The three-dimensional reconfiguring unit 233 also outputs the attitude information and the range image group of all cameras, obtained when generating the three-dimensional model of the RGB + spectral information based on the RGB image group and the spectral image group, to the mapping processing unit 234 along with the RGB image group and the spectral image group.

In step S134, the mapping processing unit 234 resets a counter f for counting the frame number of the range image group to 1.

In step S135, the mapping processing unit 234 maps the spectral information of the corresponding spectral image to each position in the RGB image of the frame number f on the basis of the range image of the frame number f and the attitude information of the RGB camera 231 and the spectral camera 232, and outputs the result as a spectral information mapping image.

In step S136, the mapping processing unit 234 determines whether the counter f is lower than the frame number N, and if the counter f is lower than the frame number N, the sequence moves to step S137.

In step S137, the spectral information mapping processing unit 234 increments the counter f by 1, and the sequence returns to step S135.

In other words, the processing of steps S135 to S137 is repeated until the spectral information is mapped for all N frames, which is the number of images included in each of the RGB image group and the spectral image group.

If in step S136 the counter f is determined not to be lower than N and the spectral information is therefore determined to have been mapped to all the RGB image groups, the sequence moves to step S138.

In step S138, the spectral information mapping processing unit 235 generates and outputs a spectral three-dimensional model by mapping the spectral information onto the three-dimensional model constituted by the RGB + spectral information on the basis of the spectral information mapping image group.

The foregoing processing makes it possible to generate a spectral three-dimensional model by reconfiguring a range image group of all cameras from the RGB image group and the spectral image group, generating a three-dimensional model of the RGB + spectral information from the range image group of all cameras, generating attitude information of all cameras, generating a spectral information mapping image group by mapping the spectral information in the spectral image group onto each RGB image group from the range image group and the attitude information, and furthermore, mapping the spectral information onto the three-dimensional model of the RGB + spectral information on the basis of the information of the spectral information mapping image group.

As a result, a spectral three-dimensional image from a desired viewpoint position can be generated on the basis of the spectral three-dimensional model.

### <2-8. Eighth Configuration Example of First Embodiment>

The foregoing described an example of generating a spectral three-dimensional model by first generating a three-dimensional model of RGB + spectral information from an RGB image group and a spectral image group, generating a range image group and attitude information of all cameras, and generating a spectral information mapping image group by mapping the spectral information in the spectral image group onto each RGB image group from the range image group and the attitude information; and furthermore mapping the spectral information onto the three-dimensional model of the RGB + spectral information on the basis of the information of the spectral information mapping image group.

However, a real-scale spectral three-dimensional model may be generated by performing rescaling in which a range image group, obtained from three-dimensional reconfiguration based on the RGB image group, is compared with a real-scale range image group, obtained through stereo matching between the RGB camera and the spectral camera; rescaling an unscaled three-dimensional model obtained from the RGB image group to a real-scale three-dimensional model; and then mapping spectral information to the real-scale three-dimensional model.

Fig. 17 illustrates an eighth configuration example of the first embodiment of the image processing apparatus in which a real-scale spectral three-dimensional model is generated by performing rescaling in which a range image group, obtained from three-dimensional reconfiguration based on the RGB image group, is compared with a real-scale range image group, obtained through stereo matching between the RGB camera and the spectral camera; rescaling an unscaled three-dimensional model based on the RGB image group to a real-scale three-dimensional model; and then mapping spectral information to the real-scale three-dimensional model.

The image processing device 101 in Fig. 17 includes an RGB camera 251, a spectral camera 252, a three-dimensional reconfiguring unit 253, a rescaling processing unit 254, a spectral information mapping processing unit 255, a stereo calibration processing unit 256, a stereo matching processing unit 257, and a mapping processing unit 258.

The RGB camera 251 and the spectral camera 252 correspond to the RGB camera 111 and the spectral camera 112, respectively. The RGB camera 251 and the spectral camera 252 capture the RGB image group and the spectral image group, respectively, and output those image groups to the three-dimensional reconfiguring unit 253, the stereo calibration processing unit 256, and the mapping processing unit 258.

The three-dimensional reconfiguring unit 253 generates an unscaled RGB three-dimensional model by reconfiguring the RGB three-dimensional point cloud information on the basis of the RGB image group, and outputs the result to the rescaling processing unit 254.

The three-dimensional reconfiguring unit 253 also outputs an unscaled range image group and attitude information of the RGB camera 231, generated when generating the RGB three-dimensional model, to the rescaling processing unit 254.

Note that the range image group generated by the three-dimensional reconfiguring unit 253 is constituted by range images having no scale, and can therefore be said to essentially be a three-dimensional image group constituted by RGB three-dimensional images having no scale information.

The rescaling processing unit 254 obtains a real-scale range image group supplied from the stereo matching processing unit 257 and relative attitude information for the RGB camera 251 and the spectral camera 252, rescales the unscaled three-dimensional model supplied from the three-dimensional reconfiguring unit 253 into a real-scale three-dimensional model on the basis of a comparison between the unscaled range image group and the real-scale range image group, and outputs the real-scale three-dimensional model to the spectral information mapping processing unit 255.

The stereo calibration processing unit 256 obtains the relative attitude information, which is information on the relative attitudes of the RGB camera 251 and the spectral camera 252, through stereo calibration, on the basis of the RGB image group and the spectral image group, and outputs the information to the stereo matching processing unit 257 along with the RGB image group and the spectral image group.

The stereo matching processing unit 257 generates a real-scale range image group on the basis of the RGB image group and the spectral image group using the relative attitude information for the RGB camera 251 and the spectral camera 252, through stereo matching, and outputs the real-scale range image group to the rescaling processing unit 254 and the mapping processing unit 258 along with the relative attitude information for the RGB camera 251 and the spectral camera 252.

The mapping processing unit 258 maps the spectral information in the spectral image group onto each RGB image group on the basis of the range image group and the relative attitude information for the RGB camera 251 and the spectral camera 252, and outputs the result to the spectral information mapping processing unit 255 as a spectral information mapping image group.

The spectral information mapping processing unit 255 generates a real-scale spectral three-dimensional model by mapping the spectral information onto the real-scale three-dimensional model supplied from the rescaling processing unit 254 on the basis of the spectral information mapping image group supplied from the mapping processing unit 258.

Such a configuration makes it possible to generate a real-scale spectral three-dimensional model by performing rescaling in which a range image group, obtained through three-dimensional reconfiguration based on the RGB image group, is compared with a real-scale range image group obtained through stereo matching between the RGB camera and the spectral camera, generating a real-scale three-dimensional model, and then mapping the spectral information onto the generated real-scale three-dimensional model.

As a result, a spectral three-dimensional image from a desired viewpoint position can be generated on the basis of the spectral three-dimensional model.

### <Spectral Three-Dimensional Model Generation Processing by Image Processing Device in Fig. 17>

Spectral three-dimensional model generation processing by the image processing device 101 in Fig. 17 will be described next with reference to the flowchart in Fig. 18.

In step S151, the RGB camera 251 configures an RGB image group by capturing a subject from a plurality of angles, and outputs the RGB image group to the three-dimensional reconfiguring unit 253, the stereo calibration processing unit 256, and the mapping processing unit 258.

In step S152, the spectral camera 252 configures a spectral image group by capturing a spectral image from a plurality of angles, and outputs the spectral image group to the stereo calibration processing unit 256 and the mapping processing unit 258.

In step S153, the three-dimensional reconfiguring unit 253 generates an unscaled RGB three-dimensional model by reconfiguring the RGB three-dimensional point cloud information on the basis of the RGB image group, and outputs the result to the rescaling processing unit 254.

The three-dimensional reconfiguring unit 253 also outputs an unscaled range image group and attitude information of the RGB camera 231, generated when generating the RGB three-dimensional model, to the rescaling processing unit 254.

In step S154, the stereo calibration processing unit 256 obtains the relative attitude information for the RGB camera 251 and the spectral camera 252 on the basis of the RGB image group and the spectral image group through stereo calibration, and outputs the information to the stereo matching processing unit 257 along with the RGB image group and the spectral image group.

In step S155, the stereo matching processing unit 257 generates a real-scale range image group on the basis of the RGB image group and the spectral image group through stereo matching performed using the relative attitude information for the RGB camera 251 and the spectral camera 252, which is the result of the stereo calibration, and outputs the real-scale range image group to the rescaling processing unit 254 and the mapping processing unit 258 along with the relative attitude information for the RGB camera 251 and the spectral camera 252.

In step S156, upon obtaining the real-scale range image group supplied from the stereo matching processing unit 257, the relative attitude information for the RGB camera 251 and the spectral camera 252, and the unscaled three-dimensional model, the range image group, and the attitude information of the RGB camera supplied from the three-dimensional reconfiguring unit 253, the rescaling processing unit 254 rescales the unscaled three-dimensional model to a real-scale three-dimensional model by comparing the range image group having no scale with the real-scale range image group, and outputs the real-scale three-dimensional model to the spectral information mapping processing unit 255.

In step S157, the mapping processing unit 258 resets a counter f for counting frame numbers of the RGB image group and the spectral image group, respectively, to 1.

In step S158, the mapping processing unit 258 maps the spectral information of the spectral image to each position in the corresponding RGB image of the frame number f on the basis of the real-scale range image and the relative attitude information, and outputs the result as a spectral information mapping image.

In step S159, the mapping processing unit 258 determines whether the counter f is lower than the frame number N, and if the counter f is lower than the frame number N, the sequence moves to step S160.

In step S160, the mapping processing unit 258 increments the counter f by 1, and the sequence returns to step S158.

In other words, the processing of steps S158 to S160 is repeated until the spectral information is mapped for all N frames, which is the number of images included in each of the RGB image group and the spectral image group.

If in step S159 the counter f is determined not to be lower than N and the spectral information is therefore determined to have been mapped to all the RGB image groups, the sequence moves to step S161.

In step S161, the spectral information mapping processing unit 255 generates a real-scale spectral three-dimensional model by mapping the spectral information onto the real-scale three-dimensional model supplied from the rescaling processing unit 254 on the basis of the spectral information mapping image group supplied from the mapping processing unit 258.

The foregoing processing makes it possible to generate a real-scale spectral three-dimensional model by performing rescaling in which a range image group, obtained through three-dimensional reconfiguration based on the RGB image group, is compared with a real-scale range image group obtained through stereo matching between the RGB camera and the spectral camera, generating a real-scale three-dimensional model, and then mapping the spectral information onto the generated real-scale three-dimensional model.

As a result, a spectral three-dimensional image from a desired viewpoint position can be generated on the basis of the spectral three-dimensional model.

### <2-9. Ninth Configuration Example of First Embodiment>

The foregoing described an example in which a real-scale spectral three-dimensional model is generated by rescaling a range image group, obtained through three-dimensional reconfiguration based on the RGB image group, by a comparison with a real-scale range image group obtained through stereo matching between the RGB camera and the spectral camera, generating a real-scale three-dimensional model, and then mapping spectral information onto the generated real-scale three-dimensional model.

However, the RGB camera and the spectral camera may be configured coaxially using a beam splitter or the like, for example, and the spectral three-dimensional model may be generated by mapping the spectral information of the spectral image to a three-dimensional model obtained through three-dimensional reconfiguration from the RGB image group.

Fig. 19 illustrates a ninth configuration example of the first embodiment of the image processing device in which the RGB camera and the spectral camera are configured coaxially using a beam splitter or the like, for example, and the spectral three-dimensional model is generated by mapping the spectral information of the spectral image to a three-dimensional model obtained through three-dimensional reconfiguration from the RGB image group.

The image processing device 101 in Fig. 19 includes an RGB camera 271, a spectral camera 272, a three-dimensional reconfiguring unit 273, and a spectral information mapping processing unit 274.

The RGB camera 271 and the spectral camera 272 correspond to the RGB camera 111 and the spectral camera 112, respectively, but are furthermore configured coaxially by using a beam splitter or the like, for example. The RGB camera 271 and the spectral camera 272 capture the RGB image group and the spectral image group, respectively, and output those image groups to the three-dimensional reconfiguring unit 273 and the spectral information mapping processing unit 274.

The three-dimensional reconfiguring unit 273 generates an RGB three-dimensional model by reconfiguring RGB three-dimensional point cloud information, which is three-dimensional point cloud information in RGB, on the basis of the RGB image group, and outputs the RGB three-dimensional model to the spectral information mapping processing unit 274 along with attitude information of the RGB camera 271.

The spectral information mapping processing unit 274 generates a spectral three-dimensional model by mapping the spectral information of the spectral image group onto corresponding points in the RGB three-dimensional point cloud using the RGB three-dimensional model, which is a three-dimensional model in RGB, and the attitude information of the RGB camera in each RGB image constituting the RGB image group.

In other words, in this example, the RGB image group and the spectral image group from the RGB camera 271 and the spectral camera 272 have the same optical axis, making it unnecessary to align the image groups with each other. Therefore, the attitude information of the RGB camera 271 can be treated as attitude information of the spectral camera 272, making the mapping of the spectral information to the RGB three-dimensional model relatively easy and highly accurate.

Such a configuration makes it possible to configure the RGB camera and the spectral camera coaxially using a beam splitter or the like, for example, and generate the spectral three-dimensional model by mapping the spectral information of the spectral image to a three-dimensional model obtained through three-dimensional reconfiguration from the RGB image group.

As a result, a spectral three-dimensional image from a desired viewpoint position can be generated on the basis of the spectral three-dimensional model.

### <Spectral Three-Dimensional Model Generation Processing by Image Processing Device in Fig. 19>

Spectral three-dimensional model generation processing by the image processing device 101 in Fig. 19 will be described next with reference to the flowchart in Fig. 20.

In step S171, the RGB camera 271 configures an RGB image group by capturing a subject from a plurality of angles, and outputs the RGB image group to the three-dimensional reconfiguring unit 273.

In step S172, the spectral camera 272 configures a spectral image group by capturing a spectral image from a plurality of angles, and outputs the spectral image group to the spectral information mapping processing unit 274.

In step S173, the three-dimensional reconfiguring unit 273 generates RGB three-dimensional point cloud information, which is a three-dimensional point cloud in RGB, as an RGB three-dimensional model, on the basis of the RGB image group, and outputs the RGB three-dimensional model to the spectral information mapping processing unit 274 along with attitude information of the RGB camera in each RGB image group.

In step S174, the spectral information mapping processing unit 274 generates a spectral three-dimensional model by reading out the spectral information of the corresponding spectral image on the basis of the attitude information of the RGB camera 271, and mapping the spectral information to the corresponding points in the three-dimensional point cloud constituting the RGB three-dimensional model.

Such processing makes it possible to configure the RGB camera and the spectral camera coaxially using a beam splitter or the like, for example, and generate the spectral three-dimensional model by mapping the spectral information of the spectral image to a three-dimensional model obtained through three-dimensional reconfiguration from the RGB image group.

As a result, a spectral three-dimensional image from a desired viewpoint position can be generated on the basis of the spectral three-dimensional model.

<2-10. Tenth Configuration Example of First Embodiment>

The foregoing described an example in which the RGB camera and the spectral camera are configured coaxially using a beam splitter or the like, for example, and the spectral three-dimensional model is generated by mapping the spectral information of the spectral image to a three-dimensional model obtained through three-dimensional reconfiguration from the RGB image group.

However, the RGB camera and the spectral camera may be configured coaxially using a beam splitter or the like, for example, and the spectral three-dimensional model may be generated by first generating spectral information mapping images by mapping the spectral information of the spectral images onto the RGB images, and then mapping the spectral information onto a three-dimensional model obtained through three-dimensional reconfiguration of the RGB image group on the basis of a spectral image mapping image group.

Fig. 21 is a tenth configuration example of the first embodiment of the image processing device, in which the RGB camera and the spectral camera are configured coaxially using a beam splitter or the like, for example, and the spectral three-dimensional model is generated by first generating spectral information mapping images by mapping the spectral information of the spectral images onto the RGB images, and then mapping the spectral information onto a three-dimensional model obtained through three-dimensional reconfiguration of the RGB image group on the basis of a spectral image mapping image group.

The image processing device 101 in Fig. 21 includes an RGB camera 291, a spectral camera 292, a three-dimensional reconfiguring unit 293, a spectral information mapping processing unit 294, and a mapping processing unit 295.

The RGB camera 291 and the spectral camera 292 correspond to the RGB camera 271 and the spectral camera 272, respectively, and are configured coaxially by using a beam splitter or the like, for example.

The RGB camera 291 captures an RGB image group and outputs the RGB image group to the three-dimensional reconfiguring unit 293 and the mapping processing unit 295.

The spectral camera 292 captures a spectral image group and outputs the spectral image group to the mapping processing unit 295.

The three-dimensional reconfiguring unit 293 generates an RGB three-dimensional model by reconfiguring RGB three-dimensional point cloud information, which is three-dimensional point cloud information in RGB, on the basis of the RGB image group, and outputs the RGB three-dimensional model to the spectral information mapping processing unit 294 along with attitude information of the RGB camera 291.

The mapping processing unit 295 generates a spectral information mapping image group by mapping the spectral information to each of the corresponding RGB images on the basis of the RGB image group and the spectral image group, and outputs the spectral information mapping image group to the spectral information mapping processing unit 294.

The spectral information mapping processing unit 294 generates a spectral three-dimensional model by mapping the spectral information of the spectral information mapping image group onto corresponding points in the RGB three-dimensional point cloud using the RGB three-dimensional model, which is three-dimensional point cloud information in RGB, and the attitude information of the RGB camera in each RGB image constituting the RGB image group.

In other words, in this example, the RGB image group and the spectral image group from the RGB camera 291 and the spectral camera 292 have the same optical axis, making it unnecessary to align the image groups with each other. Furthermore, the spectral information is mapped to the RGB image group to generate the spectral information mapping image group, which is mapped to the three-dimensional model, making the mapping of the spectral information to the RGB three-dimensional model relatively easy and highly accurate.

Such a configuration makes it possible to configure the RGB camera and the spectral camera coaxially using a beam splitter or the like, for example, and generate the spectral three-dimensional model by first generating spectral information mapping images by mapping the spectral information of the spectral images onto the RGB images, and then mapping the spectral information onto a three-dimensional model obtained through three-dimensional reconfiguration of the RGB image group on the basis of a spectral image mapping image group.

As a result, a spectral three-dimensional image from a desired viewpoint position can be generated on the basis of the spectral three-dimensional model.

### <Spectral Three-Dimensional Model Generation Processing by Image Processing Device in Fig. 21>

Spectral three-dimensional model generation processing by the image processing device 101 in Fig. 21 will be described next with reference to the flowchart in Fig. 22.

In step S191, the RGB camera 291 configures an RGB image group by capturing a subject from a plurality of angles, and outputs the RGB image group to the three-dimensional reconfiguring unit 293 and the mapping processing unit 295.

In step S192, the spectral camera 292 configures a spectral image group by capturing a spectral image from a plurality of angles, and outputs the spectral image group to the mapping processing unit 295.

In step S193, the three-dimensional reconfiguring unit 293 generates RGB three-dimensional point cloud information, which is a three-dimensional point cloud in RGB, as an RGB three-dimensional model, on the basis of the RGB image group, and outputs the RGB three-dimensional model to the spectral information mapping processing unit 294 along with attitude information of the RGB camera in each RGB image group.

In step S194, the mapping processing unit 295 resets a counter f for counting frame numbers of the RGB image group and the spectral image group, respectively, to 1.

In step S195, the mapping processing unit 295 maps the spectral information of the spectral image to each position in the corresponding RGB image of the frame number f, and outputs the result as a spectral information mapping image.

In step S196, the mapping processing unit 295 determines whether the counter f is lower than the frame number N, and if the counter f is lower than the frame number N, the sequence moves to step S197.

In step S197, the mapping processing unit 295 increments the counter f by 1, and the sequence returns to step S195.

In other words, the processing of steps S195 to S197 is repeated until the spectral information is mapped for all N frames, which is the number of images included in each of the RGB image group and the spectral image group.

If in step S196 the counter f is determined not to be lower than N and the spectral information is therefore determined to have been mapped to all the RGB image groups, the sequence moves to step S198.

In step S198, the spectral information mapping processing unit 294 generates a spectral three-dimensional model by reading out the spectral information of the corresponding spectral information mapping image on the basis of the attitude information of the RGB camera 291, and mapping the spectral information to the corresponding points in the three-dimensional point cloud constituting the RGB three-dimensional model.

The foregoing processing makes it possible to configure the RGB camera and the spectral camera coaxially using a beam splitter or the like, for example, and generate the spectral three-dimensional model by first generating spectral information mapping images by mapping the spectral information of the spectral images onto the RGB images, and then mapping the spectral information onto a three-dimensional model obtained through three-dimensional reconfiguration of the RGB image group on the basis of a spectral image mapping image group.

As a result, a spectral three-dimensional image from a desired viewpoint position can be generated on the basis of the spectral three-dimensional model.

### <<3. Second Embodiment>>

The foregoing described examples of generating a spectral three-dimensional model from an RGB image group and a spectral image group, and in the examples given thus far, an overall spectral three-dimensional model including a subject of interest and a surrounding environment thereof is generated.

However, in general, since the information which is truly needed is the spectral three-dimensional model of the subject of interest, it is furthermore necessary to perform a remodeling operation in which only a spectral three-dimensional model of the subject of interest is extracted from the spectral three-dimensional model extracted in the foregoing examples.

That is, consider a case where in an image PI such as that illustrated on the left side of Fig. 23, a spectral three-dimensional model of a subject of interest SB, corresponding to statue of a person surrounded by the circle, is needed.

In the methods described with reference to the first embodiment, if the spectral three-dimensional model is extracted on the basis of the image PI, a spectral three-dimensional model including both the subject of interest SB and a surrounding environment AB will be extracted.

Accordingly, with the method described with reference to the first embodiment, it is necessary to perform a remodeling operation of extracting only the spectral three-dimensional model of the subject of interest SB, as indicated by an image PSB on the right side of Fig. 23, from the spectral three-dimensional model including both the subject of interest SB and the surrounding environment AB indicated by the image PI on the left side of Fig. 23.

This remodeling often requires intense work, from the viewpoint of hours worked by an expert.

Accordingly, the present disclosure makes it possible to extract only a spectral three-dimensional model of a subject of interest by performing segmentation on a spectral image utilizing (using) a spectrum, performing masking processing, and extracting only the subject of interest, and then generating the spectral three-dimensional model through three-dimensional reconfiguration.

### <3-1. First Configuration Example of Second Embodiment>

A first configuration example of a second embodiment of an image processing device that generates a spectral three-dimensional model of a subject of interest will be described next with reference to Fig. 24.

An image processing device in Fig. 24 obtains an RGB image group and a spectral image group each captured from a plurality of angles, generates spectral information mapping images by mapping spectral information from the RGB images and the spectral images captured at corresponding angles onto the RGB images, and then generates a spectral three-dimensional model of a subject of interest on the basis of the spectral information mapping image group.

More specifically, an image processing device 301 in Fig. 24 includes an RGB camera 311, a spectral camera 312, a feature point matching processing unit 313, a pixel-by-pixel registration processing unit 314, a mapping processing unit 315, a subject-of-interest point cloud extraction processing unit 316, and a three-dimensional reconfiguring unit 317.

The RGB camera 311, the spectral camera 312, the feature point matching processing unit 313, the pixel-by-pixel registration processing unit 314, the mapping processing unit 315, and the three-dimensional reconfiguring unit 317 in the image processing device 301 in Fig. 24 have basically the same configurations as the RGB camera 111, the spectral camera 112, the feature point matching processing unit 113, the pixel-by-pixel registration processing unit 114, the mapping processing unit 115, and the three-dimensional reconfiguring unit 116 in Fig. 2, and descriptions thereof will therefore be omitted as appropriate.

In other words, the image processing device 301 in Fig. 24 differs from the image processing device 101 in Fig. 2 in that the subject-of-interest point cloud extraction processing unit 316 is provided between the mapping processing unit 315 and the three-dimensional reconfiguring unit 317.

The subject-of-interest point cloud extraction processing unit 316 performs masking processing on each of the spectral information mapping image groups by performing image segmentation using a spectrum, extracts only a region to which the spectral information of a subject of interest has been mapped, and outputs the result to the three-dimensional reconfiguring unit 317 as a subject-of-interest spectral information mapping image group.

For example, if, of the image PI on the left side of Fig. 23, the subject of interest SB, which is a statue of a person, is known to have been created from plaster, the subject-of-interest point cloud extraction processing unit 316 generates the spectral information mapping image group of only the subject of interest SB by performing masking processing on the region aside from the plaster through image segmentation using a spectrum, and extracting only the region of the spectral information of the subject of interest.

Through this, the three-dimensional reconfiguring unit 317 reconfigures a subject-of-interest spectral three-dimensional model by configuring three-dimensional point cloud information constituted by the spectral information of the subject of interest on the basis of the subject-of-interest spectral information mapping image group.

Such a configuration makes it possible to generate a spectral information mapping image group from the RGB image group and the spectral image group, and to reconfigure the subject-of-interest spectral three-dimensional model on the basis of the subject-of-interest spectral information mapping image group, in which only the spectral information of the subject of interest in the generated spectral information mapping image group has been mapped.

As a result, a spectral three-dimensional image of only the subject of interest from a desired viewpoint position can be generated on the basis of the spectral three-dimensional model of the subject of interest.

### <Subject-of-Interest Spectral Three-Dimensional Model Generation Processing by Image Processing Device in Fig. 24>

Subject-of-interest spectral three-dimensional model generation processing by the image processing device 301 in Fig. 24 will be described next with reference to the flowchart in Fig. 25.

Note that in the flowchart in Fig. 25, the processing other than step S217 is processing corresponding to the processing in steps S11 to S19 in Fig. 4, and thus descriptions thereof will be omitted as appropriate.

In other words, once the spectral information mapping image of the frame number f is generated from the RGB image group and the spectral image group through the processing of steps S211 to S216, the sequence moves to step S217.

In step S217, the subject-of-interest point cloud extraction processing unit 316 performs masking processing on the spectral information mapping image by performing image segmentation using a spectrum, extracts only a region of the subject of interest, generates a subject-of-interest spectral information mapping image, and outputs that image to the three-dimensional reconfiguring unit 317.

At this time, the three-dimensional reconfiguring unit 317 stores the subject-of-interest spectral information mapping image of the frame number f in association with the frame number f.

Then, the processing of steps S214 to S219 is repeated until a subject-of-interest spectral information mapping image is generated for all N frames, which is the number of images included in each of the RGB image group and the spectral image group.

If in step S218 the counter f is determined not to be lower than N and all the subject-of-interest spectral information mapping images are therefore determined to have been generated, the sequence moves to step S220.

In step S220, the three-dimensional reconfiguring unit 317 reconfigures a subject-of-interest spectral three-dimensional model by configuring three-dimensional point cloud information constituted by the spectral information of the subject of interest on the basis of the subject-of-interest spectral information mapping image group.

The foregoing processing makes it possible to generate a spectral information mapping image group from the RGB image group and the spectral image group, generate a subject-of-interest spectral information mapping image group from the generated spectral information mapping image group, and reconfigure a subject-of-interest spectral three-dimensional model on the basis of the subject-of-interest spectral information mapping image group.

As a result, a spectral three-dimensional image of the subject of interest from a desired viewpoint position can be generated on the basis of the subject-of-interest spectral three-dimensional model.

The foregoing described an example in which the image segmentation using the spectrum is assumed to be performed on the spectral information mapping image group at a timing after the generation of the spectral information mapping image group. However, the segmentation may be performed on a spectral image group at a timing immediately after the spectral image group is generated by the spectral camera 312, or may be performed on the spectral three-dimensional model at a timing immediately after the spectral three-dimensional model (the spectral three-dimensional point cloud) is generated.

In addition, the image segmentation using the spectrum can be performed in a previous stage to limit the processing to the region pertaining to the subject of interest, which makes it possible to reduce the overall processing load.

### <3-2. Second Configuration Example of Second Embodiment>

The foregoing described an example in which a spectral information mapping image group is generated from the RGB image group and the spectral image group, a subject-of-interest spectral information mapping image group is generated from the spectral information mapping image group, and a subject-of-interest spectral three-dimensional model is then generated from the subject-of-interest spectral information mapping image group.

However, a subject-of-interest spectral three-dimensional model may be generated by generating a three-dimensional point cloud from each of the RGB image group and the spectral image group, mapping spectral information by aligning the position of a spectral three-dimensional point cloud with the position of an RGB three-dimensional point cloud, and extracting only a subject-of-interest point cloud using the spectrum.

Fig. 26 illustrates a second configuration example of the second embodiment of the image processing device, in which the subject-of-interest spectral three-dimensional model is generated by generating a three-dimensional point cloud for both the RGB image group and the spectral image group, mapping the spectral information having aligned the position of the spectral three-dimensional point cloud with the position of the RGB three-dimensional point cloud, and furthermore extracting a point cloud of the subject of interest.

The image processing device 301 in Fig. 26 includes an RGB camera 331, a spectral camera 332, three-dimensional reconfiguring units 333 and 334, a three-dimensional point cloud alignment processing unit 335, a corresponding point cloud extraction processing unit 336, a spectral information mapping processing unit 337, and a subject-of-interest point cloud extraction processing unit 338.

Note that the RGB camera 331 to the spectral information mapping processing unit 337 in the image processing device 301 in Fig. 26 have the same configurations as the RGB camera 131 to the spectral information mapping processing unit 137 in the image processing device 101 in Fig. 5, and thus descriptions thereof will be omitted.

In other words, the image processing device 301 in Fig. 26 differs from the image processing device 101 in Fig. 5 in that the subject-of-interest point cloud extraction processing unit 338 has been added.

The subject-of-interest point cloud extraction processing unit 338 generates a subject-of-interest spectral three-dimensional model by extracting only the point cloud of the spectral information of the subject of interest by performing point cloud segmentation using a spectrum on the point cloud for which the spectral information has been mapped.

For example, if, of the image PI on the left side of Fig. 23, the subject of interest SB, which is a statue of a person, is known to have been created from plaster, the subject-of-interest point cloud extraction processing unit 338 generates the subject-of-interest spectral three-dimensional model constituted by extracting a point cloud of only the subject of interest SB through point cloud segmentation using the spectrum and extracting only the point cloud of the spectral information of the subject of interest, which is the plaster region.

Such a configuration makes it possible to generate the subject-of-interest spectral three-dimensional model, constituted only by the point cloud of the subject of interest, by generating the RGB three-dimensional point cloud and the spectral three-dimensional point cloud from the RGB image group and the spectral image group, aligning the point clouds, performing mapping based on the spectral information extracted in association with each point in the RGB three-dimensional point cloud, and furthermore performing point cloud segmentation using the spectrum.

As a result, a subject-of-interest spectral three-dimensional image from a desired viewpoint position can be generated on the basis of the subject-of-interest spectral three-dimensional model.

### <Subject-of- Interest Spectral Three-Dimensional Model Generation Processing by Image Processing Device in Fig. 26>

Subject-of-interest spectral three-dimensional model generation processing by the image processing device 301 in Fig. 26 will be described next with reference to the flowchart in Fig. 27.

Note that the processing of steps S231 to S237 in the flowchart of Fig. 27 is similar to the processing of steps S31 to S37 in the flowchart of Fig. 6, and thus descriptions thereof will be omitted.

In other words, once the spectral three-dimensional model is generated on the basis of the RGB image group and the spectral image group through the processing of steps S231 to S237, the sequence moves to step S238.

In step S238, the subject-of-interest point cloud extraction processing unit 338 generates a subject-of-interest spectral three-dimensional model by extracting only the point cloud of the spectral information of the subject of interest through point cloud segmentation using a spectrum on the spectral three-dimensional model constituted by the point cloud for which the spectral information has been mapped.

Such processing makes it possible to generate the subject-of-interest spectral three-dimensional model by generating the RGB three-dimensional point cloud and the spectral three-dimensional point cloud from the RGB image group and the spectral image group, aligning the point clouds, performing mapping based on the spectral information extracted in association with each point in the RGB three-dimensional point cloud, generating the spectral three-dimensional model, and furthermore extracting the point cloud information of the spectral information of the subject of interest on the basis of the spectral three-dimensional model.

As a result, a subject-of-interest spectral three-dimensional image from a desired viewpoint position can be generated on the basis of the subject-of-interest spectral three-dimensional model.

The foregoing described an example in which the point cloud segmentation using the spectrum is assumed to be performed on the spectral three-dimensional model at a timing after the generation of the spectral three-dimensional model (the spectral three-dimensional point cloud). However, the segmentation may be performed on the spectral three-dimensional point cloud at a timing immediately after the spectral three-dimensional point cloud is generated by the three-dimensional reconfiguring unit 334, or may be performed on the spectral image group at a timing immediately after the spectral image group is generated by the spectral camera 332.

In addition, the point cloud segmentation using the spectrum can be performed in a previous stage to limit the processing to the region pertaining to the subject of interest, which makes it possible to reduce the overall processing load.

### <3-3. Third Configuration Example of Second Embodiment>

The foregoing described an example of generating a subject-of-interest spectral three-dimensional model, by first obtaining a three-dimensional point cloud from each of an RGB image group and a spectral image group, aligning the positions thereof, compositing the RGB three-dimensional point cloud and the spectral three-dimensional point cloud, and then mapping spectral information onto the RGB three-dimensional point cloud to generate a spectral three-dimensional model, and furthermore extracting point cloud information of the spectral information of the subject of interest.

However, RGB + spectral three-dimensional point cloud information in which the RGB three-dimensional point cloud and the spectral three-dimensional point cloud are mixed may be obtained directly from the RGB image group and the spectral image group, and the subject-of-interest spectral three-dimensional model may be generated by mapping the spectral information onto the RGB three-dimensional point cloud in the RGB + spectral three-dimensional point cloud information to generate a spectral three-dimensional model, and furthermore extracting the point cloud information of the spectral information of the subject of interest.

Fig. 28 illustrates a third configuration example of the second embodiment of the image processing device, in which RGB + spectral three-dimensional point cloud information in which the RGB three-dimensional point cloud and the spectral three-dimensional point cloud are mixed, is obtained directly from the RGB image group and the spectral image group, and the subject-of-interest spectral three-dimensional model is generated by mapping the spectral information onto the RGB three-dimensional point cloud in the RGB + spectral three-dimensional point cloud information to generate a spectral three-dimensional model, and furthermore extracting the point cloud information of the spectral information of the subject of interest.

The image processing device 301 in Fig. 28 includes an RGB camera 351, a spectral camera 352, a three-dimensional reconfiguring unit 353, a corresponding point cloud extraction processing unit 354, a spectral information mapping processing unit 355, and a subject-of-interest point cloud extraction processing unit 356.

Note that the RGB camera 351 to the spectral information mapping processing unit 355 in the image processing device 301 in Fig. 28 have the same configurations as the RGB camera 151 to the spectral information mapping processing unit 155 in the image processing device 101 in Fig. 7, and thus descriptions thereof will be omitted.

In other words, the image processing device 301 in Fig. 28 differs from the image processing device 101 in Fig. 7 in that the subject-of-interest point cloud extraction processing unit 356 has been added.

The subject-of-interest point cloud extraction processing unit 356 has the same configuration as the subject-of-interest point cloud extraction processing unit 338 in Fig. 26, and generates a subject-of-interest spectral three-dimensional model by extracting only the point cloud of the spectral information of the subject of interest through point cloud segmentation using a spectrum on the point cloud for which the spectral information has been mapped.

Such a configuration makes it possible to generate a subject-of-interest spectral three-dimensional model by generating RGB + spectral three-dimensional point cloud information, which is a three-dimensional point cloud in which RGB and spectral information are mixed, from the RGB image group and the spectral image group, performing mapping based on the spectral information extracted in association with each point in the RGB three-dimensional point cloud on the basis of the RGB + spectral three-dimensional point cloud information to generate a spectral three-dimensional model, and furthermore extracting the point cloud of the subject of interest from the spectral three-dimensional model.

As a result, a subject-of-interest spectral three-dimensional image from a desired viewpoint position can be generated on the basis of the subject-of-interest spectral three-dimensional model.

### <Subject-of-Interest Spectral Three-Dimensional Model Generation Processing by Image Processing Device in Fig. 28>

Subject-of-interest spectral three-dimensional model generation processing by the image processing device 301 in Fig. 28 will be described next with reference to the flowchart in Fig. 29.

Note that the processing of steps S251 to S255 in the flowchart of Fig. 29 is similar to the processing of steps S51 to S55 in the flowchart of Fig. 8, and thus descriptions thereof will be omitted.

In other words, once the spectral three-dimensional model is generated through the processing of steps S251 to S255, the sequence moves to step S256.

In step S256, the subject-of-interest point cloud extraction processing unit 356 generates a subject-of-interest spectral three-dimensional model by extracting only the point cloud of the spectral information of the subject of interest through point cloud segmentation using a spectrum on the point cloud in which the spectral information constituting the spectral three-dimensional model has been mapped.

The foregoing processing makes it possible to generate a subject-of-interest spectral three-dimensional model by generating RGB + spectral three-dimensional point cloud information, which is a three-dimensional point cloud in which RGB and spectral information are mixed, from the RGB image group and the spectral image group, performing mapping based on the spectral information extracted in association with each point in the RGB three-dimensional point cloud on the basis of the RGB + spectral three-dimensional point cloud information to generate a spectral three-dimensional model, and furthermore extracting only the point cloud information of the spectral information of the subject of interest from the spectral three-dimensional model.

As a result, a subject-of-interest spectral three-dimensional image from a desired viewpoint position can be generated on the basis of the subject-of-interest spectral three-dimensional model.

### <3-4. Fourth Configuration Example of Second Embodiment>

The foregoing has described an example of generating a subject-of-interest spectral three-dimensional model by performing mapping based on spectral information extracted in association with each point in an RGB three-dimensional point cloud on the basis of RGB + spectral three-dimensional point cloud information generated from the RGB image group and the spectral image group to generate a spectral three-dimensional model, and then extracting only point cloud information of the spectral information of the subject of interest from the spectral three-dimensional model.

However, the subject-of-interest spectral three-dimensional model may be generated by reconfiguring a three-dimensional image group corresponding to each of the RGB images on the basis of the RGB image group and mapping the spectral information of the spectral image group to generate a spectral three-dimensional model, and furthermore extracting only the point cloud information of the spectral information of the subject of interest from the spectral three-dimensional model.

Fig. 30 is a fourth configuration example of the second embodiment of the image processing device that generates a subject-of-interest spectral three-dimensional model by reconfiguring a three-dimensional image group corresponding to each of the RGB images on the basis of the RGB image group and mapping the spectral information of the spectral image group to generate a spectral three-dimensional model, and furthermore extracting only the point cloud information of the spectral information of the subject of interest from the spectral three-dimensional model.

The image processing device 301 in Fig. 30 includes an RGB camera 371, a spectral camera 372, a three-dimensional reconfiguring unit 373, a spectral information mapping processing unit 374, and a subject-of-interest point cloud extraction processing unit 375.

Note that the RGB camera 371 to the spectral information mapping processing unit 374 in the image processing device 301 in Fig. 30 have the same configurations as the RGB camera 171 to the spectral information mapping processing unit 174 in the image processing device 101 in Fig. 9, and thus descriptions thereof will be omitted.

In other words, the image processing device 301 in Fig. 30 differs from the image processing device 101 in Fig. 9 in that the subject-of-interest point cloud extraction processing unit 375 has been added.

The subject-of-interest point cloud extraction processing unit 375 has the same configuration as the subject-of-interest point cloud extraction processing unit 338 in Fig. 26, and generates a subject-of-interest spectral three-dimensional model by extracting only the point cloud of the spectral information of the subject of interest through point cloud segmentation using a spectrum on the point cloud for which the spectral information has been mapped.

Such a configuration makes it possible to generate a subject-of-interest spectral three-dimensional model by generating an RGB three-dimensional image group from the RGB image group and mapping the spectral information onto the RGB three-dimensional image on the basis of the spectral image group to generate a spectral three-dimensional model, and furthermore extracting the point cloud of the subject of interest from the spectral three-dimensional model.

As a result, a subject-of-interest spectral three-dimensional image from a desired viewpoint position can be generated on the basis of the subject-of-interest spectral three-dimensional model.

### <Subject-of-Interest Spectral Three-Dimensional Model Generation Processing by Image Processing Device in Fig. 30>

Subject-of-interest spectral three-dimensional model generation processing by the image processing device 301 in Fig. 30 will be described next with reference to the flowchart in Fig. 31.

Note that the processing of steps S271 to S278 in the flowchart of Fig. 31 is similar to the processing of steps S71 to S78 in the flowchart of Fig. 10, and thus descriptions thereof will be omitted.

In other words, once the spectral three-dimensional model is generated through the processing of steps S271 to S278, the sequence moves to step S279.

In step S279, the subject-of-interest point cloud extraction processing unit 375 generates a subject-of-interest spectral three-dimensional model by extracting only the point cloud of the spectral information of the subject of interest through point cloud segmentation using a spectrum on the point cloud in which the spectral information constituting the spectral three-dimensional model has been mapped.

Such processing makes it possible to generate a subject-of-interest spectral three-dimensional model by generating an RGB three-dimensional image group from the RGB image group and mapping spectral information onto the RGB three-dimensional images on the basis of the spectral image group to generate a spectral three-dimensional model, and furthermore extracting the point cloud of the subject of interest from the spectral three-dimensional model.

As a result, a subject-of-interest spectral three-dimensional image from a desired viewpoint position can be generated on the basis of the subject-of-interest spectral three-dimensional model.

### <3-5. Fifth Configuration Example of Second Embodiment>

The foregoing described an example in which a subject-of-interest spectral three-dimensional model is generated by reconfiguring a three-dimensional image group corresponding to each of the RGB images on the basis of the RGB image group and mapping the spectral information of the spectral image group to generate a spectral three-dimensional model, and furthermore extracting a point cloud of the subject of interest from the spectral three-dimensional model.

However, a subject-of-interest spectral three-dimensional model may be generated by obtaining a three-dimensional image group constituted by range images from a range camera rather than an RGB camera and mapping the spectral information of the spectral image group to generate a spectral three-dimensional model, and furthermore extracting a point cloud of the subject of interest from the spectral three-dimensional model.

Fig. 32 is a fifth configuration example of the second embodiment of the image processing device in which a range camera is provided instead of an RGB camera, and a subject-of-interest spectral three-dimensional model is generated by obtaining a three-dimensional image group from a range image group captured by the range camera and mapping the spectral information of a spectral image group to generate a spectral three-dimensional model, and furthermore extracting a point cloud of the subject of interest from the spectral three-dimensional model.

A range camera 391 to a three-dimensional reconfiguring unit 395 in the image processing device 301 in Fig. 32 have the same configurations as the range camera 191 to the three-dimensional reconfiguring unit 195 in the image processing device 101 in Fig. 11, and thus descriptions thereof will be omitted.

In other words, the image processing device 301 in Fig. 32 differs from the image processing device 101 in Fig. 11 in that a subject-of-interest point cloud extraction processing unit 396 has been added.

The subject-of-interest point cloud extraction processing unit 396 has the same configuration as the subject-of-interest point cloud extraction processing unit 338 in Fig. 26, and generates a subject-of-interest spectral three-dimensional model by extracting only the point cloud of the spectral information of the subject of interest through point cloud segmentation using a spectrum on the point cloud for which the spectral information constituting the spectral three-dimensional model has been mapped.

Such a configuration makes it possible to generate a subject-of-interest spectral three-dimensional model by obtaining a three-dimensional image group constituted by range images from a range camera and mapping the spectral information of the spectral image group to generate a spectral three-dimensional model, and furthermore extracting the point cloud of the subject of interest from the spectral three-dimensional model.

As a result, a subject-of-interest spectral three-dimensional image from a desired viewpoint position can be generated on the basis of the subject-of-interest spectral three-dimensional model.

### <Subject-of-Interest Spectral Three-Dimensional Model Generation Processing by Image Processing Device in Fig. 32>

Subject-of-interest spectral three-dimensional model generation processing by the image processing device 301 in Fig. 32 will be described next with reference to the flowchart in Fig. 33.

Note that the processing of steps S291 to S298 in the flowchart of Fig. 33 is similar to the processing of steps S91 to S98 in the flowchart of Fig. 12, and thus descriptions thereof will be omitted.

In other words, once the spectral three-dimensional model is generated through the processing of steps S291 to S298, the sequence moves to step S299.

In step S299, the subject-of-interest point cloud extraction processing unit 396 generates a subject-of-interest spectral three-dimensional model by extracting only the point cloud of the spectral information of the subject of interest through point cloud segmentation using a spectrum on the point cloud in which the spectral information constituting the spectral three-dimensional model has been mapped.

The foregoing processing makes it possible to generate a subject-of-interest spectral three-dimensional model by obtaining a three-dimensional image group constituted by range images from a range camera and mapping the spectral information of the spectral image group to generate a spectral three-dimensional model, and furthermore extracting the point cloud of the subject of interest from the spectral three-dimensional model.

As a result, a subject-of-interest spectral three-dimensional image from a desired viewpoint position can be generated on the basis of the subject-of-interest spectral three-dimensional model.

### <3-6. Sixth Configuration Example of Second Embodiment>

The foregoing described an example in which a subject-of-interest spectral three-dimensional model is generated by obtaining a three-dimensional image group constituted by range images from a range camera and mapping the spectral information of the spectral image group onto the obtained three-dimensional image group to generate a spectral three-dimensional model, and furthermore extracting the point cloud of the subject of interest from the spectral three-dimensional model.

However, a subject-of-interest spectral three-dimensional model may be generated by generating a spectral information mapping image group from the RGB image group and the spectral image group; generating an RGB three-dimensional model, which is a three-dimensional model in RGB, and attitude information of the RGB camera from the RGB image group; and mapping the spectral information from the spectral information mapping image group onto the RGB three-dimensional model to generate a spectral three-dimensional model; and furthermore extracting a point cloud of the subject of interest from the spectral three-dimensional model.

Fig. 34 is a sixth configuration example of the second embodiment of the image processing device in which a subject-of-interest spectral three-dimensional model is generated by generating a spectral information mapping image group from the RGB image group and the spectral image group; generating an RGB three-dimensional model, which is a three-dimensional model in RGB, and attitude information of the RGB camera from the RGB image group; and mapping the spectral information from the spectral information mapping image group onto the RGB three-dimensional model to generate a spectral three-dimensional model; and furthermore extracting a point cloud of the subject of interest from the spectral three-dimensional model.

The image processing device 301 in Fig. 34 includes an RGB camera 411, a spectral camera 412, a three-dimensional reconfiguring unit 413, a spectral information mapping processing unit 414, a feature point matching processing unit 415, a pixel-by-pixel registration processing unit 416, a mapping processing unit 417, and a subject-of-interest point cloud extraction processing unit 418.

Note that the RGB camera 411 to the mapping processing unit 417 in the image processing device 301 in Fig. 34 have the same configurations as the RGB camera 211 to the mapping processing unit 217 in the image processing device 101 in Fig. 13, and thus descriptions thereof will be omitted.

In other words, the image processing device 301 in Fig. 34 differs from the image processing device 101 in Fig. 13 in that the subject-of-interest point cloud extraction processing unit 418 has been added.

The subject-of-interest point cloud extraction processing unit 418 has the same configuration as the subject-of-interest point cloud extraction processing unit 338 in Fig. 26, and generates a subject-of-interest spectral three-dimensional model by extracting only the point cloud of the spectral information of the subject of interest through point cloud segmentation using a spectrum on the point cloud for which the spectral information constituting the spectral three-dimensional model has been mapped.

Such a configuration makes it possible to generate a subject-of-interest spectral three-dimensional model by generating a spectral information mapping image group from the RGB image group and the spectral image group; generating an RGB three-dimensional model, which is a three-dimensional model in RGB, and attitude information of the RGB camera from the RGB image group; and mapping the spectral information from the spectral information mapping image group onto the RGB three-dimensional model to generate a spectral three-dimensional model; and furthermore extracting a point cloud of the subject of interest from the spectral three-dimensional model.

As a result, a subject-of-interest spectral three-dimensional image from a desired viewpoint position can be generated on the basis of the subject-of-interest spectral three-dimensional model.

### <Subject-of-Interest Spectral Three-Dimensional Model Generation Processing by Image Processing Device in Fig. 34>

Subject-of-interest spectral three-dimensional model generation processing by the image processing device 301 in Fig. 34 will be described next with reference to the flowchart in Fig. 35.

Note that the processing of steps S311 to S320 in the flowchart of Fig. 35 is similar to the processing of steps S111 to S120 in the flowchart of Fig. 14, and thus descriptions thereof will be omitted.

In other words, once the spectral three-dimensional model is generated through the processing of steps S311 to S320, the sequence moves to step S321.

In step S321, the subject-of-interest point cloud extraction processing unit 418 generates a subject-of-interest spectral three-dimensional model by extracting only the point cloud of the spectral information of the subject of interest through point cloud segmentation using a spectrum on the point cloud in which the spectral information constituting the spectral three-dimensional model has been mapped.

The foregoing processing makes it possible to generate a subject-of-interest spectral three-dimensional model by generating a spectral information mapping image group from the RGB image group and the spectral image group; generating an RGB three-dimensional model, which is a three-dimensional model in RGB, and attitude information of the RGB camera from the RGB image group; and mapping the spectral information from the spectral information mapping image group onto the RGB three-dimensional model to generate a spectral three-dimensional model; and furthermore extracting a point cloud of the subject of interest from the spectral three-dimensional model.

As a result, a subject-of-interest spectral three-dimensional image from a desired viewpoint position can be generated on the basis of the subject-of-interest spectral three-dimensional model.

### <3-7. Seventh Configuration Example of Second Embodiment>

The foregoing described an example of generating a subject-of-interest spectral three-dimensional model by generating a spectral information mapping image group from an RGB image group and a spectral image group; generating an RGB three-dimensional model, which is a three-dimensional model in RGB, and attitude information of the RGB camera from the RGB image group; and mapping the spectral information from the spectral information mapping image onto the RGB three-dimensional model to generate a spectral three-dimensional model; and furthermore extracting a point cloud of a subject of interest from the spectral three-dimensional model.

However, a range image group of all cameras may be reconfigured from the RGB image group and the spectral image group, a three-dimensional point cloud of RGB + spectral information may be generated from the range image group of all cameras, a three-dimensional model of the RGB + spectral information may be generated, and attitude information of all cameras may be generated.

Then, a subject-of-interest spectral three-dimensional model may be generated by mapping the spectral information of the spectral image group onto the RGB image group from the range image group and the attitude information to generate a spectral information mapping image group; mapping the spectral information onto the three-dimensional model of the RGB + spectral information on the basis of the information of the spectral information mapping image group to generate a spectral three-dimensional model; and furthermore extracting a point cloud of the subject of interest from the spectral three-dimensional model.

Fig. 36 illustrates a seventh configuration example of the second embodiment of the image processing device in which a subject-of-interest spectral three-dimensional model is generated by reconfiguring a range image group of all cameras from the RGB image group and the spectral image group; generating a three-dimensional model of the RGB + spectral information from the range image group of all cameras and generating attitude information of all cameras; generating a spectral information mapping image group by mapping the spectral information in the spectral image group onto each RGB image group from the range image group and the attitude information; mapping the spectral information onto the three-dimensional model of the RGB + spectral information on the basis of the information of the spectral information mapping image group to generate a spectral three-dimensional model; and furthermore extracting the point cloud of the subject of interest from the spectral three-dimensional model.

The image processing device 301 in Fig. 36 includes an RGB camera 431, a spectral camera 432, a three-dimensional reconfiguring unit 433, a mapping processing unit 434, a spectral information mapping processing unit 435, and a subject-of-interest point cloud extraction processing unit 436.

Note that the RGB camera 431 to the spectral information mapping processing unit 435 in the image processing device 301 in Fig. 36 are the same as the RGB camera 231 to the spectral information mapping processing unit 235 in the image processing device 101 in Fig. 15, and thus descriptions thereof will be omitted.

In other words, the image processing device 301 in Fig. 36 differs from the image processing device 101 in Fig. 15 in that the subject-of-interest point cloud extraction processing unit 436 has been added.

The subject-of-interest point cloud extraction processing unit 436 has the same configuration as the subject-of-interest point cloud extraction processing unit 338 in Fig. 26, and generates a subject-of-interest spectral three-dimensional model by extracting only the point cloud of the spectral information of the subject of interest through point cloud segmentation using a spectrum on the point cloud for which the spectral information constituting the spectral three-dimensional model has been mapped.

Such a configuration makes it possible to generate a subject-of-interest spectral three-dimensional model by generating a three-dimensional model of the RGB + spectral information from the RGB image group and the spectral image group and generating a range image group and attitude information of all cameras; mapping the spectral information in the spectral image group onto each of the RGB image groups from the range image group and the attitude information to generate a spectral information mapping image group; mapping the spectral information onto the three-dimensional model of the RGB + spectral information on the basis of the information of the spectral information mapping image group to generate a spectral three-dimensional model; and furthermore extracting the point cloud of the subject of interest from the spectral three-dimensional model.

As a result, a subject-of-interest spectral three-dimensional image from a desired viewpoint position can be generated on the basis of the subject-of-interest spectral three-dimensional model.

### <Subject-of-Interest Spectral Three-Dimensional Model Generation Processing by Image Processing Device in Fig. 36>

Subject-of-interest spectral three-dimensional model generation processing by the image processing device 301 in Fig. 36 will be described next with reference to the flowchart in Fig. 37.

Note that the processing of steps S331 to S338 in the flowchart of Fig. 37 is similar to the processing of steps S131 to S138 in the flowchart of Fig. 16, and thus descriptions thereof will be omitted.

In other words, once the spectral three-dimensional model is generated through the processing of steps S331 to S338, the sequence moves to step S339.

In step S339, the subject-of-interest point cloud extraction processing unit 436 generates a subject-of-interest spectral three-dimensional model by extracting only the point cloud of the spectral information of the subject of interest through point cloud segmentation using a spectrum on the point cloud in which the spectral information constituting the spectral three-dimensional model has been mapped.

The foregoing processing makes it possible to generate a subject-of-interest spectral three-dimensional model by generating a three-dimensional model of the RGB + spectral information from the RGB image group and the spectral image group and generating a range image group and attitude information of all cameras; mapping the spectral information in the spectral image group onto each of the RGB image groups from the range image group and the attitude information to generate a spectral information mapping image group; mapping the spectral information onto the three-dimensional model of the RGB + spectral information on the basis of the information of the spectral information mapping image group to generate a spectral three-dimensional model; and furthermore extracting the point cloud of the subject of interest from the spectral three-dimensional model.

As a result, a subject-of-interest spectral three-dimensional image from a desired viewpoint position can be generated on the basis of the subject-of-interest spectral three-dimensional model.

### <3-8. Eighth Configuration Example of Second Embodiment>

The foregoing described an example of generating a subject-of-interest spectral three-dimensional model by generating a three-dimensional model of RGB + spectral information from an RGB image group and a spectral image group and generating a range image group and attitude information of all cameras; mapping the spectral information in the spectral image group onto each of the RGB image groups from the range image group and the attitude information to generate a spectral information mapping image group; mapping the spectral information onto the three-dimensional model of the RGB + spectral information on the basis of the information of the spectral information mapping image group to generate a spectral three-dimensional model; and furthermore extracting the point cloud of the subject of interest from the spectral three-dimensional model.

However, the subject-of-interest spectral three-dimensional model may be generated by generating an unscaled three-dimensional model and a range image group through three-dimensional reconfiguration based on the RGB image group; rescaling the unscaled three-dimensional model to a real-scale three-dimensional model by comparing the unscaled range image group with a real-scale range image group obtained through stereo matching between the RGB camera and the spectral camera; mapping the spectral information onto the rescaled real-scale three-dimensional model to generate a real-scale spectral three-dimensional model; and furthermore extracting a point cloud of the subject of interest from the real-scale spectral three-dimensional model.

Fig. 38 illustrates an eighth configuration example of the second embodiment of the image processing apparatus that generates a subject-of-interest spectral three-dimensional model by generating an unscaled three-dimensional model and a range image group through three-dimensional reconfiguration based on the RGB image group; rescaling the unscaled three-dimensional model to a real-scale three-dimensional model by comparing the unscaled range image group with a real-scale range image group obtained through stereo matching between the RGB camera and the spectral camera; mapping the spectral information onto the rescaled real-scale three-dimensional model to generate a real-scale spectral three-dimensional model; and furthermore extracting a point cloud of the subject of interest from the real-scale spectral three-dimensional model.

The image processing device 301 in Fig. 38 includes an RGB camera 451, a spectral camera 452, a three-dimensional reconfiguring unit 453, a rescaling processing unit 454, a spectral information mapping processing unit 455, a stereo calibration processing unit 456, a stereo matching processing unit 457, a mapping processing unit 458, and a subject-of-interest point cloud extraction processing unit 459.

Note that the RGB camera 451 to the mapping processing unit 458 in the image processing device 301 in Fig. 38 are the same as the RGB camera 251 to the mapping processing unit 258 in the image processing device 101 in Fig. 17, and thus descriptions thereof will be omitted.

In other words, the image processing device 301 in Fig. 38 differs from the image processing device 101 in Fig. 17 in that the subject-of-interest point cloud extraction processing unit 459 has been added.

The subject-of-interest point cloud extraction processing unit 459 has the same configuration as the subject-of-interest point cloud extraction processing unit 338 in Fig. 26, and generates a subject-of-interest spectral three-dimensional model by extracting only the point cloud of the spectral information of the subject of interest through point cloud segmentation using a spectrum on the point cloud for which the spectral information constituting the spectral three-dimensional model has been mapped.

This configuration makes it possible to generate a real-scale subject-of-interest spectral three-dimensional model by generating an unscaled three-dimensional model and a range image group through three-dimensional reconfiguration based on the RGB image group; rescaling the unscaled three-dimensional model to a real-scale three-dimensional model by comparing the unscaled range image group with a real-scale range image group obtained through stereo matching between the RGB camera and the spectral camera; mapping the spectral information onto the rescaled real-scale three-dimensional model to generate a real-scale spectral three-dimensional model; and furthermore extracting a point cloud of the subject of interest from the real-scale spectral three-dimensional model.

As a result, a subject-of-interest spectral three-dimensional image from a desired viewpoint position can be generated on the basis of the subject-of-interest spectral three-dimensional model.

### <Subject-of-Interest Spectral Three-Dimensional Model Generation Processing by Image Processing Device in Fig. 38>

Subject-of-interest spectral three-dimensional model generation processing by the image processing device 301 in Fig. 38 will be described next with reference to the flowchart in Fig. 39.

Note that the processing of steps S351 to S361 in the flowchart of Fig. 39 is similar to the processing of steps S151 to S161 in the flowchart of Fig. 19, and thus descriptions thereof will be omitted.

In other words, once the spectral three-dimensional model is generated through the processing of steps S351 to S361, the sequence moves to step S362.

In step S362, the subject-of-interest point cloud extraction processing unit 459 generates a subject-of-interest spectral three-dimensional model by extracting only the point cloud of the spectral information of the subject of interest through point cloud segmentation using a spectrum on the point cloud in which the spectral information constituting the spectral three-dimensional model has been mapped.

The foregoing processing makes it possible to generate a real-scale subject-of-interest spectral three-dimensional model by generating an unscaled three-dimensional model and a range image group through three-dimensional reconfiguration based on the RGB image group; rescaling the unscaled three-dimensional model to a real-scale three-dimensional model by comparing the unscaled range image group with a real-scale range image group obtained through stereo matching between the RGB camera and the spectral camera; mapping the spectral information onto the rescaled real-scale three-dimensional model to generate a real-scale spectral three-dimensional model; and furthermore extracting a point cloud of the subject of interest from the real-scale spectral three-dimensional model.

As a result, a subject-of-interest spectral three-dimensional image from a desired viewpoint position can be generated on the basis of the subject-of-interest spectral three-dimensional model.

### <3-9. Ninth Configuration Example of Second Embodiment>

The foregoing described an example in which a subject-of-interest spectral three-dimensional model is generated by generating an unscaled three-dimensional model and a range image group through three-dimensional reconfiguration based on the RGB image group; rescaling the unscaled three-dimensional model to a real-scale three-dimensional model by comparing the unscaled range image group with a real-scale range image group obtained through stereo matching between the RGB camera and the spectral camera; mapping the spectral information onto the rescaled real-scale three-dimensional model to generate a real-scale spectral three-dimensional model; and furthermore extracting a point cloud of the subject of interest from the real-scale spectral three-dimensional model.

However, the subject-of-interest spectral three-dimensional model may be generated by configuring the RGB camera and the spectral camera coaxially using a beam splitter or the like, for example; generating the spectral three-dimensional model by mapping the spectral information of the spectral image onto a three-dimensional model obtained through three-dimensional reconfiguration from the RGB image group; and furthermore extracting a point cloud of the subject of interest from the spectral three-dimensional model.

Fig. 40 illustrates a ninth configuration example of the second embodiment of the image processing device in which the subject-of-interest spectral three-dimensional model is generated by configuring the RGB camera and the spectral camera coaxially using a beam splitter or the like, for example; generating the spectral three-dimensional model by mapping the spectral information of the spectral image onto a three-dimensional model obtained through three-dimensional reconfiguration from the RGB image group; and furthermore extracting a point cloud of the subject of interest from the spectral three-dimensional model.

The image processing device 301 in Fig. 40 includes an RGB camera 471, a spectral camera 472, a three-dimensional reconfiguring unit 473, a spectral information mapping processing unit 474, and a subject-of-interest point cloud extraction processing unit 475.

Note that the RGB camera 471 to the spectral information mapping processing unit 474 in the image processing device 301 in Fig. 40 have the same configurations as the RGB camera 271 to the spectral information mapping processing unit 274 in the image processing device 101 in Fig. 19, and thus descriptions thereof will be omitted.

In other words, the image processing device 301 in Fig. 40 differs from the image processing device 101 in Fig. 19 in that the subject-of-interest point cloud extraction processing unit 475 has been added.

The subject-of-interest point cloud extraction processing unit 475 has the same configuration as the subject-of-interest point cloud extraction processing unit 338 in Fig. 26, and generates a subject-of-interest spectral three-dimensional model by extracting only the point cloud of the spectral information of the subject of interest through point cloud segmentation using a spectrum on the point cloud for which the spectral information constituting the spectral three-dimensional model has been mapped.

Such a configuration makes it possible to generate the subject-of-interest spectral three-dimensional model by configuring the RGB camera and the spectral camera coaxially using a beam splitter or the like, for example; generating the spectral three-dimensional model by mapping the spectral information of the spectral image onto a three-dimensional model obtained through three-dimensional reconfiguration from the RGB image group; and furthermore extracting a point cloud of the subject of interest from the spectral three-dimensional model.

As a result, a subject-of-interest spectral three-dimensional image from a desired viewpoint position can be generated on the basis of the subject-of-interest spectral three-dimensional model.

### <Subject-of-Interest Spectral Three-Dimensional Model Generation Processing by Image Processing Device in Fig. 40>

Subject-of-interest spectral three-dimensional model generation processing by the image processing device 301 in Fig. 40 will be described next with reference to the flowchart in Fig. 41.

Note that the processing of steps S371 to S374 in the flowchart of Fig. 41 is similar to the processing of steps S171 to S174 in the flowchart of Fig. 20, and thus descriptions thereof will be omitted.

In other words, once the spectral three-dimensional model is generated through the processing of steps S371 to S374, the sequence moves to step S375.

In step S375, the subject-of-interest point cloud extraction processing unit 475 generates a subject-of-interest spectral three-dimensional model by extracting only the point cloud of the spectral information of the subject of interest through point cloud segmentation using a spectrum on the point cloud in which the spectral information constituting the spectral three-dimensional model has been mapped.

Such processing makes it possible to generate the subject-of-interest spectral three-dimensional model by configuring the RGB camera and the spectral camera coaxially using a beam splitter or the like, for example; generating the spectral three-dimensional model by mapping the spectral information of the spectral image onto a three-dimensional model obtained through three-dimensional reconfiguration from the RGB image group; and furthermore extracting a point cloud of the subject of interest from the spectral three-dimensional model.

As a result, a subject-of-interest spectral three-dimensional image from a desired viewpoint position can be generated on the basis of the subject-of-interest spectral three-dimensional model.

### <3-10. Tenth Configuration Example of Second Embodiment>

The foregoing described an example in which the subject-of-interest spectral three-dimensional model is generated by configuring the RGB camera and the spectral camera coaxially using a beam splitter or the like, for example; generating the spectral three-dimensional model by mapping the spectral information of the spectral image onto a three-dimensional model obtained through three-dimensional reconfiguration from the RGB image group; and furthermore extracting a point cloud of the subject of interest from the spectral three-dimensional model.

However, the RGB camera and the spectral camera may be configured coaxially using a beam splitter or the like, for example, and the subject-of-interest spectral three-dimensional model may be generated by first generating spectral information mapping images by mapping the spectral information of the spectral images onto the RGB images; mapping the spectral information onto a three-dimensional model obtained through three-dimensional reconfiguration from the RGB image group on the basis of a spectral image mapping image group to generate a spectral three-dimensional model; and furthermore extracting a point cloud of a subject of interest from the spectral three-dimensional model.

Fig. 42 is a tenth configuration example of the second embodiment of the image processing device, in which the RGB camera and the spectral camera are configured coaxially using a beam splitter or the like, for example, and subject-of-interest spectral three-dimensional model may be generated by first generating spectral information mapping images by mapping the spectral information of the spectral images onto the RGB images; mapping the spectral information onto a three-dimensional model obtained through three-dimensional reconfiguration from the RGB image group on the basis of a spectral image mapping image group to generate a spectral three-dimensional model; and furthermore extracting a point cloud of a subject of interest from the spectral three-dimensional model.

The image processing device 301 in Fig. 42 includes an RGB camera 491, a spectral camera 492, a three-dimensional reconfiguring unit 493, a mapping processing unit 494, a spectral information mapping processing unit 495, and a subject-of-interest point cloud extraction processing unit 496.

Note that the RGB camera 491 to the spectral information mapping processing unit 495 in the image processing device 301 in Fig. 42 have the same configurations as the RGB camera 291 to the mapping processing unit 295 in the image processing device 101 in Fig. 21, and descriptions thereof will be omitted.

In other words, the image processing device 301 in Fig. 42 differs from the image processing device 101 in Fig. 21 in that the subject-of-interest point cloud extraction processing unit 496 has been added.

The subject-of-interest point cloud extraction processing unit 496 has the same configuration as the subject-of-interest point cloud extraction processing unit 338 in Fig. 26, and generates a subject-of-interest spectral three-dimensional model by extracting only the point cloud of the spectral information of the subject of interest through point cloud segmentation using a spectrum on the point cloud for which the spectral information constituting the spectral three-dimensional model has been mapped.

Such a configuration makes it possible to configure the RGB camera and the spectral camera coaxially using a beam splitter or the like, for example, and to generate the subject-of-interest spectral three-dimensional model by first generating spectral information mapping images by mapping the spectral information of the spectral images onto the RGB images; mapping the spectral information onto a three-dimensional model obtained through three-dimensional reconfiguration from the RGB image group on the basis of a spectral image mapping image group to generate a spectral three-dimensional model; and furthermore extracting a point cloud of a subject of interest from the spectral three-dimensional model.

As a result, a subject-of-interest spectral three-dimensional image from a desired viewpoint position can be generated on the basis of the subject-of-interest spectral three-dimensional model.

### <Subject-of-Interest Spectral Three-Dimensional Model Generation Processing by Image Processing Device in Fig. 42>

Subject-of-interest spectral three-dimensional model generation processing by the image processing device 301 in Fig. 42 will be described next with reference to the flowchart in Fig. 43.

Note that the processing of steps S391 to S398 in the flowchart of Fig. 43 is similar to the processing of steps S191 to S198 in the flowchart of Fig. 22, and thus descriptions thereof will be omitted.

In other words, once the spectral three-dimensional model is generated through the processing of steps S391 to S398, the sequence moves to step S399.

In step S399, the subject-of-interest point cloud extraction processing unit 496 generates a subject-of-interest spectral three-dimensional model by extracting only the point cloud of the spectral information of the subject of interest through point cloud segmentation using a spectrum on the point cloud in which the spectral information constituting the spectral three-dimensional model has been mapped.

The foregoing processing makes it possible to configure the RGB camera and the spectral camera coaxially using a beam splitter or the like, for example, and to generate the subject-of-interest spectral three-dimensional model by first generating spectral information mapping images by mapping the spectral information of the spectral images onto the RGB images; mapping the spectral information onto a three-dimensional model obtained through three-dimensional reconfiguration from the RGB image group on the basis of a spectral image mapping image group to generate a spectral three-dimensional model; and furthermore extracting a point cloud of a subject of interest from the spectral three-dimensional model.

As a result, a subject-of-interest spectral three-dimensional image from a desired viewpoint position can be generated on the basis of the subject-of-interest spectral three-dimensional model.

### <<4. Example of Execution by Software>>

The above-described series of processing can also be executed by hardware or software. When the series of processing is executed by software, a program constituting the software is installed from a recording medium in a computer incorporated in dedicated hardware, or in a general-purpose computer capable of executing various functions by installing various programs, for example.

Fig. 44 illustrates an example of the configuration of a general-purpose computer. The computer includes a Central Processing Unit (CPU) 1001. An input/output interface 1005 is connected to the CPU 1001 by a bus 1004. A Read Only Memory (ROM) 1002 and a Random Access Memory (RAM) 1003 are connected to the bus 1004.

An input unit 1006 constituted by an input device such as a keyboard, a mouse, or the like through which a user inputs operation commands, an output unit 1007 that outputs an image of a processing operation screen or a processing result to a display device, a storage unit 1008 constituted by a hard disk drive that stores programs and various types of data, and a communication unit 1009, such as a Local Area Network (LAN) adapter or the like, that executes communication processing over a network such as the Internet, are connected to the input/output interface 1005. A drive 1010 is also connected for reading and writing data from and to a removable storage medium 1011 such as a magnetic disk (including a flexible disk), an optical disk (including a Compact Disc-Read Only Memory (CD-ROM), a Digital Versatile Disc (DVD)), a magneto-optical disk (including a Mini Disc (MD)), or a semiconductor memory.

The CPU 1001 executes various types of processing according to programs stored in the ROM 1002, or programs read out from the removable storage medium 1011, such as a magnetic disk, an optical disk, a magneto-optical disk, a semiconductor memory, or the like, installed in the storage unit 1008, and then loaded into the RAM 1003 from the storage unit 1008. Data and the like necessary for the CPU 1001 to execute the various kinds of processing is also stored as appropriate in the RAM 1003.

In the computer configured as described above, for example, the CPU 1001 performs the above-described series of processing by loading a program stored in the storage unit 1008 to the RAM 1003 via the input/output interface 1005 and the bus 1004 and executing the program, for example.

The program executed by the computer (the CPU 1001) can be recorded on, for example, the removable storage medium 1011, as a packaged medium, and provided in such a state. The program can also be provided via a wired or wireless transmission medium such as a local area network, the Internet, or digital satellite broadcasting.

In the computer, the program can be installed in the storage unit 1008 via the input/output interface 1005 by inserting the removable storage medium 1011 into the drive 1010. The program can be received by the communication unit 1009 via a wired or wireless transfer medium to be installed in the storage unit 1008. In addition, the program may be installed in advance in the ROM 1002 or the storage unit 1008.

Note that the program executed by a computer may be a program that performs processing chronologically in the order described in the present specification or may be a program that performs processing in parallel or at a necessary timing such as a called time.

Note that the CPU 1001 in Fig. 44 realizes the functions of the configurations excluding the RGB camera, the range camera, and the spectral camera in all the image processing devices 101 and 301 described in the present specification.

In the present specification, "system" means a set of a plurality of constituent elements (devices, modules (components), or the like), and it does not matter whether all the constituent elements are provided in the same housing. Accordingly, a plurality of devices accommodated in separate housings and connected over a network, and one device in which a plurality of modules are provided in a single housing, both constitute systems.

Note that the embodiments of the present disclosure are not limited to the above-described embodiments, and various modifications can be made without departing from the essential spirit of the present disclosure.

For example, the present disclosure may be configured through cloud computing in which a plurality of devices share and cooperatively process one function over a network.

In addition, each step described in the above flowcharts can be executed by one device or executed in a shared manner by a plurality of devices.

Furthermore, when a single step includes a plurality of processes, the plurality of processes included in the single step can be executed by a single device, or in a distributed manner by a plurality of devices.

Note that the present disclosure can also take on configurations such as those described below.
<1> An image processing device including:
   a spectral three-dimensional model generating unit that generates a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model.
<2> The image processing device according to <1>,
   wherein each of the spatial images is an RGB image, a luminance image, a monochromatic image, a range image, or a three-dimensional image, and the spatial image group is an RGB image group, a luminance image group, a monochromatic image group, a range image group, or a three-dimensional image group.
<3> The image processing device according to <2>,
   wherein the spectral three-dimensional model generating unit further includes:
   a mapping processing unit that generates a spectral information mapping image group by mapping the spectral information of the spectral image group to each of pixels constituting the RGB image group; and
   a three-dimensional reconfiguring unit that, by reconfiguring the three-dimensional model on the basis of the spectral information mapping image group, generates the spectral three-dimensional model in which the spectral information has been mapped onto the three-dimensional model.
<4> The image processing device according to <3>,
   wherein the mapping processing unit generates the spectral information mapping image by performing matching processing on feature points of the RGB image and the spectral image in a same frame, and mapping the spectral information in the spectral image onto a position, on the RGB image, where the feature points have been matched.
<5> The image processing device according to <2>,
   wherein the spectral three-dimensional model generating unit further includes:
   an RGB three-dimensional reconfiguring unit that generates an RGB three-dimensional point cloud on the basis of the RGB image group;
   a spectral three-dimensional reconfiguring unit that generates a spectral three-dimensional point cloud on the basis of the spectral image group;
   an aligning unit that aligns the RGB three-dimensional point cloud and the spectral three-dimensional point cloud; and
   a mapping processing unit that generates the spectral three-dimensional model by mapping the spectral information of the spectral three-dimensional point cloud in a vicinity of the RGB three-dimensional point cloud aligned.
<6> The image processing device according to <5>,
   wherein the mapping processing unit generates the spectral three-dimensional model by mapping an average value of the spectral information of the spectral three-dimensional point cloud in the vicinity of the RGB three-dimensional point cloud aligned, a weighted average value according to a distance, or the spectral information of the spectral three-dimensional point cloud closest to the RGB three-dimensional point cloud.
<7> The image processing device according to <2>,
   wherein the spectral three-dimensional model generating unit further includes:
   a three-dimensional reconfiguring unit that, on the basis of the RGB image group and the spectral image group, generates a mixed three-dimensional point cloud that is a three-dimensional point cloud in which RGB information and the spectral information are mixed;
      and
   a mapping processing unit that generates the spectral three-dimensional model by mapping the spectral information of a three-dimensional point cloud constituted by the spectral information in a vicinity of a three-dimensional point cloud constituted by the RGB information, in the mixed three-dimensional point cloud.
<8> The image processing device according to <2>,
   wherein a camera positional relationship is specified, the camera positional relationship being a positional relationship between an RGB camera that captures the RGB images and a spectral camera that captures the spectral images, and
   the spectral three-dimensional model generating unit further includes:
      a three-dimensional reconfiguring unit that, on the basis of the RGB image group,
      generates a three-dimensional image group corresponding to each of the RGB image groups and attitude information of the RGB camera; and
      a mapping processing unit that generates the spectral three-dimensional model by mapping the spectral information of the spectral image group onto the three-dimensional model specified from the three-dimensional image group on the basis of the attitude information of the RGB camera and the camera positional relationship.
<9> The image processing device according to <2>,
   wherein a camera positional relationship is specified, the camera positional relationship being a positional relationship between a range camera that captures the range images and a spectral camera that captures the spectral images, and
   the spectral three-dimensional model generating unit further includes:
      an attitude estimating unit that, on the basis of the range image group, estimates attitude information of the range camera that captures the range image;
      a mapping processing unit that generates a spectral information mapping image group by mapping the spectral information of the spectral image group onto the range image group;
         and
      a three-dimensional reconfiguring unit that generates a spectral three-dimensional model from the spectral information mapping image group on the basis of the attitude information of the range camera and the camera positional relationship.
<10> The image processing device according to <2>,
   wherein the spectral three-dimensional model generating unit further includes:
   a three-dimensional reconfiguring unit that, on the basis of the RGB image group,
   estimates the attitude of the three-dimensional model and an RGB camera that captures the RGB images;
   a first mapping processing unit that generates a spectral information mapping image group by mapping the spectral information of the spectral image group to each of pixels constituting the RGB image group; and
   a second mapping processing unit that generates the spectral three-dimensional model by mapping the spectral information of the spectral information mapping image group onto the three-dimensional model on the basis of the attitude of the RGB camera.
<11> The image processing device according to <2>,
   wherein the spectral three-dimensional model generating unit further includes:
   a three-dimensional reconfiguring unit that, on the basis of the RGB image group and the spectral image group, generates a mixed three-dimensional model constituted by a three-dimensional point cloud in which RGB information and the spectral information are mixed, attitude information of an RGB camera that captures the RGB images, attitude information of a spectral camera that captures the spectral images, and a range image group corresponding each of the RGB image group and the spectral image group;
   a first mapping processing unit that generates a spectral information mapping image group by mapping the spectral information of the spectral image group onto each of the RGB image groups on the basis of the attitude information of the RGB camera, the attitude information of the spectral camera, and the range image group; and
   a second mapping processing unit that generates the spectral three-dimensional model by mapping the spectral information onto the mixed three-dimensional model on the basis of the spectral information mapping image group.
<12> The image processing device according to <2>,
   wherein the spectral three-dimensional model generating unit further includes:
   a range image generating unit that, on the basis of the RGB image group and the spectral image group, generates a real-scale range image through stereo matching;
   a three-dimensional reconfiguring unit that generates an unscaled three-dimensional model and an unscaled range image on the basis of the RGB image group;
   a rescaling processing unit that rescales the unscaled three-dimensional model to a real-scale three-dimensional model by comparing the real-scale range image and the unscaled range image;
   a first mapping processing unit that generates a spectral information mapping image group by mapping the spectral information of the spectral image group to each of the RGB image groups on the basis of the real-scale range image; and
   a second mapping processing unit that generates the spectral three-dimensional model by mapping the spectral information of the spectral information mapping image group to the real-scale three-dimensional model.
<13> The image processing device according to <12>,
   wherein on the basis of the RGB image group and the spectral image group, the range image generating unit generates relative attitude information between an RGB camera that captures the RGB images and a spectral camera that captures the spectral images, in addition to the real-scale range image through the stereo matching,
   the three-dimensional reconfiguring unit generates attitude information of the RGB camera in addition to the unscaled three-dimensional model and the unscaled range image, on the basis of the RGB image group, and
   the rescaling processing unit rescales the unscaled three-dimensional model to the real-scale three-dimensional model on the basis of the attitude information of the RGB camera and the relative attitude information, through a comparison between the real-scale range image and the unscaled range image.
<14> The image processing device according to <2>,
   wherein an optical axis of an RGB camera that captures the RGB images and an optical axis of a spectral camera that captures the spectral image are adjusted to be coaxial, and the spectral three-dimensional model generating unit further includes:
   a three-dimensional reconfiguring unit that generates the three-dimensional model and the attitude information of the RGB camera on the basis of the RGB image group; and
   a first mapping processing unit that generates the spectral three-dimensional model by mapping the spectral information of the spectral image group to the three-dimensional model.
<15> The image processing device according to <14>,
   wherein the spectral three-dimensional model generating unit further includes:
   a second mapping processing unit that generates a spectral information mapping image group by mapping the spectral information of the spectral image group to the RGB image group, and
   the first mapping processing unit generates the spectral three-dimensional model by mapping the spectral information of the spectral information mapping image group to the three-dimensional model.
<16> The image processing device according to any one of <1> to <15>, further including:
   a subject-of-interest spectral information extracting unit that extracts the spectral information of a subject of interest from among the spectral information.
<17> The image processing device according to <16>,
   wherein the subject-of-interest spectral information extracting unit extracts the spectral information of the subject of interest from any of the spectral image group; a spectral information mapping image group in which the spectral information of the spectral image group is mapped onto the spatial image group; or the spectral three-dimensional model.
<18> An image processing method including a step of
   generating a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model.
<19> A program for causing a computer to function as:
   a spectral three-dimensional model generating unit that generates a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model.
<20> An image processing device including:
   a spectral three-dimensional model generating unit that generates a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model; and
   a subject-of-interest spectral information extracting unit that extracts the spectral information of a subject of interest from among the spectral information.

### [Reference Signs List]

101 Image processing device
111 RGB camera
112 Spectral camera
113 Feature point matching processing unit
114 Pixel-by-pixel registration processing unit
115 Mapping processing unit
116 Three-dimensional reconfiguring unit
131 RGB camera
132 Spectral camera
133, 134 Three-dimensional reconfiguring unit
135 Three-dimensional point cloud alignment processing unit
136 Corresponding point cloud extraction processing unit
137 Spectral information mapping processing unit
151 RGB camera
152 Spectral camera
153 Three-dimensional reconfiguring unit
154 Corresponding point cloud extraction processing unit
155 Spectral information mapping processing unit
171 RGB camera
172 Spectral camera
173 Three-dimensional reconfiguring unit
174 Spectral information mapping processing unit
191 Range camera
192 Spectral camera
193 Camera attitude estimating unit
194 Spectral information mapping processing unit
195 Three-dimensional reconfiguring unit
211 RGB camera
212 Spectral camera
213 Three-dimensional reconfiguring unit
214 Spectral information mapping processing unit
215 Feature point matching processing unit
216 Pixel-by-pixel registration processing unit
217 Matching processing unit
231 RGB camera
232 Spectral camera
233 Three-dimensional reconfiguring unit
234 Mapping processing unit
235 Spectral information mapping processing unit
251 RGB camera
252 Spectral camera
253 Three-dimensional reconfiguring unit
254 Rescaling processing unit
255 Spectral information mapping processing unit
256 Stereo calibration processing unit
257 Stereo matching processing unit
258 Spectral information mapping processing unit
271 RGB camera
272 Spectral camera
273 Three-dimensional reconfiguring unit
274 Spectral information mapping processing unit
291 RGB camera
292 Spectral camera
293 Three-dimensional reconfiguring unit
294 Spectral information mapping processing unit
295 Mapping processing unit
316, 338, 356, 375, 396, 418, 436, 459, 475, 496 Subject-of-interest point cloud extraction processing unit

## Claims

1. An image processing device comprising:
a spectral three-dimensional model generating unit that generates a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model.

2. The image processing device according to claim 1,
wherein each of the spatial images is an RGB image, a luminance image, a monochromatic image, a range image, or a three-dimensional image, and the spatial image group is an RGB image group, a luminance image group, a monochromatic image group, a range image group, or a three-dimensional image group.

3. The image processing device according to claim 2,
wherein the spectral three-dimensional model generating unit includes:
a mapping processing unit that generates a spectral information mapping image group by mapping the spectral information of the spectral image group to each of pixels constituting the RGB image group; and
a three-dimensional reconfiguring unit that, by reconfiguring the three-dimensional model on the basis of the spectral information mapping image group, generates the spectral three-dimensional model in which the spectral information has been mapped onto the three-dimensional model.

4. The image processing device according to claim 3,
wherein the mapping processing unit generates the spectral information mapping image by performing matching processing on feature points of the RGB image and the spectral image in a same frame, and mapping the spectral information in the spectral image onto a position, on the RGB image, where the feature points have been matched.

5. The image processing device according to claim 2,
wherein the spectral three-dimensional model generating unit includes:
an RGB three-dimensional reconfiguring unit that generates an RGB three-dimensional point cloud on the basis of the RGB image group;
a spectral three-dimensional reconfiguring unit that generates a spectral three-dimensional point cloud on the basis of the spectral image group;
an aligning unit that aligns the RGB three-dimensional point cloud and the spectral three-dimensional point cloud; and
a mapping processing unit that generates the spectral three-dimensional model by mapping the spectral information of the spectral three-dimensional point cloud in a vicinity of the RGB three-dimensional point cloud aligned.

6. The image processing device according to claim 5,
wherein the mapping processing unit generates the spectral three-dimensional model by mapping an average value of the spectral information of the spectral three-dimensional point cloud in the vicinity of the RGB three-dimensional point cloud aligned, a weighted average value according to a distance, or the spectral information of the spectral three-dimensional point cloud closest to the RGB three-dimensional point cloud.

7. The image processing device according to claim 2,
wherein the spectral three-dimensional model generating unit includes:
a three-dimensional reconfiguring unit that, on the basis of the RGB image group and the spectral image group, generates a mixed three-dimensional point cloud that is a three-dimensional point cloud in which RGB information and the spectral information are mixed;
and
a mapping processing unit that generates the spectral three-dimensional model by mapping the spectral information of a three-dimensional point cloud constituted by the spectral information in a vicinity of a three-dimensional point cloud constituted by the RGB information, in the mixed three-dimensional point cloud.

8. The image processing device according to claim 2,
wherein a camera positional relationship is specified, the camera positional relationship being a positional relationship between an RGB camera that captures the RGB images and a spectral camera that captures the spectral images, and
the spectral three-dimensional model generating unit includes:
a three-dimensional reconfiguring unit that, on the basis of the RGB image group,
generates a three-dimensional image group corresponding to each of the RGB image groups and attitude information of the RGB camera; and
a mapping processing unit that generates the spectral three-dimensional model by mapping the spectral information of the spectral image group onto the three-dimensional model specified from the three-dimensional image group on the basis of the attitude information of the RGB camera and the camera positional relationship.

9. The image processing device according to claim 2,
wherein a camera positional relationship is specified, the camera positional relationship being a positional relationship between a range camera that captures the range images and a spectral camera that captures the spectral images, and
the spectral three-dimensional model generating unit includes:
an attitude estimating unit that, on the basis of the range image group, estimates attitude information of the range camera that captures the range image;
a mapping processing unit that generates a spectral information mapping image group by mapping the spectral information of the spectral image group onto the range image group; and
a three-dimensional reconfiguring unit that generates a spectral three-dimensional model from the spectral information mapping image group on the basis of the attitude information of the range camera and the camera positional relationship.

10. The image processing device according to claim 2,
wherein the spectral three-dimensional model generating unit includes:
a three-dimensional reconfiguring unit that, on the basis of the RGB image group,
estimates the attitude of the three-dimensional model and an RGB camera that captures the RGB images;
a first mapping processing unit that generates a spectral information mapping image group by mapping the spectral information of the spectral image group to each of pixels constituting the RGB image group; and
a second mapping processing unit that generates the spectral three-dimensional model by mapping the spectral information of the spectral information mapping image group onto the three-dimensional model on the basis of the attitude of the RGB camera.

11. The image processing device according to claim 2,
wherein the spectral three-dimensional model generating unit includes:
a three-dimensional reconfiguring unit that, on the basis of the RGB image group and the spectral image group, generates a mixed three-dimensional model constituted by a three-dimensional point cloud in which RGB information and the spectral information are mixed, attitude information of an RGB camera that captures the RGB images, attitude information of a spectral camera that captures the spectral images, and a range image group corresponding each of the RGB image group and the spectral image group;
a first mapping processing unit that generates a spectral information mapping image group by mapping the spectral information of the spectral image group onto each of the RGB image groups on the basis of the attitude information of the RGB camera, the attitude information of the spectral camera, and the range image group; and
a second mapping processing unit that generates the spectral three-dimensional model by mapping the spectral information onto the mixed three-dimensional model on the basis of the spectral information mapping image group.

12. The image processing device according to claim 2,
wherein the spectral three-dimensional model generating unit includes:
a range image generating unit that, on the basis of the RGB image group and the spectral image group, generates a real-scale range image through stereo matching;
a three-dimensional reconfiguring unit that generates an unscaled three-dimensional model and an unscaled range image on the basis of the RGB image group;
a rescaling processing unit that rescales the unscaled three-dimensional model to a real-scale three-dimensional model by comparing the real-scale range image and the unscaled range image;
a first mapping processing unit that generates a spectral information mapping image group by mapping the spectral information of the spectral image group to each of the RGB image groups on the basis of the real-scale range image; and
a second mapping processing unit that generates the spectral three-dimensional model by mapping the spectral information of the spectral information mapping image group to the real-scale three-dimensional model.

13. The image processing device according to claim 12,
wherein on the basis of the RGB image group and the spectral image group, the range image generating unit generates relative attitude information between an RGB camera that captures the RGB images and a spectral camera that captures the spectral images, in addition to the real-scale range image through the stereo matching,
the three-dimensional reconfiguring unit generates attitude information of the RGB camera in addition to the unscaled three-dimensional model and the unscaled range image, on the basis of the RGB image group, and
the rescaling processing unit rescales the unscaled three-dimensional model to the real-scale three-dimensional model on the basis of the attitude information of the RGB camera and the relative attitude information, through a comparison between the real-scale range image and the unscaled range image.

14. The image processing device according to claim 2,
wherein an optical axis of an RGB camera that captures the RGB images and an optical axis of a spectral camera that captures the spectral image are adjusted to be coaxial, and the spectral three-dimensional model generating unit includes:
a three-dimensional reconfiguring unit that generates the three-dimensional model and the attitude information of the RGB camera on the basis of the RGB image group; and
a first mapping processing unit that generates the spectral three-dimensional model by mapping the spectral information of the spectral image group to the three-dimensional model.

15. The image processing device according to claim 14,
wherein the spectral three-dimensional model generating unit further includes:
a second mapping processing unit that generates a spectral information mapping image group by mapping the spectral information of the spectral image group to the RGB image group, and
the first mapping processing unit generates the spectral three-dimensional model by mapping the spectral information of the spectral information mapping image group to the three-dimensional model.

16. The image processing device according to claim 1, further comprising:
a subject-of-interest spectral information extracting unit that extracts the spectral information of a subject of interest from among the spectral information.

17. The image processing device according to claim 16,
wherein the subject-of-interest spectral information extracting unit extracts the spectral information of the subject of interest from: any of the spectral image group; a spectral information mapping image group, in which the spectral information of the spectral image group is mapped onto the spatial image group; or the spectral three-dimensional model.

18. An image processing method comprising a step of
generating a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model.

19. A program for causing a computer to function as:
a spectral three-dimensional model generating unit that generates a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model.

20. An image processing device comprising:
a spectral three-dimensional model generating unit that generates a spectral three-dimensional model in which, on the basis of a spectral image group constituted by a plurality of spectral images having spectral information of a predetermined space and a spatial image group constituted by a plurality of spatial images for generating a three-dimensional model of the predetermined space, the spectral information has been mapped onto the three-dimensional model; and
a subject-of-interest spectral information extracting unit that extracts the spectral information of a subject of interest from among the spectral information.
